# EUROPEAN PATENT SPECIFICATION

(11) **EP 4 656 329 B1**
(45) Date of publication and mention of the grant of the patent: **04.11.2026**
(21) Application number: 23952245.1
(22) Date of filing: 14.09.2023
(51) Int. Cl.: B23Q 11/12, B23B 19/02, F16C 33/66

(54) **SPINDLE LUBRICATION DEVICE FOR MACHINE TOOL, MACHINE TOOL, AND METHOD FOR USING MACHINE TOOL**
SPINDELSCHMIERVORRICHTUNG FÜR WERKZEUGMASCHINE, WERKZEUGMASCHINE UND VERFAHREN ZUR VERWENDUNG EINER WERKZEUGMASCHINE
DISPOSITIF DE LUBRIFICATION DE BROCHE POUR MACHINE-OUTIL, MACHINE-OUTIL ET PROCÉDÉ D'UTILISATION DE MACHINE-OUTIL

(43) Date of publication of application: 03.12.2025
(73) Proprietor: Yamazaki Mazak Corporation, Niwa-gun, Aichi 480-0197 (JP)
(72) Inventor: SATO, Kimihiko, Niwa-gun, Aichi 480-0197 (JP); OKA, Takayuki, Niwa-gun, Aichi 480-0197 (JP); TANAKA, Mayato, Niwa-gun, Aichi 480-0197 (JP)
(74) Representative: TBK
(86) International application number: PCT/JP2023/033488
(87) International publication number: WO 2025/057355

(56) References cited:
- JP-A- 2006 077 851
- JP-A- 2008 151 179
- JP-A- 2010 240 783
- JP-A- 2020 199 584
- JP-A- 2021 028 513
- JP-A- H05 111 850
- JP-U- H0 253 343

## Description

### Technical Field

The present invention relates to a spindle lubricator of a machine tool, a machine tool, and a use method of a machine tool.

### Background Art

A lubricator of a spindle of a machine tool is known.

As a related art, Patent Literature 1 discloses a spindle lubricator. In the spindle lubricator described in Patent Literature 1, a rotation shaft is rotatably supported by a housing via a bearing, and in addition, the bearing is lubricated by lubrication oil supplied from the outside. Further, in the spindle lubricator described in Patent Literature 1, drain oil is sucked by negative pressure by a negative pressure generator, or the drain oil is naturally dropped and collected. Patent Literature 2 discloses a spindle lubricator of a machine tool comprising a rotation body with a single bearing, an ejector and a collection flow channel.

### Citation List

### Patent Literature

PTL1: JP 2016-002622 A.
PTL2: JP 2021-028513 A

### Summary of Invention

### Technical Problem

An object of the present invention is to provide a technique for preventing insufficient lubrication in each of a plurality of bearings.

### Solution to Problem

A spindle lubricator of a machine tool according to some embodiments includes: a rotation body that holds a tool; a plurality of bearings including a first bearing and a second bearing; a housing that supports the rotation body to be rotatable about a first axis via the plurality of bearings; a fluid mixture supplier that supplies a fluid mixture containing oil and air to the plurality of bearings; and a collector that collects an oil-containing fluid containing the oil. The collector includes: a plurality of collection flow channels that are disposed in the housing and that collect the oil-containing fluid from the plurality of bearings; a plurality of ejectors disposed outside the housing; and a plurality of flow control valves. The plurality of collection flow channels include: a first collection flow channel that collects a first oil-containing fluid discharged from at least one bearing mainly including the first bearing; and a second collection flow channel that collects a second oil-containing fluid discharged from at least one bearing mainly including the second bearing. The plurality of ejectors include: a first ejector that generates negative pressure with first air supplied from a first air flow channel and that sucks the first oil-containing fluid from the first collection flow channel; and a second ejector that generates negative pressure with second air supplied from a second air flow channel and that sucks the second oil-containing fluid from the second collection flow channel. The plurality of flow control valves include: a first flow control valve that adjusts a flow rate of the first air supplied to the first ejector from the first air flow channel; and a second flow control valve that adjusts a flow rate of the second air supplied to the second ejector from the second air flow channel.

A machine tool according to some embodiments includes: a machining head including: a rotation body that holds a tool; a plurality of bearings including a first bearing and a second bearing; a housing that supports the rotation body to be rotatable via the plurality of bearings; and a first rotational driver that rotates the rotation body about a first axis; a fluid mixture supplier that supplies a fluid mixture containing oil and air to the plurality of bearings; a collector that collects an oil-containing fluid containing the oil; a workpiece holder that supports a workpiece; a mover that moves the machining head relative to the workpiece holder; and a controller configured to control at least the first rotational driver, the fluid mixture supplier, and the mover. The collector includes: a plurality of collection flow channels that are disposed in the housing and that collect the oil-containing fluid from the plurality of bearings; a plurality of ejectors disposed outside the housing; and a plurality of flow control valves. The plurality of collection flow channels includes: a first collection flow channel that collects a first oil-containing fluid discharged from at least one bearing mainly including the first bearing; and a second collection flow channel that collects a second oil-containing fluid discharged from at least one bearing including mainly the second bearing. The plurality of ejectors include: a first ejector that generates negative pressure with first air supplied from a first air flow channel and that sucks the first oil-containing fluid from the first collection flow channel; and a second ejector that generates negative pressure with second air supplied from a second air flow channel and that sucks the second oil-containing fluid from the second collection flow channel. The plurality of flow control valves include: a first flow control valve that adjusts a flow rate of the first air supplied to the first ejector from the first air flow channel; and a second flow control valve that adjusts a flow rate of the second air supplied to the second ejector from the second air flow channel.

A use method of the machine tool according to some embodiments is a use method of the above-described machine tool. The use method includes the steps of: deriving a first discharge flow rate through either measurement or simulation, in a case where the first discharge flow rate is defined as a flow rate of the first oil-containing fluid discharged to an outside of the first collection flow channel from the first collection flow channel, under a second condition in which the plurality of pipe lines are in fluid separation from the plurality of collection flow channels, and the fluid mixture at a first flow rate is supplied to the plurality of bearings from the fluid mixture supplier; deriving a second discharge flow rate through either the measurement or the simulation, in a case where the second discharge flow rate is defined as a flow rate of the second oil-containing fluid discharged to an outside of the second collection flow channel from the second collection flow channel under the second condition; deriving a first collection flow rate through either the measurement or the simulation, in a case where the first collection flow rate is defined as a flow rate of the first oil-containing fluid flowing through the first pipe line, under a first condition in which the plurality of pipe lines are respectively in fluid connection with the plurality of collection flow channels, and the fluid mixture at the first flow rate is supplied to the plurality of bearings from the fluid mixture supplier; deriving a second collection flow rate through either the measurement or the simulation, in a case where the second collection flow rate is defined as a flow rate of the second oil-containing fluid flowing through the second pipe line under the first condition; deriving a first valve aperture of the first flow control valve for a ratio of the first collection flow rate to the first discharge flow rate to fall within a predetermined range; deriving a second valve aperture of the second flow control valve for a ratio of the second collection flow rate to the second discharge flow rate to fall within a predetermined range; supplying the fluid mixture to the plurality of bearings using the fluid mixture supplier; operating the collector in a state in which a valve aperture of the first flow control valve is set to the first valve aperture and a valve aperture of the second flow control valve is set to the second valve aperture; and machining the workpiece with the tool that is held by the rotation body and that rotates about the first axis.

### Effects of Invention

According to the present invention, it becomes possible to provide a technique for preventing insufficient lubrication in each of a plurality of bearings.

### Brief Description of Drawings

[FIG. 1] FIG. 1 is a schematic cross-sectional view of a spindle lubricator of a machine tool according to a first embodiment, schematically illustrating the spindle lubricator.
[FIG. 2] FIG. 2 is a schematic cross-sectional view of a spindle lubricator of a machine tool according to a comparative example, schematically illustrating the spindle lubricator.
[FIG. 3] FIG. 3 is a schematic cross-sectional view of a spindle lubricator of a machine tool according to a first modification of the first embodiment, schematically illustrating the spindle lubricator.
[FIG. 4] FIG. 4 is a schematic illustration of a state in which a first collection flow rate and a second collection flow rate are measured.
[FIG. 5] FIG. 5 is a schematic illustration of a state in which an oil-containing fluid is discharged from a first collection flow channel and a second collection flow channel to the outside of a housing.
[FIG. 6] FIG. 6 is a schematic cross-sectional view of the spindle lubricator of the machine tool according to the first embodiment, schematically illustrating the spindle lubricator.
[FIG. 7] FIG. 7 is a schematic cross-sectional view of a spindle lubricator of a machine tool according to a second embodiment, schematically illustrating the spindle lubricator.
[FIG. 8] FIG. 8 is a schematic illustration of a state in which a first collection flow rate and a second collection flow rate are measured.
[FIG. 9] FIG. 9 is a schematic illustration of a state in which an oil-containing fluid is discharged from the first collection flow channel and the second collection flow channel to the outside of a housing.
[FIG. 10] FIG. 10 is a schematic cross-sectional view of the spindle lubricator of the machine tool according to the second embodiment, schematically illustrating the spindle lubricator.
[FIG. 11] FIG. 11 is a schematic cross-sectional view of a part of the spindle lubricator of the machine tool according to the second embodiment, schematically illustrating the part of the spindle lubricator.
[FIG. 12] FIG. 12 is a view for describing an example of the structure of an ejector.
[FIG. 13] FIG. 13 is a schematic sectional view of a spindle lubricator of a machine tool according to a first modification of the second embodiment, schematically illustrating the spindle lubricator.
[FIG. 14] FIG. 14 is a schematic cross-sectional view of a part of the spindle lubricator of the machine tool according to the first modification of the second embodiment, schematically illustrating the part of the spindle lubricator.
[FIG. 15] FIG. 15 is a schematic illustration of a state in which the first collection flow rate and the second collection flow rate are measured.
[FIG. 16] FIG. 16 is a schematic illustration of a state in which the oil-containing fluid is discharged from the first collection flow channel, the second collection flow channel, and a third collection flow channel to the outside of the housing.
[FIG. 17] FIG. 17 is a schematic cross-sectional view of the spindle lubricator of the machine tool according to the first modification of the second embodiment, schematically illustrating the spindle lubricator.
[FIG. 18] FIG. 18 is a schematic illustration of a part of the spindle lubricator of the machine tool according to the first modification of the second embodiment.
[FIG. 19] FIG. 19 is a schematic cross-sectional view of an example of a machining head, schematically illustrating the example of the machining head.
[FIG. 20] FIG. 20 is a schematic cross-sectional view of a part of the spindle lubricator of the machine tool according to the first modification of the second embodiment, schematically illustrating the part of the spindle lubricator.
[FIG. 21] FIG. 21 is a schematic cross-sectional view of a part of the spindle lubricator of the machine tool according to the first modification of the second embodiment, schematically illustrating the part of the spindle lubricator.
[FIG. 22] FIG. 22 is a schematic cross-sectional view of a part of the spindle lubricator of the machine tool according to the first modification of the second embodiment, schematically illustrating the part of the spindle lubricator.
[FIG. 23] FIG. 23 is a schematic cross-sectional view of a part of the spindle lubricator of the machine tool according to a second modification of the second embodiment, schematically illustrating the part of the spindle lubricator.
[FIG. 24] FIG. 24 is a schematic cross-sectional view of a part of the spindle lubricator of the machine tool according to the first modification of the second embodiment, schematically illustrating the part of the spindle lubricator.
[FIG. 25] FIG. 25 is a schematic cross-sectional view of a part of the spindle lubricator of the machine tool according to the first modification of the second embodiment, schematically illustrating the part of the spindle lubricator.
[FIG. 26] FIG. 26 is a view for describing a first annular groove and a second annular groove.
[FIG. 27] FIG. 27 is a schematic perspective view of an example of the machine tool according to a third embodiment, schematically illustrating the example of the machine tool.
[FIG. 28] FIG. 28 is a schematic perspective view of another example of the machine tool according to the third embodiment, schematically illustrating another example of the machine tool.
[FIG. 29] FIG. 29 is a schematic illustration of a state in which a controller is capable of controlling a plurality of pieces of equipment to be controlled.
[FIG. 30] FIG. 30 is a view for describing an example of an arrangement of a collection container.
[FIG. 31] FIG. 31 is a view for describing another example of the arrangement of the collection container.
[FIG. 32] FIG. 32 is a flowchart of an example of a use method of a machine tool according to one embodiment.

### Description of Embodiments

Hereinafter, a spindle lubricator 1 of a machine tool, a machine tool 100, and a use method of the machine tool according to embodiments will be described with reference to the drawings. It is to be noted that in the following description of embodiments, portions and members having the same functions are denoted by the same reference numerals, and repeated descriptions of the portions and members denoted by the same reference numerals will be omitted.

### (Definition of Direction)

Herein, a "first direction DR1" is defined as a direction from a rear end portion 22 of a rotation body 2 toward a tip end portion 24 of the rotation body 2, and a "second direction DR2" is defined as a direction opposite to the first direction DR1.

Herein, a "radially inward direction DR3" or an "inward direction" is defined as a direction approaching a first axis AX1, which is the axis of rotation of the rotation body 2. A "radially outward direction DR4" or an "outward direction" is defined as a direction away from the first axis AX1, which is the axis of rotation of the rotation body 2.

A direction from the rear end portion 22 of the rotation body 2 toward the tip end portion 24 of the rotation body 2 is, for example, a downward direction or a lateral direction. In a case where the attitude of a machining head 10 is changeable, the direction from the rear end portion 22 of the rotation body 2 toward the tip end portion 24 of the rotation body 2 changes in accordance with a change of the attitude of the machining head 10. Herein, regardless of the actual attitude of the machining head 10, a direction from the rear end portion 22 of the rotation body 2 toward the tip end portion 24 of the rotation body will be referred to as a "downward direction", and a direction from the tip end portion 24 of the rotation body 2 toward the rear end portion 22 of the rotation body will be referred to as an "upward direction". In addition, herein, regardless of the actual attitude of the machining head 10, a surface at one end of the machining head 10 in the first direction DR1 will be referred to as a "lower surface", and a surface at one end of the machining head 10 in the second direction DR2 will be referred to as an "upper surface".

### (First Embodiment)

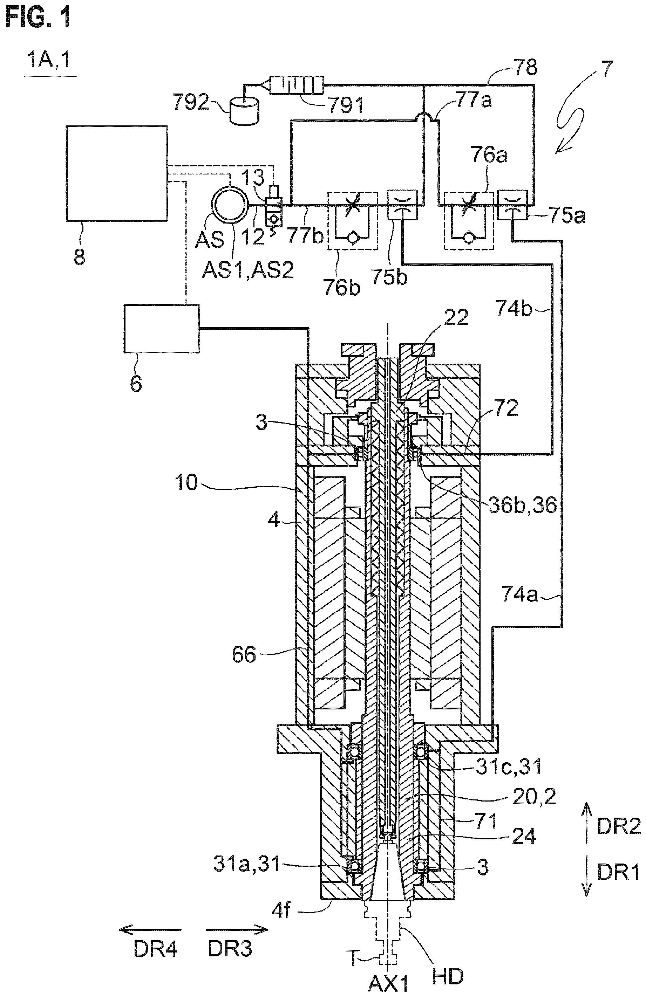

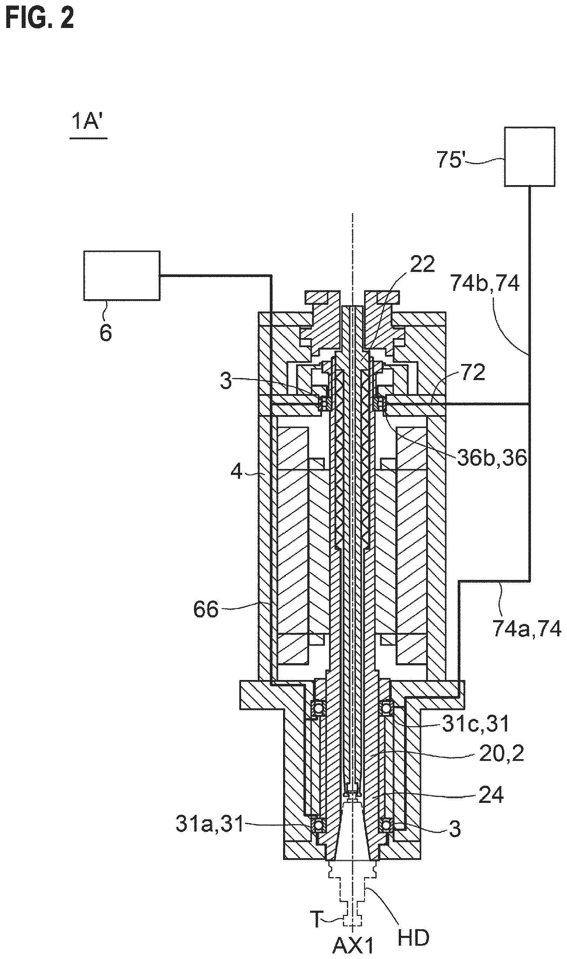

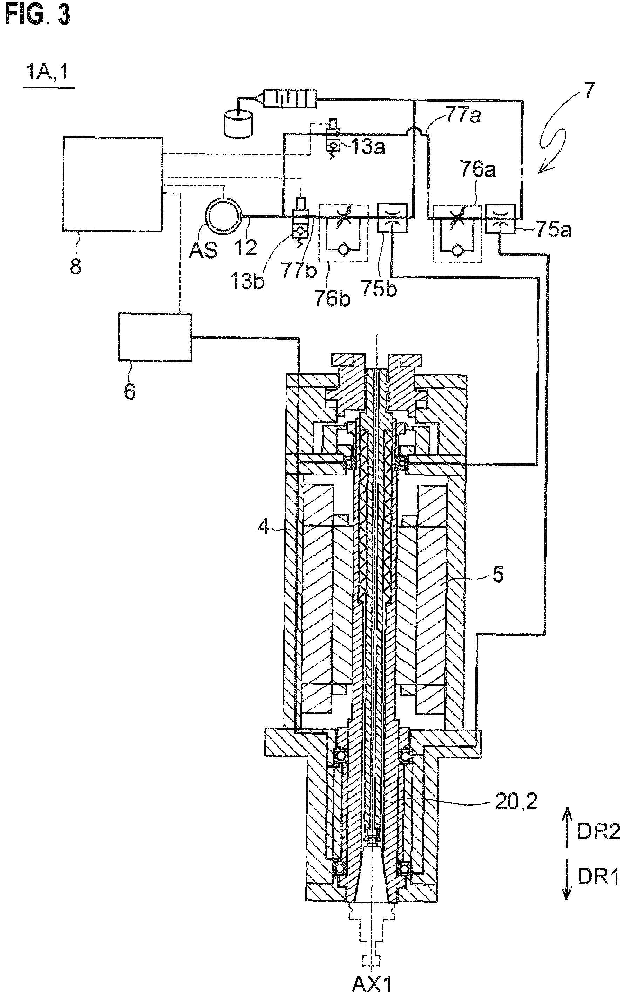

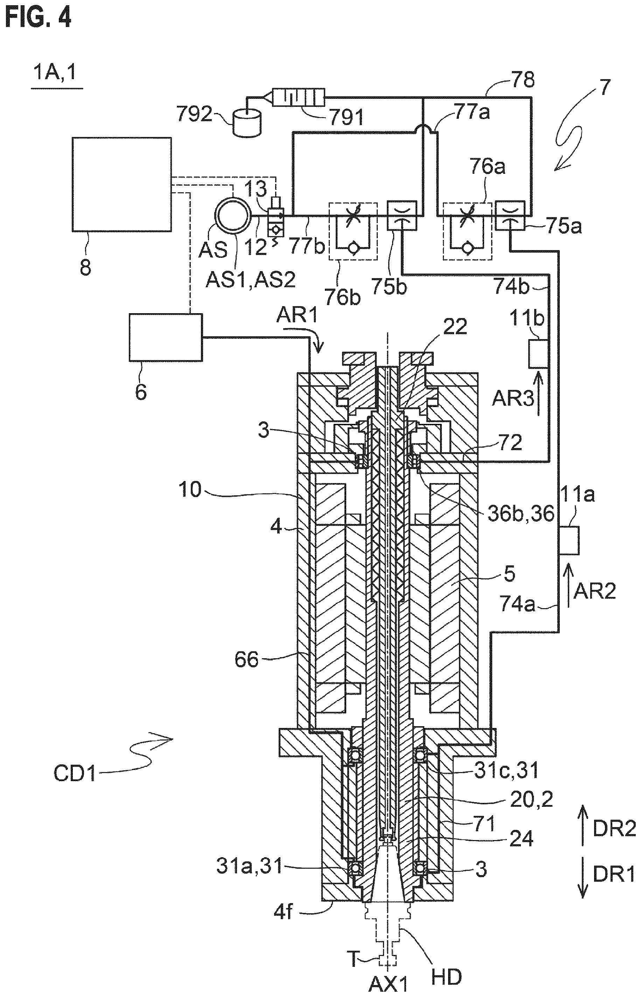

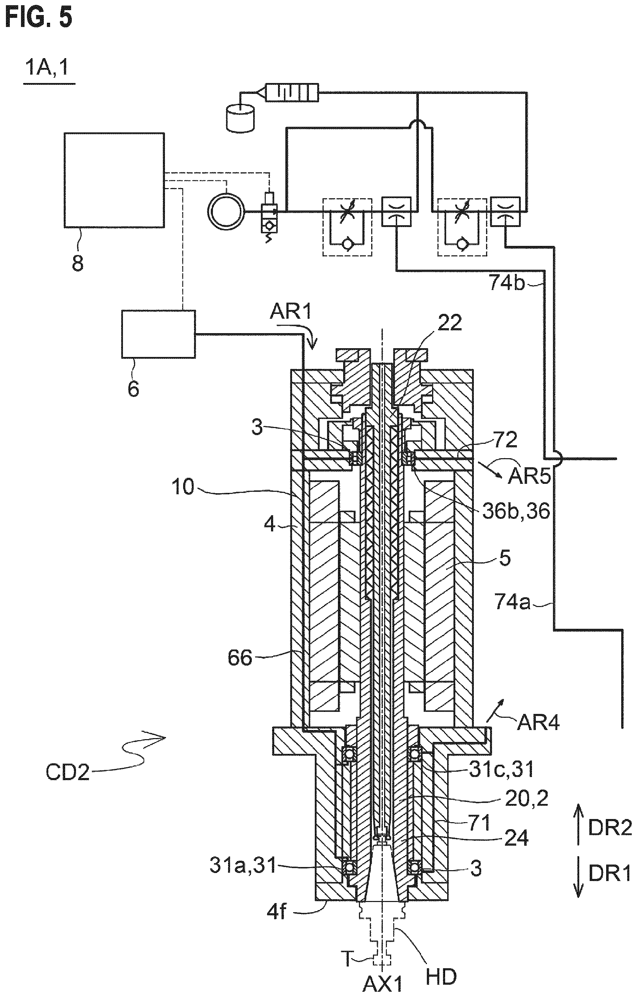

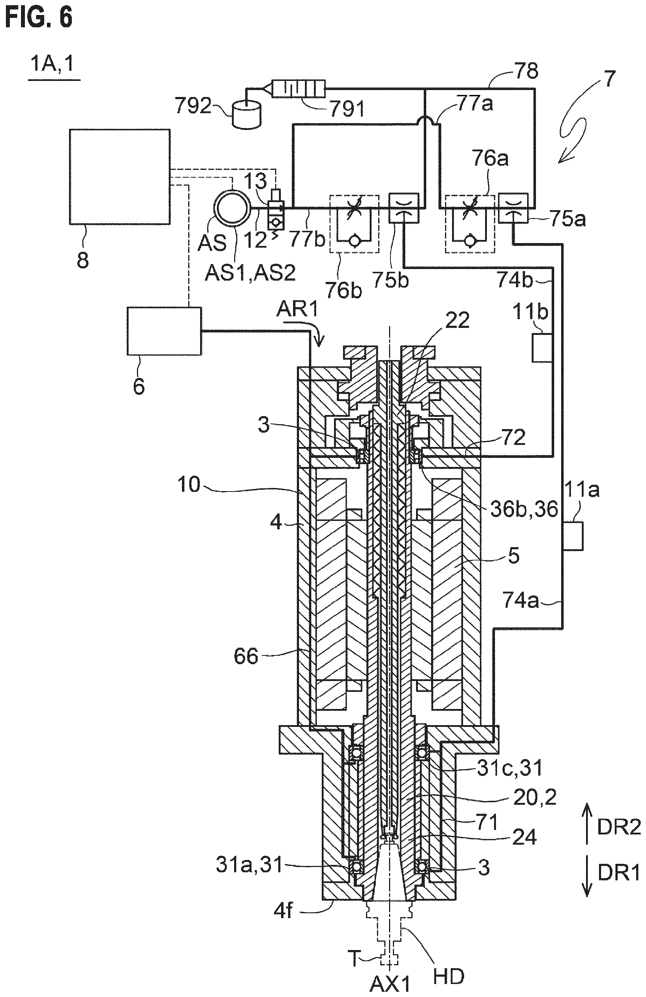

A spindle lubricator 1A of the machine tool according to the first embodiment will be described with reference to FIGs. 1 to 6. FIG. 1 is a schematic cross-sectional view of the spindle lubricator 1A of the machine tool according to the first embodiment, schematically illustrating the spindle lubricator. FIG. 2 is a schematic cross-sectional view of a spindle lubricator 1A' of a machine tool according to a comparative example, schematically illustrating the spindle lubricator. FIG. 3 is a schematic cross-sectional view of the spindle lubricator 1A of a machine tool according to a first modification of the first embodiment, schematically illustrating the spindle lubricator. FIG. 4 is a schematic illustration of a state in which a first collection flow rate and a second collection flow rate are measured. FIG. 5 is a schematic illustration of a state in which an oil-containing fluid is discharged from a first collection flow channel 71 and a second collection flow channel 72 to the outside of a housing 4. FIG. 6 is a schematic cross-sectional view of the spindle lubricator 1A of the machine tool according to the first embodiment, schematically illustrating the spindle lubricator.

As illustrated in FIG. 1, the spindle lubricator 1A of the machine tool according to the first embodiment includes: a rotation body 2, which holds a tool T; a plurality of bearings 3; a housing 4; a fluid mixture supplier 6; and a collector 7. The spindle lubricator 1A of the machine tool may include a controller 8, which controls at least the fluid mixture supplier 6.

In an example illustrated in FIG. 1, the rotation body 2 serves as a rotation shaft 20. The rotation body 2 is rotatable about a first axis AX1. The rotation body 2 (more specifically, the rotation shaft 20) includes a rear end portion 22 and a tip end portion 24, which holds the tool T. It is to be noted that a tool holder HD for holding the tool T is attached to the tip end portion 24, in some cases. In such cases, the tool T is held by the tip end portion 24 via the tool holder HD. Therefore, herein, the "tip end portion 24, which holds a tool" includes both concepts of the tip end portion 24, which directly holds the tool T, and the tip end portion 24, which holds the tool T via the tool holder HD. In other words, herein, the tip end portion 24 may be configured to directly hold the tool T, or may be configured to hold the tool T via the tool holder HD.

The housing 4 supports the rotation body 2 to be rotatable about the first axis AX1 via the plurality of bearings 3. In the example illustrated in FIG. 1, the housing 4 includes an assembly of a plurality of components.

In the example illustrated in FIG. 1, the spindle lubricator 1A includes a plurality of bearings 3, which include a first bearing 31a and a second bearing 36b. In the example illustrated in FIG. 1, the first bearing 31a is a front bearing 31, which supports the tip end portion 24 of the rotation body 2. The second bearing 36b is a rear bearing 36, which supports the rear end portion 22 of the rotation body 2. Alternatively, the second bearing 36b may be a bearing that supports a middle portion of the rotation body.

In the example illustrated in FIG. 1, the spindle lubricator 1A of the machine tool includes the front bearing 31, which supports the tip end portion 24 of the rotation body 2, and the rear bearing 36, which supports the rear end portion 22 of the rotation body 2. The front bearing 31 includes at least one bearing including the first bearing 31a. The front bearing 31 may include the first bearing 31a and a third bearing 31c. In the example illustrated in FIG. 1, the rear bearing 36 include at least one bearing including a second bearing 36b. The rear bearing 36 may include a plurality of bearings including the second bearing 36b.

The fluid mixture supplier 6 supplies a fluid mixture containing oil and air to the plurality of bearings 3. The fluid mixture will be referred to as oil air, in some cases. In the oil air, the oil is carried by the air. In other words, in the oil air, the air functions as a carrier fluid for carrying the oil. More specifically, the oil air is supplied to the plurality of bearings 3, and thus a small amount of oil is continuously supplied to the plurality of bearings 3 by using the flow of the compressed air.

The collector 7 collects an oil-containing fluid, which contains oil. In the example illustrated in FIG. 1, the collector 7 includes : a plurality of collection flow channels (71, 72), which are provided in the housing 4; a plurality of ejectors (75a, 75b); and a plurality of flow control valves (76a, 76b), which are provided outside the housing 4. The collector 7 may include a plurality of pipe lines (74a, 74b), which fluidly connect the plurality of collection flow channels (71, 72) respectively with the plurality of ejectors (75a, 75b). Alternatively, in a case where the plurality of collection flow channels (71, 72) are respectively connected directly with the plurality of ejectors (75a, 75b), the plurality of pipe lines (74a, 74b) are omitted.

The plurality of collection flow channels (71, 72) are provided in the housing 4, and collect the oil-containing fluid from the plurality of bearings 3. In the example illustrated in FIG. 1, the plurality of collection flow channels (71, 72) include a first collection flow channel 71 and a second collection flow channel 72.

The first collection flow channel 71 is provided in the housing 4, and mainly collects the oil-containing fluid discharged from at least one of the bearings mainly including the first bearing 31a. Hereinafter, the oil-containing fluid to be collected through the first collection flow channel 71 will be referred to as a "first oil-containing fluid". In the example illustrated in FIG. 1, the first collection flow channel 71 collects the first oil-containing fluid mainly discharged from the front bearing 31. In the example illustrated in FIG. 1, the entirety or most of the first collection flow channel 71 is disposed inside the housing 4. The entirety or most of the first collection flow channel 71 may be made up of a through hole formed in the housing 4.

The second collection flow channel 72 is provided in the housing 4, and collects the oil-containing fluid discharged from at least one of the bearings mainly including the second bearing 36b. Hereinafter, the oil-containing fluid to be collected through the second collection flow channel 72 will be referred to as a "second oil-containing fluid". In the example illustrated in FIG. 1, the second collection flow channel 72 collects the second oil-containing fluid mainly discharged from the rear bearing 36. In the example illustrated in FIG. 1, the entirety or most of the second collection flow channel 72 is disposed inside the housing 4. The entirety or most of the second collection flow channel 72 may be made up of a through hole formed in the housing 4. In the example illustrated in FIG. 1, the second collection flow channel 72 is a flow channel different from the first collection flow channel 71.

In the example illustrated in FIG. 1, the plurality of pipe lines (74a, 74b) include a first pipe line 74a and a second pipe line 74b.

The first pipe line 74a fluidly connects the first collection flow channel 71 with a first ejector 75a, which is disposed outside the housing 4. In the example illustrated in FIG. 1, the entirety of the first pipe line 74a is disposed outside the housing 4. Alternatively, the first pipe line 74a may be partially disposed inside the housing 4, and most of the first pipe line 74a may be disposed outside the housing 4. In the example illustrated in FIG. 1, the first ejector 75a is an ejector provided to correspond to the first collection flow channel 71 on a one-to-one basis through the first pipe line 74a.

The second pipe line 74b fluidly connects the second collection flow channel 72 with a second ejector 75b, which is disposed outside the housing 4. In the example illustrated in FIG. 1, the entirety of the second pipe line 74b is disposed outside the housing 4. Alternatively, the second pipe line 74b may be partially disposed inside the housing 4, and most of the second pipe line 74b may be disposed outside the housing 4. In the example illustrated in FIG. 1, the second ejector 75b is an ejector provided to correspond to the second collection flow channel 72 on a one-to-one basis through the second pipe line 74b.

The plurality of ejectors (75a, 75b) are disposed outside the housing. In the example illustrated in FIG. 1, the plurality of ejectors (75a, 75b) include a first ejector 75a and a second ejector 75b.

By generating negative pressure with air supplied from the first air flow channel 77a, the first ejector 75a sucks the first oil-containing fluid from the first collection flow channel 71. Hereinafter, the air supplied from the first air flow channel 77a to the first ejector 75a will be referred to as "first air". In the example illustrated in FIG. 1, the first ejector 75a generates the negative pressure in the first pipe line 74a with the first air supplied from the first air flow channel 77a, and sucks the first oil-containing fluid from the first collection flow channel 71 through the first pipe line 74a.

By generating negative pressure with air supplied from the second air flow channel 77b, the second ejector 75b sucks the second oil-containing fluid from the second collection flow channel 72. Hereinafter, the air supplied from the second air flow channel 77b to the second ejector 75b will be referred to as "second air". In the example illustrated in FIG. 1, the second ejector 75b generates the negative pressure in the second pipe line 74b with the second air supplied from the second air flow channel 77b, and sucks the second oil-containing fluid from the second collection flow channel 72 through the second pipe line 74b.

In the example illustrated in FIG. 1, the plurality of flow control valves (76a, 76b) include a first flow control valve 76a and a second flow control valve 76b. The first flow control valve 76a adjusts the flow rate of the first air supplied from the first air flow channel 77a to the first ejector 75a. The second flow control valve 76b adjusts the flow rate of the second air supplied from the second air flow channel 77b to the second ejector 75b.

In the example illustrated in FIG. 1, the controller 8 transmits a control command to the fluid mixture supplier 6, and the fluid mixture supplier 6, which receives the control command, supplies a fluid mixture containing oil and air to the plurality of bearings 3 (more specifically, oil air). Additionally, the controller 8 may control the collector 7. More specifically, the controller 8 transmits a control command to the collector 7, and the collector 7, which receives the control command, collects the oil-containing fluid containing oil.

In a spindle lubricator 1A' (see FIG. 2) of a machine tool in a comparative example, a plurality of bearings 3 are in fluid connection with one negative pressure generator 75' through a pipe line 74. In an example illustrated in FIG. 2, regarding the flow rate of the oil-containing fluid collected from the plurality of bearings 3, it is not possible to adjust the flow rate of the oil-containing fluid collected from every bearing or every bearing group. Hence, it is difficult to prevent insufficient lubrication in each of the plurality of bearings. For example, in the example illustrated in FIG. 2, it is assumed that the lubrication of the second bearing 36b is appropriate and the collection of the oil-containing fluid from the first bearing 31a is insufficient. In this case, there is a possibility that the oil might leak from a gap between the housing 4 and the rotation body 2. For this reason, in order to prevent the leakage, it is necessary to increase the suction amount of the negative pressure generator 75'. However, if the suction amount of the negative pressure generator 75' is increased, the collection of the oil-containing fluid from the second bearing 36b will be excessive, thereby resulting in insufficient lubrication in the second bearing 36b.

In the example illustrated in FIG. 2, it is assumed that the number of bearings included in the front bearing 31 is different from the number of bearings included in the rear bearing 36. Alternatively or additionally, it is assumed that the length of the first pipe line 74a and the length of the second pipe line 74b are different from each other. In such a case, if equal suction force is exerted in the first pipe line 74a and the second pipe line 74b to prevent leakage of oil from all the bearings, the insufficient lubrication will more easily occur.

In contrast, the spindle lubricator 1A of the machine tool according to the first embodiment includes: the plurality of ejectors including the first ejector 75a and the second ejector 75b; and the plurality of flow control valves including the first flow control valve 76a, which adjusts the flow rate of the first air supplied to the first ejector 75a, and the second flow control valve 76b, which adjusts the flow rate of the second air supplied to the second ejector 75b.

Therefore, by adjusting each flow rate of the first air and the second air, it becomes possible to adjust the flow rate of the oil-containing fluid to be collected from every bearing or every bearing group. As a result, it becomes possible to prevent the insufficient lubrication in each of the plurality of bearings 3.

Further, according to the first embodiment, leakage of the oil to the periphery of the machining head 10 is eliminated or minimized, and contamination of the working environment due to the oil is prevented, or eliminated or minimized. Thus, the working environment is improved, and the load on the environment is also reduced.

### (Optional and Additional Configurations)

Subsequently, optional and additional configurations that are adoptable in the spindle lubricator 1A of the machine tool according to the first embodiment will be described with reference to FIGs. 1 to 6.

### (Air Source AS)

In the example illustrated in FIG. 1, the spindle lubricator 1A of the machine tool includes at least one air source AS (for example, an air compressor). Such at least one air source AS supplies the first air to the first air flow channel 77a, and supplies the second air to the second air flow channel 77b. In the example illustrated in FIG. 1, an air source AS1, which supplies the first air to the first air flow channel 77a, also serves as an air source AS2, which supplies the second air to the second air flow channel 77b. Alternatively, the air source AS2, which supplies the second air to the second air flow channel 77b, may be an air source different from the air source AS1, which supplies the first air to the first air flow channel 77a.

### (First Air Flow Channel 77a and Second Air Flow Channel 77b)

In the example illustrated in FIG. 1, the collector 7 includes: the first air flow channel 77a, which supplies the first air to the first ejector 75a; and the second air flow channel 77b, which supplies the second air to the second ejector 75b. In the example illustrated in FIG. 1, the first flow control valve 76a is disposed on the first air flow channel 77a, and the second flow control valve 76b is disposed on the second air flow channel 77b.

### (Main Air Flow Channel 12)

In the example illustrated in FIG. 1, the spindle lubricator 1A of the machine tool includes a main air flow channel 12, which fluidly connects the air source AS with the first air flow channel 77a and the second air flow channel 77b. In the example illustrated in FIG. 1, the main air flow channel 12 is branched into a plurality of air flow channels including the first air flow channel 77a and the second air flow channel 77b.

### (On-Off Valve 13)

In the example illustrated in FIG. 1, the spindle lubricator 1A of the machine tool includes an on-off valve 13, which is disposed between the air source AS and the first flow control valve 76a. When such an on-off valve 13 is in a closed state, no air is supplied to the first flow control valve 76a. In the example illustrated in FIG. 1, the on-off valve 13 is disposed on the main air flow channel 12. In this case, when the on-off valve 13 is in an open state, air is supplied to the first flow control valve 76a and the second flow control valve 76b, and when the on-off valve 13 are in the closed state, no air is supplied to the first flow control valve 76a or the second flow control valve 76b.

Alternatively, as illustrated in FIG. 3, the spindle lubricator 1A of the machine tool may include: a first on-off valve 13a, which is disposed between the air source AS and the first flow control valve 76a; and a second on-off valve 13b, which is disposed between the air source AS and the second flow control valve 76b. In an example illustrated in FIG. 3, the first on-off valve 13a is disposed on the first air flow channel 77a, and the second on-off valve 13b is disposed on the second air flow channel 77b. In this case, when the first on-off valve 13a is in the open state, air is supplied to the first flow control valve 76a, and when the first on-off valve 13a is in the closed state, no air is supplied to the first flow control valve 76a. When the second on-off valve 13b is in the open state, air is supplied to the second flow control valve 76b, and when the second on-off valve 13b is in the closed state, no air is supplied to the second flow control valve 76b.

### (Exhaust Pipe Line 78 and Exhaust Cleaner 791)

In the example illustrated in FIG. 1, the collector 7 includes an exhaust pipe line 78 and a collection container 792. Additionally, the collector 7 may include an exhaust cleaner 791.

The exhaust pipe line 78 receives exhaust (more specifically, oil-containing fluids) from the plurality of ejectors (75a, 75b). In the example illustrated in FIG. 1, the exhaust pipe line 78 fluidly connects the plurality of ejectors (75a, 75b) with the exhaust cleaner 791. The exhaust pipe line 78 is made up of, for example, a plurality of pipes.

The collection container 792 is in fluid connection with the exhaust pipe line 78. In the example illustrated in FIG. 1, the collection container 792 receives liquid-state oil contained in the oil-containing fluid from the exhaust pipe line 78 through the exhaust cleaner 791. Alternatively, the collection container 792 may receive the oil-containing fluid directly from the exhaust pipe line 78 without intervention of the exhaust cleaner 791.

In the example illustrated in FIG. 1, the exhaust cleaner 791 receives oil-containing fluids from the plurality of ejectors (75a, 75b) through the exhaust pipe line 78. The exhaust cleaner 791 also separates the oil-containing fluid that has been received from the exhaust pipe line 78 into liquid-state oil and air. The liquid-state oil that has been separated from the oil-containing fluid by the exhaust cleaner 791 is stored in the collection container 792.

In the example illustrated in FIG. 1, most of the oil used for lubricating the plurality of bearings 3 is collected in the collection container 792 through the exhaust cleaner 791. This prevents, or eliminates or minimizes contamination in the periphery of the machining head 10 due to the oil. Thus, the working environment is improved, and the load on the environment is reduced.

### (Second Embodiment)

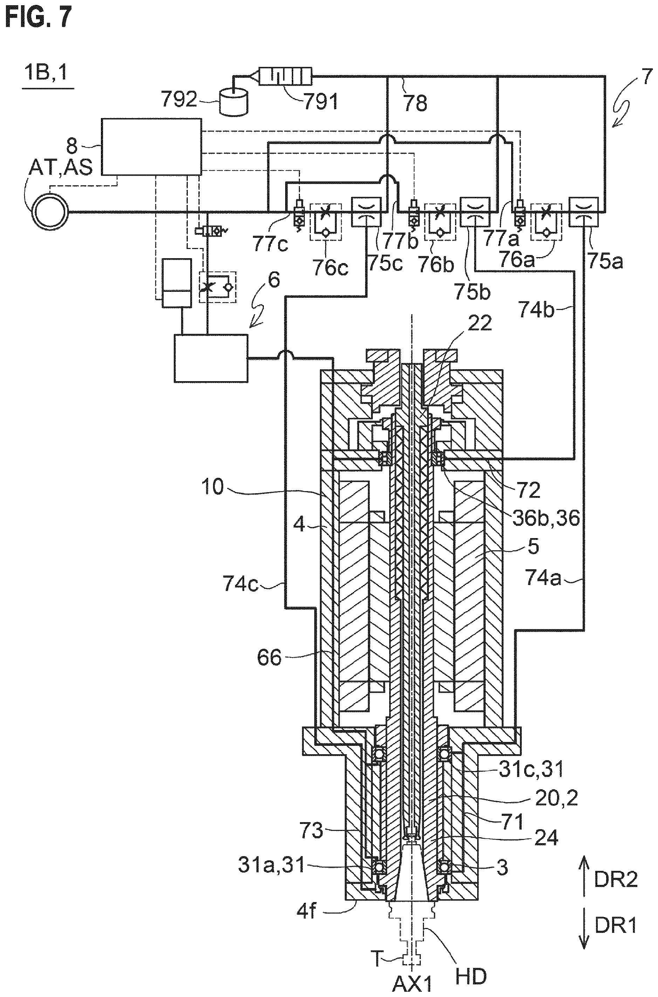

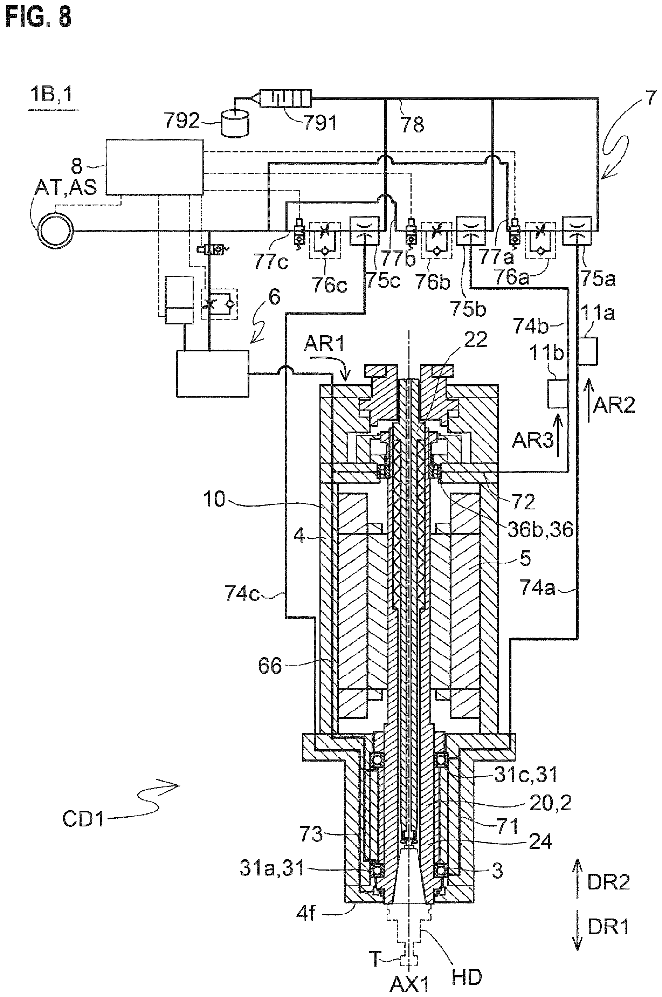

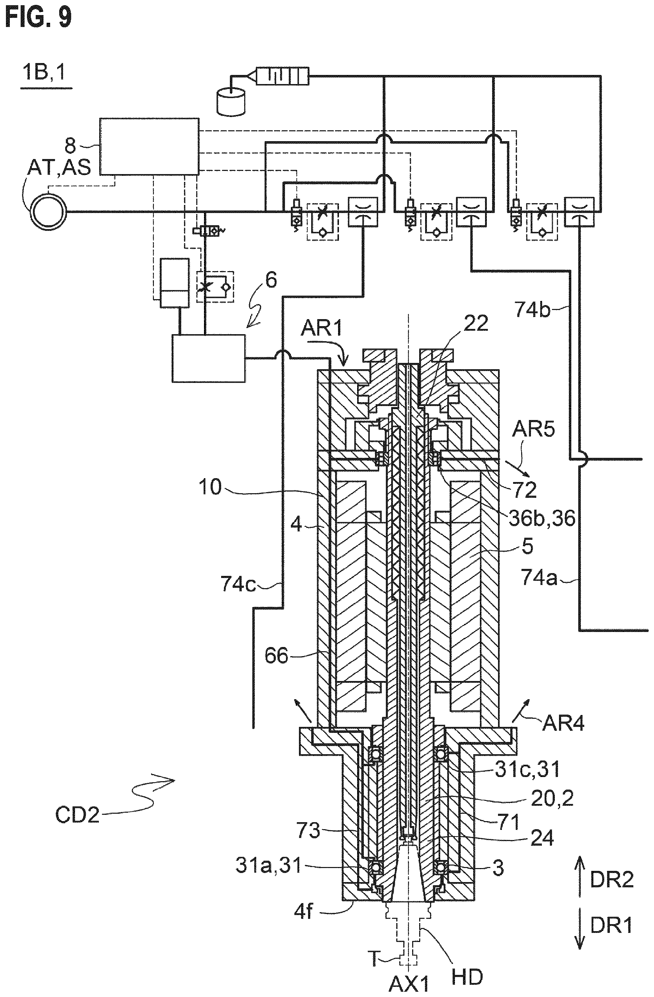

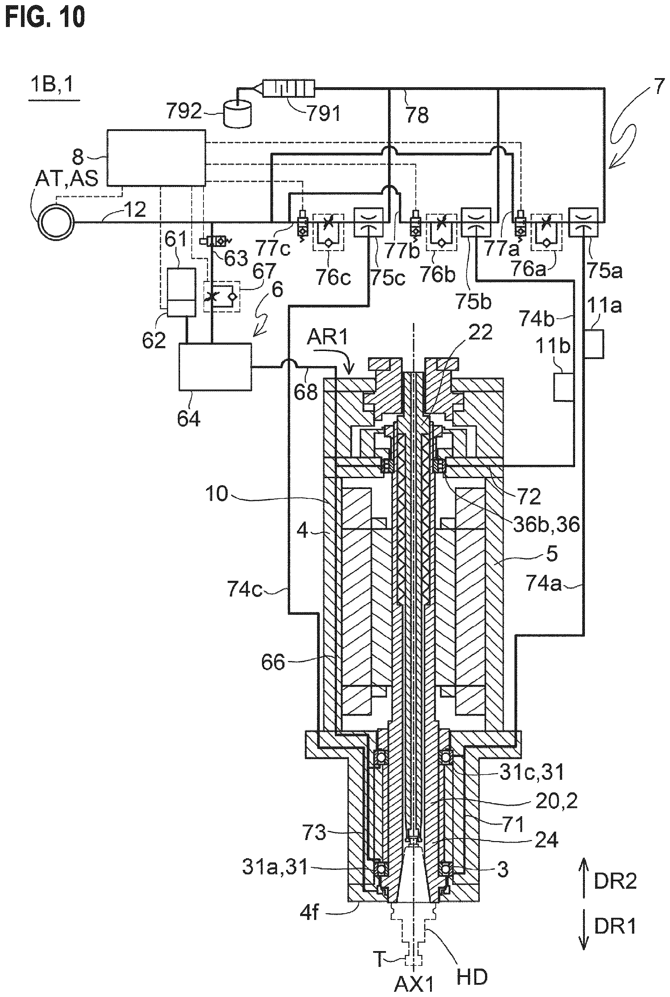

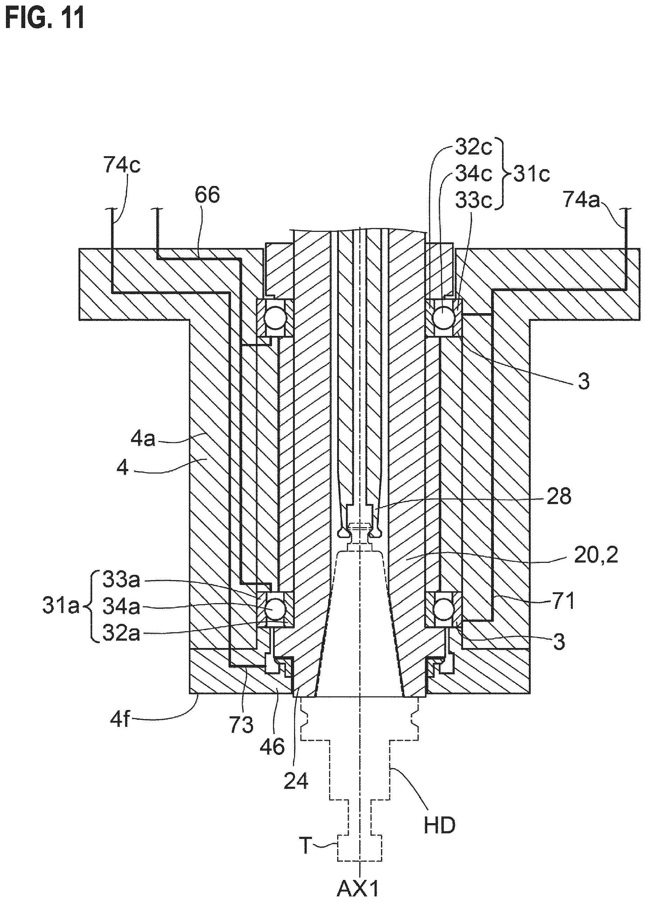

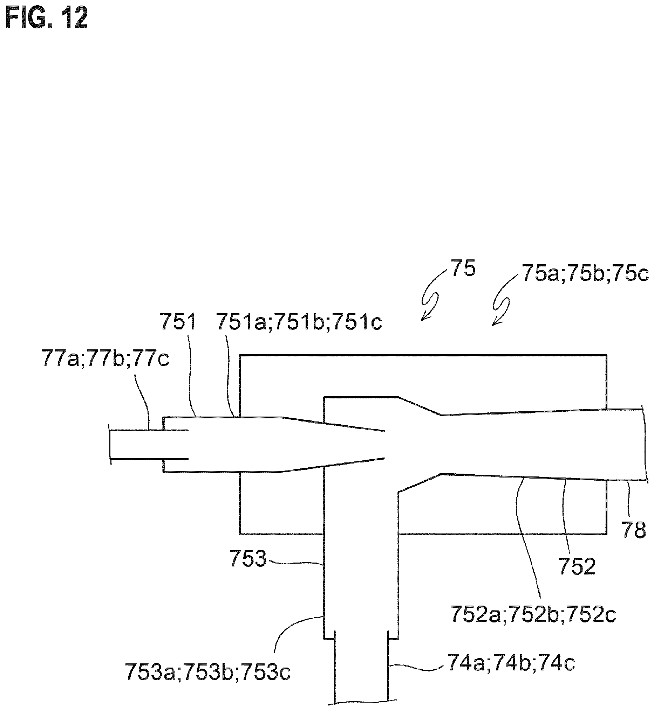

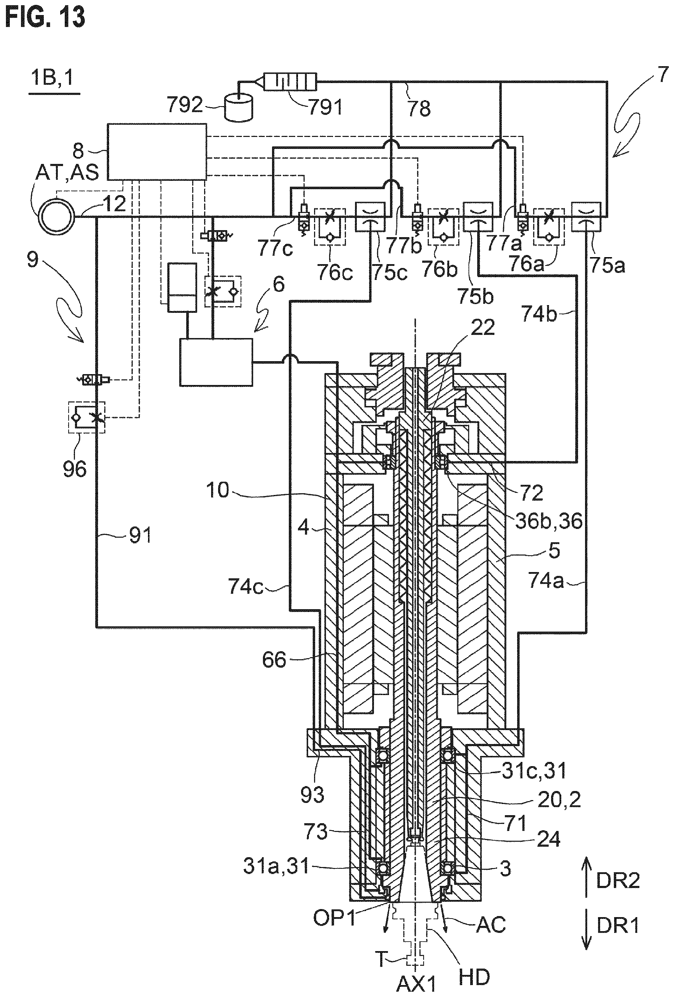

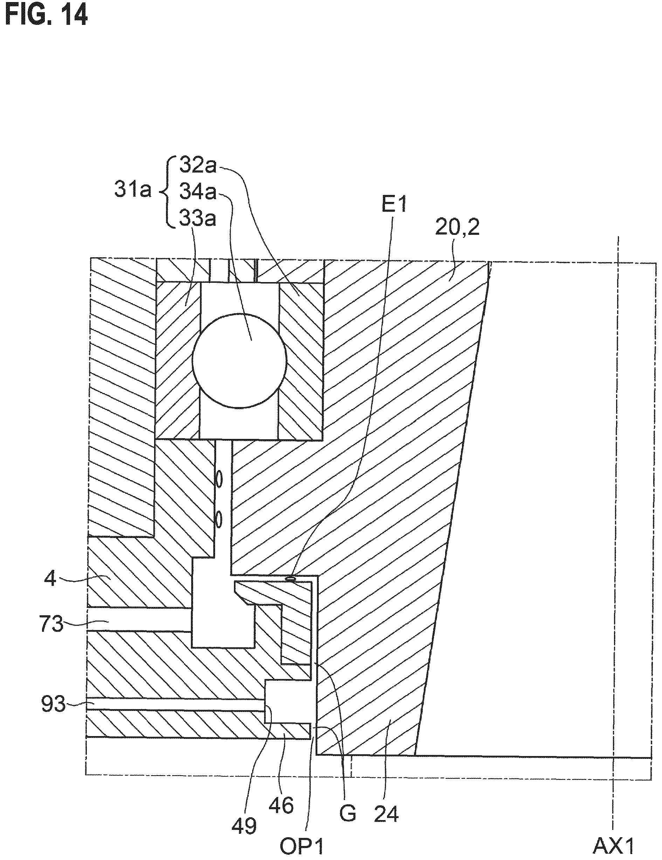

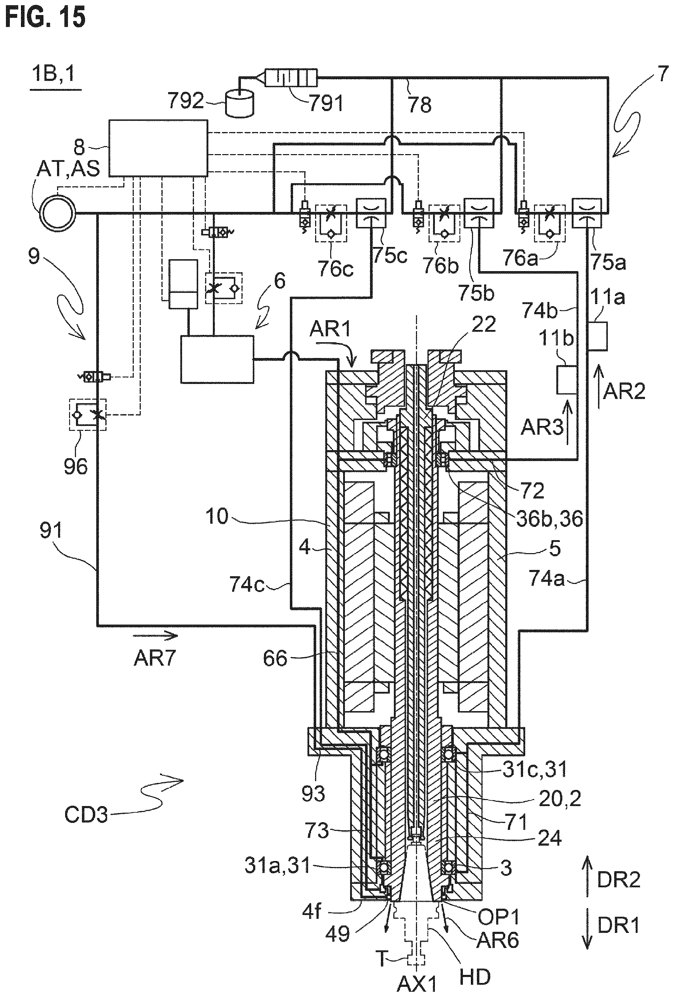

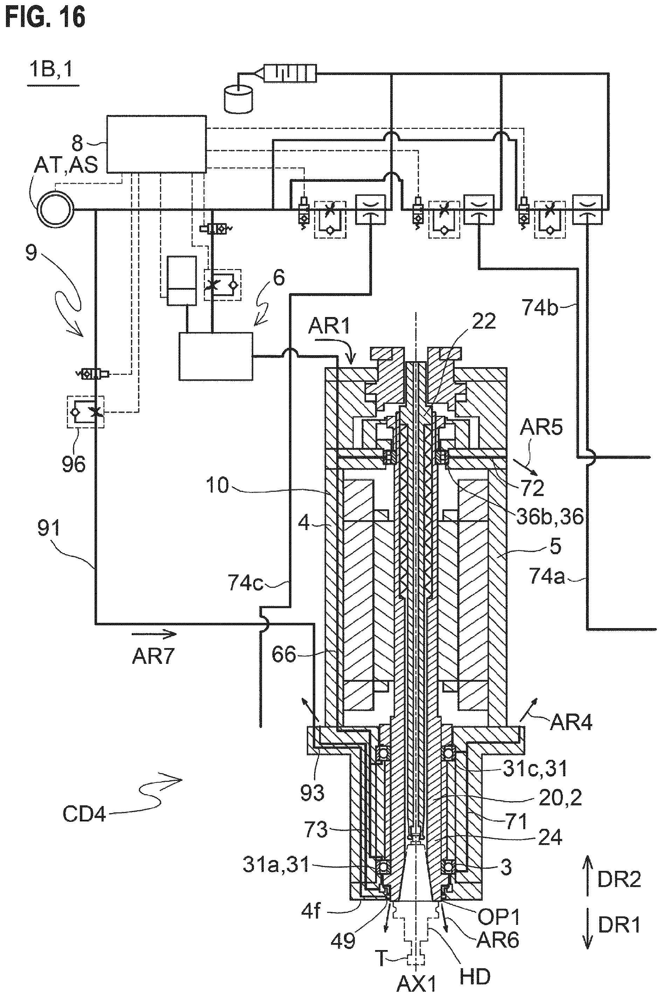

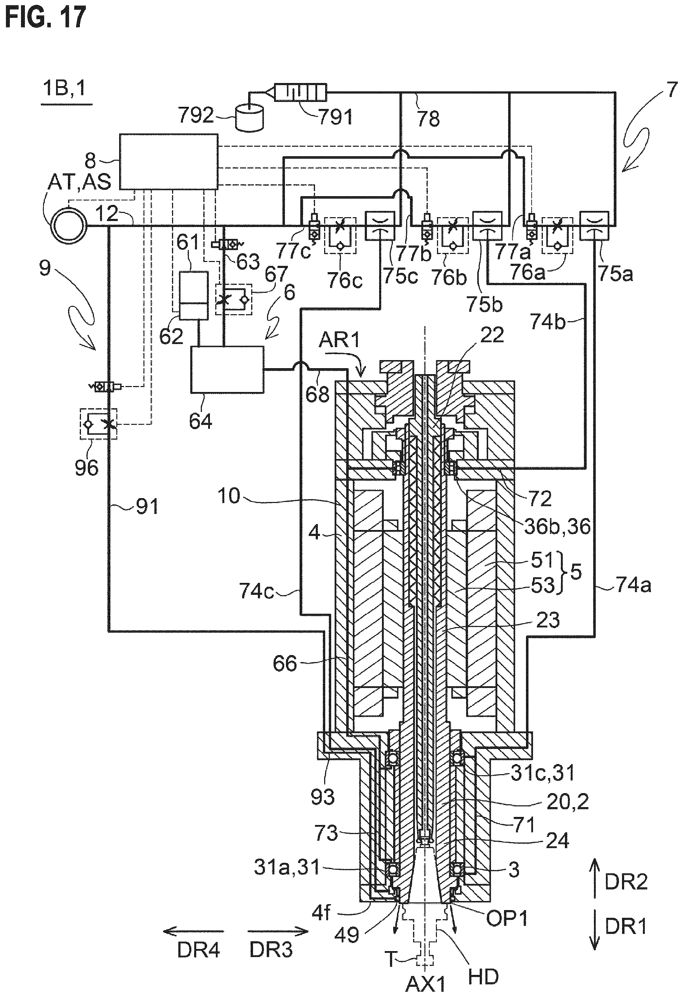

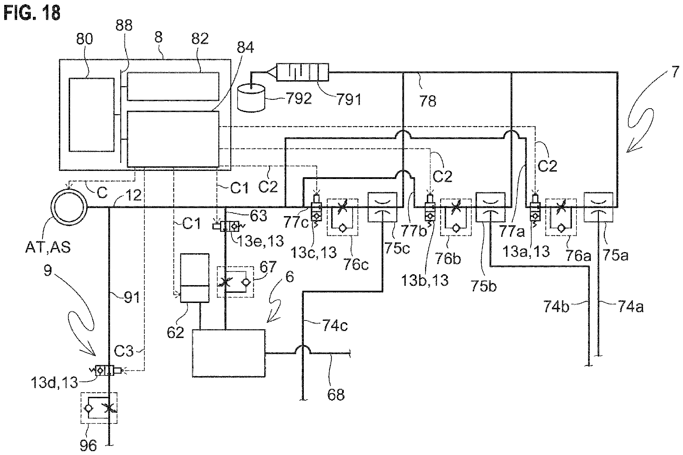

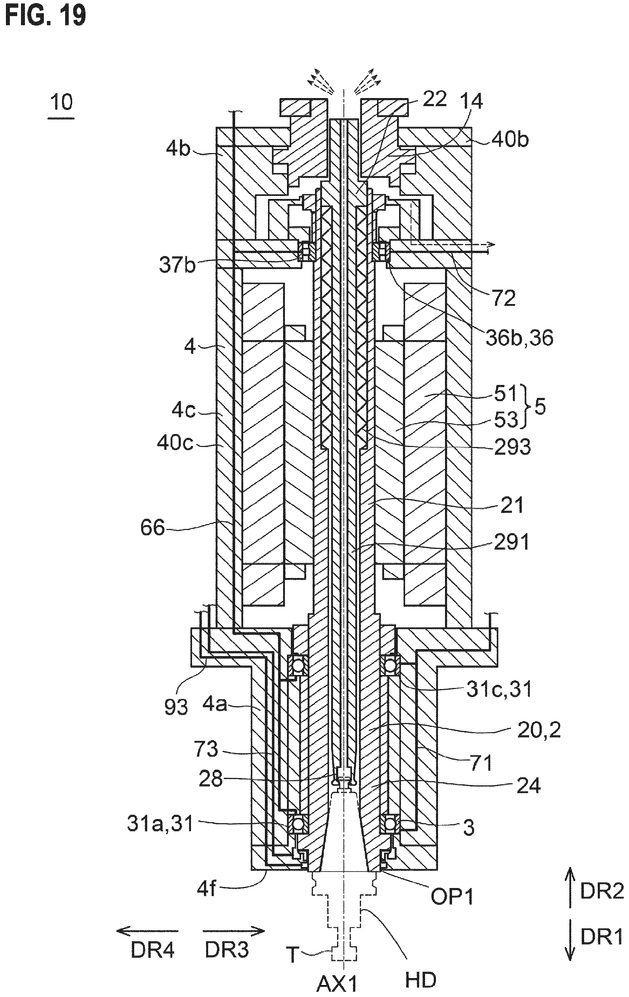

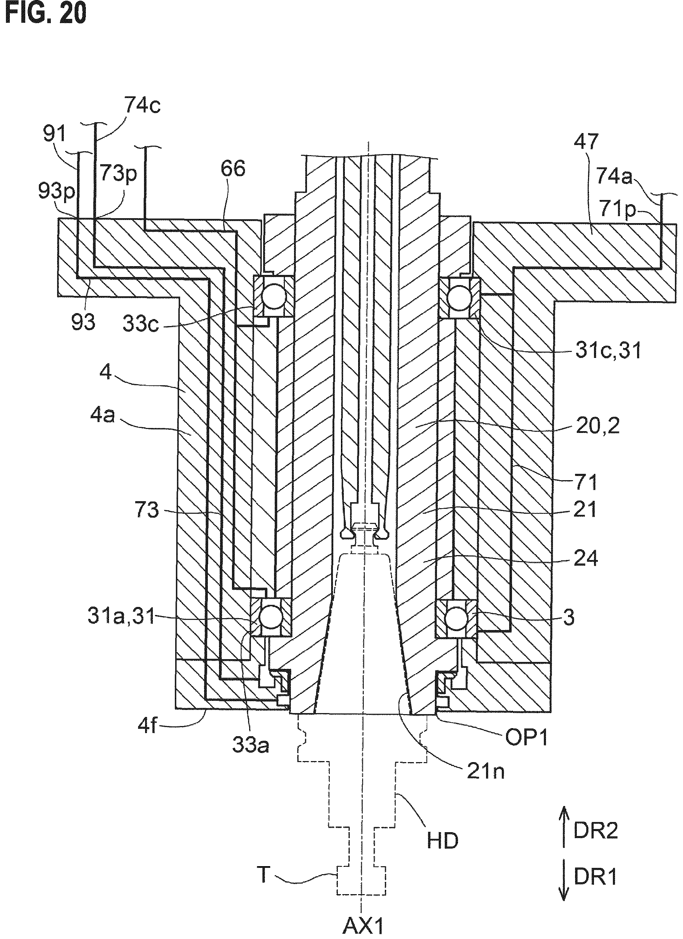

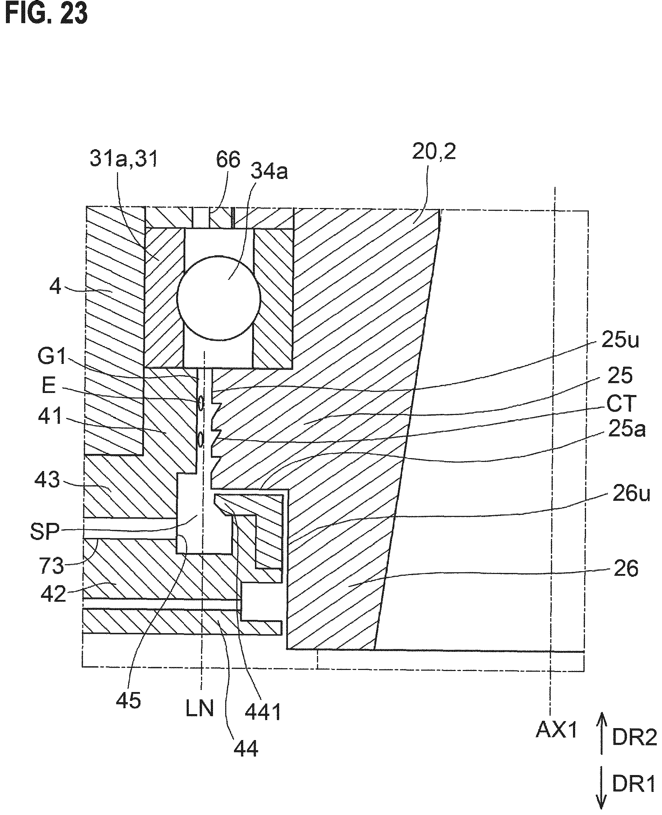

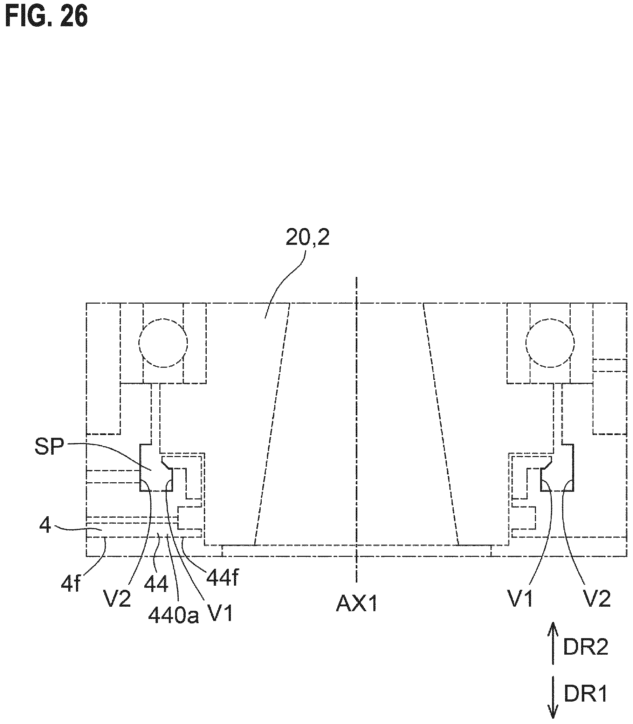

A spindle lubricator 1B of a machine tool according to a second embodiment will be described with reference to FIGs. 7 to 26. FIG. 7 is a schematic cross-sectional view of the spindle lubricator 1B of the machine tool according to the second embodiment, schematically illustrating the spindle lubricator. FIG. 8 is a schematic illustration of a state in which a first collection flow rate and a second collection flow rate are measured. FIG. 9 is a schematic illustration of a state in which an oil-containing fluid is discharged from the first collection flow channel 71 and the second collection flow channel 72 to the outside of a housing 4. FIG. 10 is a schematic cross-sectional view of the spindle lubricator 1B of the machine tool according to the second embodiment, schematically illustrating the spindle lubricator. FIG. 11 is a schematic cross-sectional view of a part of the spindle lubricator 1B of the machine tool according to the second embodiment, schematically illustrating the part of the spindle lubricator. FIG. 12 is a view for describing an example of the structure of an ejector 75. FIG. 13 is a schematic sectional view of a spindle lubricator 1B of a machine tool according to a first modification of the second embodiment, schematically illustrating the spindle lubricator. FIG. 14 is a schematic cross-sectional view of a part of the spindle lubricator 1B of the machine tool according to the first modification of the second embodiment, schematically illustrating the part of the spindle lubricator. FIG. 15 is a schematic illustration of a state in which the first collection flow rate and the second collection flow rate are measured. FIG. 16 is a schematic illustration of a state in which the oil-containing fluid is discharged from the first collection flow channel 71, the second collection flow channel 72, and a third collection flow channel 73 to the outside of the housing 4. FIG. 17 is a schematic cross-sectional view of the spindle lubricator 1B of the machine tool according to the first modification of the second embodiment, schematically illustrating the spindle lubricator. FIG. 18 is a schematic illustration of a part of the spindle lubricator 1B of the machine tool according to the first modification of the second embodiment. FIG. 19 is a schematic cross-sectional view of an example of a machining head 10, schematically illustrating the example of the machining head 10. FIGs. 20 to 22, 24, and 25 are each a schematic cross-sectional view of a part of the spindle lubricator 1B of the machine tool according to the first modification of the second embodiment, schematically illustrating the part of the spindle lubricator. FIG. 23 is a schematic cross-sectional view of a part of the spindle lubricator 1B of the machine tool according to a second modification of the second embodiment, schematically illustrating the part of the spindle lubricator. FIG. 26 is a view for describing a first annular groove V1 and a second annular groove V2.

In the second embodiment, differences from the first embodiment will be mainly described. On the other hand, in the second embodiment, repeated descriptions of the matters that have been described in the first embodiment will be omitted. Therefore, it is needless to say that the matters that have been described in the first embodiment are applicable to the second embodiment, even though they are not explicitly described in the second embodiment. On the contrary, all matters to be described in the second embodiment are applicable to the first embodiment.

As illustrated in FIG. 7, the spindle lubricator 1B of a machine tool according to the second embodiment includes: (1) a rotation body 2, which holds a tool T; (2) a plurality of bearings 3 including a first bearing 31a and a second bearing 36b; (3) a housing 4, which supports the rotation body 2 to be rotatable about a first axis AX1 via the plurality of bearings 3; (4) a fluid mixture supplier 6, which supplies a fluid mixture that contains oil and air to the plurality of bearings 3; and (5) a collector 7, which collects an oil-containing fluid containing oil. Additionally, the spindle lubricator 1B of the machine tool may include a controller 8, which controls at least the fluid mixture supplier 6. The collector 7 includes: (6A) a plurality of collection flow channels (71, 72, 73), which are provided in the housing 4 and which collect the oil-containing fluids respectively from the plurality of bearings 3; (6B) a plurality of ejectors (75a, 75b, 75c) which are disposed outside the housing 4; and (6C) a plurality of flow control valves (76a, 76b, 76c). Additionally, the collector 7 may include a plurality of pipe lines (74a, 74b, 74c), which fluidly connect the plurality of collection flow channels (71, 72, 73) respectively with the plurality of ejectors (75a, 75b, 75c).

In an example illustrated in FIG. 7, the plurality of collection flow channels (71, 72, 73) include: a first collection flow channel 71, which collects a first oil-containing fluid discharged from at least one of the bearings mainly including the first bearing 31a; and a second collection flow channel 72, which collects a second oil-containing fluid discharged from at least one of the bearings mainly including the second bearing 36b.

In the example illustrated in FIG. 7, the plurality of pipe lines (74a, 74b, 74c) include: a first pipe line 74a, which fluidly connects the first collection flow channel 71 with the first ejector 75a; and a second pipe line 74b, which fluidly connects the second collection flow channel 72 with the second ejector 75b.

In the example illustrated in FIG. 7, the plurality of ejectors (75a, 75b, 75c) include: the first ejector 75a, which generates negative pressure in the first pipe line 74a with the first air supplied from the first air flow channel 77a, and which sucks the first oil-containing fluid from the first collection flow channel 71 through the first pipe line 74a; and the second ejector 75b, which generates negative pressure in the second pipe line 74b with the second air supplied from the second air flow channel 77b, and which sucks the second oil-containing fluid from the second collection flow channel 72 through the second pipe line 74b.

In the example illustrated in FIG. 7, the plurality of flow control valves (76a, 76b, 76c) include: the first flow control valve 76a, which adjusts the flow rate of the first air supplied from the first air flow channel 77a to the first ejector 75a; and the second flow control valve 76b, which adjusts the flow rate of the second air supplied from the second air flow channel 77b to the second ejector 75b.

As described heretofore, the spindle lubricator 1B of the machine tool according to the second embodiment has the same effects as those of the spindle lubricator 1A of the machine tool according to the first embodiment.

### (Optional and Additional Configurations)

Subsequently, with reference to FIGs. 1 to 26, optional and additional configurations that are adoptable in the spindle lubricator 1B of the machine tool according to the second embodiment (or the spindle lubricator 1A of the machine tool according to the first embodiment) will be described.

### (Settings of First Collection Flow Rate, First Discharge Flow Rate, and Valve aperture of First Flow Control Valve 76a)

In each of FIGs. 4, 5, 8, and 9, it is assumed that the fluid mixture at a first flow rate is supplied from the fluid mixture supplier 6 to the plurality of bearings 3 (see an arrow AR1).

FIG. 4 or FIG. 8 illustrates a state in which the plurality of pipe lines (74a, 74b, and the like) are respectively in fluid connection with the plurality of collection flow channels (71, 72, and the like). More specifically, in examples illustrated in FIGs. 4 and 8, the first pipe line 74a is in fluid connection with the first collection flow channel 71, and the second pipe line 74b is in fluid connection with the second collection flow channel 72. In addition, in the example illustrated in FIG. 8, the third pipe line 74c is in fluid connection with the third collection flow channel 73.

FIG. 5 or FIG. 9 illustrates a state in which the plurality of pipe lines (74a, 74b, and the like) are respectively in fluid separation from the plurality of collection flow channels (71, 72, and the like). More specifically, in examples illustrated in FIGs. 5 and 9, the first pipe line 74a is in fluid separation from the first collection flow channel 71, and the second pipe line 74b is in fluid separation from the second collection flow channel 72. In the example illustrated in FIG. 9, the third pipe line 74c is in fluid separation from the third collection flow channel 73.

As illustrated in FIG. 4 or FIG. 8, under a first condition CD1 in which the plurality of pipe lines (74a, 74b, and the like) are respectively in fluid connection with the plurality of collection flow channels (71, 72, and the like) and the fluid mixture at the first flow rate is supplied from the fluid mixture supplier 6 to the plurality of bearings 3, a first collection flow rate is defined as a flow rate of the first oil-containing fluid flowing through the first pipe line 74a (see an arrow AR2 in FIG. 4 or FIG. 8). The first collection flow rate is derived by, for example, measurement. In the example illustrated in FIG. 4 or FIG. 8, the spindle lubricator 1 of the machine tool includes a first flow meter 11a, which is disposed on the first pipe line 74a. In this case, it is possible to measure the first collection flow rate using the first flow meter 11a. It is to be noted that after the first collection flow rate is measured, the first flow meter 11a may be detached from the first pipe line 74a. Alternatively, after the first collection flow rate is measured, the first flow meter 11a may remain attached to the first pipe line 74a.

Under a second condition CD2, which is different from the first condition CD1 only in that the plurality of pipe lines (74a, 74b, and the like) are respectively in fluid separation from the plurality of collection flow channels (71, 72, and the like) as illustrated in FIG. 5 or FIG. 9, a first discharge flow rate is defined as a flow rate of the first oil-containing fluid discharged from the first collection flow channel 71 to the outside of the first collection flow channel 71 (in the example illustrated in FIG. 5 or FIG. 9, the outside of the first collection flow channel 71 and the outside of the housing 4) (see an arrow AR4 in FIG. 5 or FIG. 9). The first discharge flow rate may be derived through measurement, or may be derived by simulation. For example, the first oil-containing fluid discharged from the first collection flow channel 71 to the outside of the housing 4 may be collected in a bag, and the first discharge flow rate may be derived by dividing the volume of the first oil-containing fluid that has been collected by a collecting time. It is to be noted that the first discharge flow rate may be measured by using another spindle lubricator of the same type with the above-described spindle lubricator 1 except that the collector 7 is not included.

The above-described first condition CD1 may include a condition of maintaining the rotation angle of the rotation body 2 about the first axis AX1 with respect to the housing 4. In this case, the above-described second condition CD2 includes the condition of maintaining the rotation angle of the rotation body 2 about the first axis AX1 with respect to the housing 4. Alternatively, the above-described first condition CD1 may include a condition of rotating the rotation body 2 about the first axis AX1 with respect to the housing 4 at a predetermined rotation speed (for example, 20000 rpm, or the maximum rotation speed or a similar rotation speed in the design specifications of the spindle lubricator). In this case, the above-described second condition CD2 includes the condition of rotating the rotation body 2 about the first axis AX1 with respect to the housing 4 at the predetermined rotation speed (for example, 20000 rpm, or the maximum rotation speed or a similar rotation speed in the design specifications of the spindle lubricator).

The flow rate (namely, the first flow rate) of the fluid mixture supplied to the plurality of bearings 3 from the fluid mixture supplier 6 in above-described first condition CD1 is equal to the flow rate (namely, the first flow rate) of the fluid mixture supplied to the plurality of bearings 3 from the fluid mixture supplier 6 in above-described second condition CD2. It is assumed that in the operation of the spindle lubricator 1, an upper limit value of the flow rate of the fluid mixture and a lower limit value of the flow rate of the fluid mixture supplied to the plurality of bearings 3 from the fluid mixture supplier 6 are determined beforehand. In this case, in each the above-described first condition CD1 and the above-described second condition CD2, the value of the first flow rate of the fluid mixture supplied to the plurality of bearings 3 from the fluid mixture supplier 6 is set to an optional value within a range between equal to or higher than the above-described lower limit and equal to or lower than the above-described upper limit. In each the above-described first condition CD1 and the above-described second condition CD2, the value of the first flow rate of the fluid mixture supplied to the plurality of bearings 3 from the fluid mixture supplier 6 may be set to the above-described upper limit value, may be set to the above-described lower limit value, or may be set to a value lower than the above-described upper limit value and higher than the above-described lower limit value.

In an example illustrated in FIG. 6 or FIG. 10, the valve aperture of the first flow control valve 76a is set so that the above-described first collection flow rate falls within a range between equal to or higher than 1 time and equal to or lower than 1.5 times the above-described first discharge flow rate (more preferably, so that the above-described first collection flow rate falls within a range between equal to or higher than 1 time and equal to or lower than 1.2 times the above-described first discharge flow rate). The valve aperture of the first flow control valve 76a may be set manually, or may be set by the controller 8.

When manually setting the valve aperture of the first flow control valve 76a, an operator adjusts the valve aperture of the first flow control valve 76a while seeing the value of the first collection flow rate indicated by the first flow meter 11a. In this manner, the operator manually sets the valve aperture of the first flow control valve 76a so that the above-described first collection flow rate falls within a range between equal to or higher than 1 time and equal to or lower than 1.5 times the above-described first discharge flow rate. When the valve aperture of the first flow control valve 76a is set by the controller 8, the controller 8 may automatically adjust the valve aperture of the first flow control valve 76a so that the value of the first collection flow rate indicated by the first flow meter 11a falls within a range between equal to or higher than 1 time and equal to or lower than 1.5 times the above-described first discharge flow rate. It is to be noted that after the first collection flow rate is adjusted, the first flow meter 11a may be detached from the first pipe line 74a, or may remain attached to the first pipe line 74a without change.

The above-described first collection flow rate is equal to or higher than 1 time the above-described first discharge flow rate, thereby eliminating or minimizing the insufficient collection of the first oil-containing fluid. In this manner, leakage of the oil from a gap between the rotation body 2 and the housing 4 to the outside of the spindle lubricator 1 of the machine tool is eliminated or minimized. In addition, the above-described first collection flow rate is equal to or lower than 1.5 times the above-described first discharge flow rate, thereby eliminating or minimizing excessive collection of the first oil-containing fluid. In this manner, the insufficient lubrication does not occur in at least one of the bearings including the first bearing 31a.

### (Setting of Second Collection flow Rate, Second Discharge Flow Rate, and Valve aperture of Second Flow Control Valve 76b)

As illustrated in FIG. 4 or FIG. 8, a second collection flow rate is defined as a flow rate of the second oil-containing fluid flowing through the second pipe line 74b under the above-described first condition CD1 (see an arrow AR3 in FIG. 4 or FIG. 8). The second collection flow rate is derived by, for example, measurement. In the example illustrated in FIG. 4 or FIG. 8, the spindle lubricator 1 of the machine tool includes a second flow meter 11b, which is disposed on the second pipe line 74b. In this case, it is possible to measure the second collection flow rate using the second flow meter 11b. It is to be noted that after the second collection flow rate is measured, the second flow meter 11b may be detached from the second pipe line 74b. Alternatively, after the second collection flow rate is measured, the second flow meter 11b may remain attached to the second pipe line 74b.

As illustrated in FIG. 5 or FIG. 9, under the above-described second condition CD2, a second discharge flow rate is defined as a flow rate of the second oil-containing fluid discharged to the outside of the second collection flow channel 72 from the second collection flow channel 72 (in the example illustrated in FIG. 5 or FIG. 9, to the outside of the second collection flow channel 72 and the outside of the housing 4) (see an arrow AR5 in FIG. 5 or FIG. 9). The second discharge flow rate may be derived through measurement, or may be derived by simulation. For example, the second oil-containing fluid discharged to the outside of the housing 4 from the second collection flow channel 72 is collected in a bag, and the second discharge flow rate may be derived by dividing the volume of the second oil-containing fluid that has been collected by a collecting time. It is to be noted that the second discharge flow rate may be measured by using another spindle lubricator of the same type with the above-described spindle lubricator 1 except that the collector 7 is not included.

In the example illustrated in FIG. 6 or FIG. 10, the valve aperture of the second flow control valve 76b is set so that the above-described second collection flow rate falls within a range between equal to or higher than 1 time and equal to or lower than 1.5 times the above-described second discharge flow rate (more preferably, so that the above-described second collection flow rate falls within a range between equal to or higher than 1 time and equal to or lower than 1.2 times the above-described second discharge flow rate). The valve aperture of the second flow control valve 76b may be set manually, or may be set by the controller 8.

When manually setting the valve aperture of the second flow control valve 76b, the operator adjusts the valve aperture of the second flow control valve 76b while seeing the value of the second collection flow rate indicated by the second flow meter 11b. In this manner, the operator manually sets the valve aperture of the second flow control valve 76b so that the above-described second collection flow rate falls within a range between equal to or higher than 1 time and equal to or lower than 1.5 times the above-described second discharge flow rate. When the valve aperture of the second flow control valve 76b is set by the controller 8, the controller 8 may automatically adjust the valve aperture of the second flow control valve 76b so that the value of the second collection flow rate indicated by the second flow meter 11b falls within a range between equal to or higher than 1 time and equal to or lower than 1.5 times the above-described second discharge flow rate. It is to be noted that after the second collection flow rate is adjusted, the second flow meter 11b may be detached from the second pipe line 74b, or may remain attached to the second pipe line 74b without change.

The above-described second collection flow rate is equal to or higher than 1 time the above-described second discharge flow rate, thereby eliminating or minimizing the insufficient collection of the second oil-containing fluid. In this manner, leakage of the oil from a gap between the rotation body 2 and the housing 4 to the outside of the spindle lubricator 1 of the machine tool is eliminated or minimized. In addition, the above-described second collection flow rate is equal to or lower than 1.5 times the above-described second discharge flow rate, thereby eliminating or minimizing excessive collection of the second oil-containing fluid. In this manner, the insufficient lubrication does not occur in at least one of the bearings including the second bearing 36b.

For example, in a case where the plurality of pipe lines (74a, 74b, and the like) are long, or in a case where the exhaust pipe line 78 is long, a pressure loss of the oil-containing fluid that flows through the pipe line becomes large. In such a case, it is necessary to increase the suction force of the plurality of ejectors (75a, 75b, and the like). However, if the suction force of the plurality of ejectors (75a, 75b, and the like) is increased, the insufficient lubrication of the bearings will easily occur. In addition, in a case where the number of bearings included in the front bearing 31 and the number of bearings included in the rear bearing 36 are different from each other, or in a case where the length of the first pipe line 74a and the length of the second pipe line 74b are different from each other, an imbalance in lubrication easily occurs between the plurality of bearings. In contrast, by appropriately setting the valve aperture of each first flow control valve 76a and second flow control valve 76b as described above, the insufficient lubrication does not occur in each of the plurality of bearings.

### (Plurality of Bearings 3)

The plurality of bearings 3 include the first bearing 31a and the second bearing 36b. Additionally, the plurality of bearings 3 may include a third bearing 31c. In the example illustrated in FIG. 6 or FIG. 10, the third bearing 31c is disposed between the first bearing 31a and the second bearing 36b in the direction along the first axis AX1. The third bearing 31c is, for example, a ball bearing.

The first bearing 31a constitutes at least a part of the front bearing 31, which supports the tip end portion 24 of the rotation body 2. The first bearing 31a is, for example, a ball bearing. In the example illustrated in FIG. 6 or FIG. 10, the first bearing 31a is a bearing disposed furthest in the first direction DR1 (in other words, closest to the tip end) among the plurality of bearings 3, which support the rotation body 2. The front bearing 31, which supports the tip end portion 24 of the rotation body 2, may include a plurality of bearings. In the example illustrated in FIG. 6 or FIG. 10, the front bearing 31 includes the first bearing 31a and the third bearing 31c.

In an example illustrated in FIG. 11, the first bearing 31a includes an inner ring 32a, an outer ring 33a, and rolling elements 34a, which are disposed between the inner ring 32a and the outer ring 33a. The third bearing 31c includes an inner ring 32c, an outer ring 33c, and rolling elements 34c, which are disposed between the inner ring 32c and the outer ring 33c.

In the example illustrated in FIG. 6 or FIG. 10, the second bearing 36b constitutes at least a part of the rear bearing 36, which supports the rear end portion 22 of the rotation body 2. The second bearing 36b is, for example, a roller bearing.

### (Collector 7)

In the example illustrated in FIG. 10, the collector 7 includes: (1) a plurality of collection flow channels including the first collection flow channel 71, the second collection flow channel 72, and the third collection flow channel 73; (2) a plurality of pipe lines including the first pipe line 74a, the second pipe line 74b, and the third pipe line 74c; (3) a plurality of ejectors including the first ejector 75a, the second ejector 75b, and the third ejector 75c; and (4) a plurality of flow control valves including the first flow control valve 76a, the second flow control valve 76b, and the third flow control valve 76c.

The first collection flow channel 71, the second collection flow channel 72, the first pipe line 74a, the second pipe line 74b, the first ejector 75a, the second ejector 75b, the first flow control valve 76a, and the second flow control valve 76b have been described in the first embodiment, and thus the repeated descriptions of these configurations will be omitted.

The third collection flow channel 73 is provided in the housing 4. In an example illustrated in FIG. 11, the entirety or most of the third collection flow channel 73 is disposed inside the housing 4. The entirety or most of the third collection flow channel 73 may be made up of a through hole formed in the housing 4.

The third collection flow channel 73 collects the oil-containing fluid containing the oil that has passed through the first bearing 31a without being collected by the first collection flow channel 71. Hereinafter, the oil-containing fluid collected through the third collection flow channel 73 will be referred to as a "third oil-containing fluid". In the example illustrated in FIG. 10, the third collection flow channel 73 is a flow channel different from the first collection flow channel 71 and the second collection flow channel 72.

As illustrated in FIG. 10, the third pipe line 74c fluidly connects the third collection flow channel 73 with the third ejector 75c, which is disposed outside the housing 4. In the example illustrated in FIG. 10, the entirety of the third pipe line 74c is disposed outside the housing 4. Alternatively, the third pipe line 74c may be partially disposed inside the housing 4, and most of the third pipe line 74c may be disposed outside the housing 4.

By generating negative pressure with the air supplied from a third air flow channel 77c, the third ejector 75c sucks the third oil-containing fluid from the third collection flow channel 73. Hereinafter, the air supplied from the third air flow channel 77c to the third ejector 75c will be referred to as "third air". In the example illustrated in FIG. 10, the third ejector 75c generates negative pressure in the third pipe line 74c with the third air supplied from the third air flow channel 77c, and sucks the third oil-containing fluid from the third collection flow channel 73 through the third pipe line 74c. In the example illustrated in FIG. 10, the third ejector 75c is an ejector provided to correspond to the third collection flow channels 73 on a one-to-one basis through the third pipe line 74c.

The third flow control valve 76c adjusts the flow rate of the third air supplied to the third ejector 75c from the third air flow channel 77c. The valve aperture of the third flow control valve 76c may be set manually, or may be set by the controller 8.

In the example illustrated in FIG. 11, the spindle lubricator 1 of the machine tool includes the third collection flow channel 73, which collects the third oil-containing fluid containing oil that has passed through the first bearing 31a without being collected by the first collection flow channel 71. Therefore, leakage of the oil, which has passed through the first bearing 31a, from a gap between the rotation body 2 and a tip end portion 46 of the housing 4 is effectively eliminated or minimized.

For example, it is assumed that it is not desirable that oil adheres to a workpiece to be machined by the tool T. More specifically, it is assumed that a workpiece made of a carbon material is to be machined, and if oil adheres to the workpiece, an issue will arise. In such a case, the embodiment including the third collection flow channel 73 is useful.

In addition, when a resin material or a similar material is machined using the tool T, dry machining is used in some cases. In the embodiment including the third collection flow channel 73, leakage of the oil from the gap between the rotation body 2 and the tip end portion 46 of the housing 4 is eliminated or minimized, and adhesion of the oil to a workpiece (for example, a resin material or a similar material) is effectively eliminated or minimized. Therefore, the embodiment including the third collection flow channel 73 is useful also in the case where the dry machining is used.

In the embodiment including the third collection flow channel 73, leakage of the oil from the gap between the rotation body 2 and the tip end portion 46 of the housing 4 is eliminated or minimized. Thus, in a case where a coolant is used while a workpiece is being machined (in other words, in a case where machining not the dry machining is performed), the oil being mixed into the coolant is eliminated or minimized. Therefore, the load on the environment is reduced.

In the example illustrated in FIG. 10, the collector 7 includes an exhaust pipe line 78, an exhaust cleaner 791, and a collection container 792. In the example illustrated in FIG. 10, the exhaust pipe line 78 fluidly connects the first ejector 75a, the second ejector 75b, and the third ejector 75c with the exhaust cleaner 791.

The exhaust cleaner 791 receives the oil-containing fluid from a plurality of ejectors (75a, 75b, 75c) through the exhaust pipe line 78. The exhaust cleaner 791 also separates the oil-containing fluid that has been received from the exhaust pipe line 78 into liquid-state oil and air. The liquid-state oil that has been separated from the oil-containing fluid by the exhaust cleaner 791 is collected in the collection container 792.

### (Structure of Ejector 75)

FIG. 12 illustrates an example of the structure of the ejector 75. The ejector 75 includes an inlet port 751, an outlet port 752, and a vacuum port 753. When the compressed air is supplied to the inlet port 751 of the ejector 75, a fluid to be sucked is sucked into the ejector 75 through the vacuum port 753 of the ejector 75. The compressed air and the sucked fluid are discharged from the ejector 75 through the outlet port 752. When the flow rate of the compressed air supplied to the inlet port 751 increases, the flow rate of the fluid to be sucked into the ejector 75 increases. On the other hand, when the flow rate of the compressed air supplied to the inlet port 751 decreases, the flow rate of the fluid to be sucked into the ejector 75 decreases.

Regarding the first ejector 75a, the above-described first air flow channel 77a is connected with an inlet port 751a, the above-described exhaust pipe line 78 is connected with an outlet port 752a, and the above-described first pipe line 74a is connected with a vacuum port 753a. Regarding the second ejector 75b, the above-described second air flow channel 77b is connected with an inlet port 751b, the above-described exhaust pipe line 78 is connected with an outlet port 752b, and the above-described second pipe line 74b is connected with a vacuum port 753b. Regarding the third ejector 75c, the above-described third air flow channel 77c is connected with an inlet port 751c, the above-described exhaust pipe line 78 is connected with an outlet port 752c, and the above-described third pipe line 74c is connected with a vacuum port 753c.

### (Air Supplier 9)

As illustrated in FIG. 13, the spindle lubricator 1 of the machine tool may include an air supplier 9. The air supplier 9 includes: an air source AS (for example, an air compressor) disposed outside the housing 4; an air supply flow channel 93, which is provided in the housing 4; an air supply pipe 91, which connects the air source AS with the air supply flow channel 93; and a fourth flow control valve 96.

In an example illustrated in FIG. 13, the air supply pipe 91 is disposed outside the housing 4. The air supply pipe 91 supplies air to the air supply flow channel 93. Hereinafter, the air supplied to the air supply flow channel 93 from the air supply pipe 91 will be referred to as "fourth air". The fourth flow control valve 96 adjusts the flow rate of the fourth air supplied to the air supply flow channel 93 from the air supply pipe 91. In the example illustrated in FIG. 13, the fourth flow control valve 96 is disposed on the air supply pipe 91. The valve aperture of the fourth flow control valve 96 may be set manually, or may be set by the controller 8.

In an example illustrated in FIG. 14, an air injection opening OP1 is formed between the rotation body 2 (more specifically, the rotation shaft 20) and the tip end portion 46 of the housing 4. In addition, a discharge opening 49, which discharges the fourth air received from the air supply flow channel 93 to a gap G between the rotation body 2 and the housing 4, is formed on the housing 4. The fourth air discharged from the discharge opening 49 forms both a first flow from the gap G toward the third collection flow channel 73 and a second flow from the gap G toward the air injection opening OP1.

The fourth air injected from the air injection opening OP1 prevents foreign matters such as cutting chips from entering the housing 4 through the gaps G. More specifically, in the example illustrated in FIG. 13, the fourth air injected from the air injection opening OP1 forms an air curtain AC around the tool T or the tool holder HD. The air curtain AC prevents foreign matters such as cutting chips from entering the housing 4 through the gap G.

In the example illustrated in FIG. 14, the first flow from the gap G toward the third collection flow channel 73 (more specifically, the flow of the fourth air from the gap G toward the third collection flow channel 73) pushes back oil E1, which has entered the gap G, toward the third collection flow channel 73. Therefore, leakage of the oil from the gap between the rotation body 2 and the tip end portion 46 of the housing 4 is further effectively eliminated or minimized.

The third collection flow channel 73 includes a relatively larger amount of the fourth air (in other words, the fourth air that has been discharged from the discharge opening 49) than the amount in any of the other collection flow channels (71, 72). In addition, in the example illustrated in FIG. 13, the third pipe line 74c includes a relatively larger amount of the fourth air (in other words, the fourth air that has been discharged from the discharge opening 49) than the amount in any of the other pipe lines (74a, 74b). In such a case, when equal suction force is exerted in the first pipe line 74a, the second pipe line 74b, and the third pipe line 74c, an imbalance in collecting the oil easily occurs among the plurality of bearings. In contrast, in the example illustrated in FIG. 13, the suction force exerted in the first pipe line 74a, the suction force exerted on the second pipe line 74b, and the suction force exerted in the third pipe line 74c are independently adjustable. Thus, by appropriately setting the suction force individually, it becomes possible to prevent the insufficient lubrication in each of the plurality of bearings.

### (Settings of Valve Aperture of First Flow Control Valve 76a and Valve Aperture of Second Flow Control Valve 76b)

In each drawing of FIGs. 15 and 16, it is assumed that the fluid mixture at the first flow rate is supplied to the plurality of bearings 3 from the fluid mixture supplier 6 (see an arrow AR1). In each drawing of FIGs. 15 and 16, it is assumed that the fourth air at the second flow rate is supplied to the air supply flow channel 93 (see an arrow AR7). In addition, in each drawing of FIGs. 15 and 16, it is assumed that air is injected from the air injection opening OP1 (see an arrow AR6).

FIG. 15 illustrates a state in which the plurality of pipe lines (74a, 74b, 74c) are respectively in fluid connection with the plurality of collection flow channels (71, 72, 73). More specifically, in an example illustrated in FIG. 15, the first pipe line 74a is in fluid connection with the first collection flow channel 71, the second pipe line 74b is in fluid connection with the second collection flow channel 72, and the third pipe line 74c is in fluid connection with the third collection flow channel 73.

FIG. 16 illustrates a state in which the plurality of pipe lines (74a, 74b, 74c) are respectively in fluid separation from the plurality of collection flow channels (71, 72, 73). More specifically, in an example illustrated in FIG. 16, the first pipe line 74a is in fluid separation from the first collection flow channel 71, the second pipe line 74b is in fluid separation from the second collection flow channel 72, and the third pipe line 74c is in fluid separation from the third collection flow channel 73.

As illustrated in FIG. 15, under a third condition CD3 in which the plurality of pipe lines (74a, 74b, 74c) are respectively in fluid connection with the plurality of collection flow channels (71, 72, 73), the oil-containing fluid at the first flow rate is supplied to the plurality of bearings from the fluid mixture supplier 6, and the fourth air at the second flow rate is supplied to the air supply flow channel 93, a first collection flow rate is defined as a flow rate of the first oil-containing fluid flowing in the first pipe line 74a (see an arrow AR2 in FIG. 15). In addition, under the above-described third condition CD3, a second collection flow rate is defined as a flow rate of the second oil-containing fluid flowing in the second pipe line 74b (see an arrow AR3 in FIG. 15). It is to be noted that since the measurement methods of the first collection flow rate and the second collection flow rate have already been described, repeated descriptions of these measurement methods will be omitted.

As illustrated in FIG. 16, under a fourth condition CD4, which is different from the above-described third condition CD3 only in that the plurality of pipe lines (74a, 74b, 74c) are respectively in fluid separation from the plurality of collection flow channels (71, 72, 73), a first discharge flow rate is defined as a flow rate of the first oil-containing fluid discharged to the outside of the first collection flow channel 71 from the first collection flow channel 71 (for example, to the outside of the housing 4) (see an arrow AR4 in FIG. 16). In addition, a second discharge flow rate is defined as a flow rate of the second oil-containing fluid discharged to the outside of the second collection flow channel 72 (for example, to the outside of the housing 4) from the second collection flow channel 72 under the above-described fourth condition CD4 (see an arrow AR5 in FIG. 16). It is to be noted that since the measurement methods (or derivation methods) of the first collection flow rate and the second collection flow rate have already been described, the repeated descriptions of the measurement methods (or derivation methods) will be omitted.

The above-described third condition CD3 may include a condition of maintaining the rotation angle of the rotation body 2 about the first axis AX1 with respect to the housing 4. In this case, the above-described fourth condition CD4 includes a condition of maintaining the rotation angle of the rotation body 2 about the first axis AX1 with respect to the housing 4. Alternatively, the above-described third condition CD3 may include a condition of rotating the rotation body 2 about the first axis AX1 with respect to the housing 4 at a predetermined rotation speed (for example, 20000 rpm, or the maximum rotation speed or a similar rotation speed in the design specifications of the spindle lubricator). In this case, the above-described fourth condition CD4 includes a condition of rotating the rotation body 2 about the first axis AX1 with respect to the housing 4 at the predetermined rotation speed (for example, 20000 rpm, or the maximum rotation speed or a similar rotation speed in the design specifications of the spindle lubricator).

The flow rate (that is, the first flow rate) of the fluid mixture supplied to the plurality of bearings 3 from the fluid mixture supplier 6 under the above-described third condition CD3 is equal to the flow rate (that is, the first flow rate) of the fluid mixture supplied to the plurality of bearings 3 from the fluid mixture supplier 6 under the above-described fourth condition CD4. In the operation of the spindle lubricator 1, it is assumed that an upper limit value of the flow rate of the fluid mixture and a lower limit value of the flow rate of the fluid mixture supplied to the plurality of bearings 3 from the fluid mixture supplier 6 are determined beforehand. In this case, in each the above-described third condition CD3 and the above-described fourth condition CD4, the value of the first flow rate of the fluid mixture supplied to the plurality of bearings 3 from the fluid mixture supplier 6 is set to an optional value within a range between equal to or higher than the above-described lower limit and equal to or lower than the above-described upper limit. In each the above-described third condition CD3 and the above-described fourth condition CD4, the value of the first flow rate of the fluid mixture supplied to the plurality of bearings 3 from the fluid mixture supplier 6 may be set to the above-described upper limit value, may be set to the above-described lower limit value, or may be set to a value lower than the above-described upper limit value and higher than the above-described lower limit value.

The flow rate of the fourth air supplied to the air supply flow channel 93 under the above-described third condition CD3 (that is, the second flow rate) is equal to the flow rate of the fourth air supplied to the air supply flow channel 93 under the above-described fourth condition CD4 (that is, the second flow rate). In the above-described fourth condition CD4, a "third flow rate" is defined as a flow rate of the air injected from the air injection opening OP1. In the above-described fourth condition CD4 (see FIG. 16), it is preferable to set the flow rate (that is, the second flow rate) of the fourth air supplied to the air supply flow channel 93 so that the third flow rate becomes a flow rate necessary for forming an air curtain (for example, a flow rate of a design lower limit value for forming the air curtain).

In an example illustrated in FIG. 17, the valve aperture of the first flow control valve 76a is set so that the above-described first collection flow rate falls within a range between equal to or higher than 1 time and equal to or lower than 1.5 times the above-described first discharge flow rate (more preferably, so that the above-described first collection flow rate falls within a range between equal to or higher than 1 time and equal to or lower than 1.2 times the above-described first discharge flow rate). The valve aperture of the first flow control valve 76a may be set manually, or may be set by the controller 8. In addition, the valve aperture of the second flow control valve 76b is set so that the above-described second collection flow rate falls within a range between equal to or higher than 1 time and equal to or lower than 1.5 times the above-described second discharge flow rate (more preferably, so that the above-described second collection flow rate falls within a range between equal to or higher than 1 time and equal to or lower than 1.2 times the above-described second discharge flow rate). The valve aperture of the second flow control valve 76b may be set manually, or may be set by the controller 8

It is to be noted that the above-described third condition CD3 is one embodiment of the above-described first condition CD1, and the above-described fourth condition CD4 is one embodiment of the above-described second condition CD2.

### (Settings of Valve Aperture of Third Flow Control Valve 76c and Valve Aperture of Fourth Flow Control Valve 96)

FIG. 17 illustrates a state after the valve aperture of the first flow control valve 76a and the valve aperture of the second flow control valve 76b have been set. In an example illustrated in FIG. 17, the valve aperture of the third flow control valve 76c and the valve aperture of the fourth flow control valve 96 are set so that the flow rate of the fourth air discharged from the discharge opening 49 (see FIG. 14) is higher than the flow rate of the air injected from the air injection opening OP1 (see FIG. 14). In the example illustrated in FIG. 14, the flow rate of the fourth air discharged from the discharge opening 49 is set to be higher than the flow rate of the air injected from the air injection opening OP1, thereby presenting, or eliminating or minimizing the injection of the oil E1 from the air injection opening OP1 in accordance with the injection of the air from the air injection opening OP1.

For example, in a case where the valve aperture of the third flow control valve 76c is small, the collection of the third oil-containing fluid from the third collection flow channel 73 is insufficient, and in the example illustrated in FIG. 14, the oil E1 moves from the gap between the housing 4 and the rotation body 2 toward the air injection opening OP1, in some cases. More specifically, when the flow rate of the air injected from the air injection opening OP1 is higher than the flow rate of the fourth air discharged from the discharge opening 49, the oil E1 is injected from the air injection opening OP1 in accordance with the injection of the air from the air injection opening OP1, in some cases. For this reason, it is preferable to appropriately set a relationship between the valve aperture of the third flow control valve 76c and the valve aperture of the fourth flow control valve 96 so that the flow rate of the air injected from the air injection opening OP1 does not become higher than the flow rate of the fourth air discharged from the discharge opening 49.

In the example illustrated in FIG. 17, it is preferable to set the valve aperture of the third flow control valve 76c and the valve aperture of the fourth flow control valve 96 so that the flow rate of the air injected from the air injection opening OP1 is equal to or higher than the above-described third flow rate (more specifically, equal to or higher than a flow rate of a design lower limit value for forming an air curtain). With such settings, the air curtain that prevents foreign matters from entering the machining head 10 from the tip end portion of the machining head 10 is suitably formed.

In the example illustrated in FIG. 17, the fourth air discharged from the discharge opening 49 is partially collected through the third collection flow channel 73, and thus the flow rate of the air injected from the air injection opening OP1 can be reduced. For this reason, in the example illustrated in FIG. 17, by sufficiently increasing the valve aperture of the fourth flow control valve 96, it becomes possible to set the flow rate of the air injected from the air injection opening OP1 to be equal to or higher than the above-described third flow rate while the fourth air discharged from the discharge opening 49 is partially collected through the third collection flow channel 73. The fourth air discharged from the discharge opening 49 is partially collected through the third collection flow channel 73, thereby preventing the oil E1 (see FIG. 14, if necessary) from moving toward the air injection opening OP1. In addition, the air at equal to or higher than the third flow rate is injected from the air injection opening OP1, thereby preventing foreign matters from entering the machining head 10 from the tip end portion of the machining head 10.

In the example illustrated in FIG. 17, the valve aperture of the third flow control valve 76c and the valve aperture of the fourth flow control valve 96 may be set so that the flow rate of the air injected from the air injection opening OP1 is equal to or higher than 1 time and equal to or lower than 1.5 times the above-described third flow rate (more specifically, the flow rate of the design lower limit value for forming the air curtain). The flow rate of the air injected from the air injection opening OP1 is equal to or lower than 1.5 times the above-described third flow rate, and thus the air injected from the air injection opening OP1 does not become excessive.

### (Fluid Mixture Supplier 6)

In the example illustrated in FIG. 17, the fluid mixture supplier 6 includes: an air source AT (for example, an air compressor); an oil tank 61; a pump 62; a second air supply pipe 63; a mixer 64; a supply flow channel 66; and a fluid mixture supply pipe 68, which connects the mixer 64 with the supply flow channel 66.

The air source AT supplies air to the mixer 64 through the second air supply pipe 63. Hereinafter, the air supplied to the mixer 64 through the second air supply pipe 63 will be referred to as "fifth air". The pump 62 supplies the oil to the mixer 64 from the oil tank 61. The mixer 64 mixes the fifth air received from the air source AT through the second air supply pipe 63 with the oil received from the oil tank 61, and forms a fluid mixture containing the oil and the air. The mixer 64 also feeds the fluid mixture to the supply flow channel 66 through the fluid mixture supply pipe 68.

In the example illustrated in FIG. 17, the fluid mixture supply pipe 68 is disposed outside the housing 4, and the supply flow channel 66 is disposed inside the housing 4. The supply flow channel 66 supplies a fluid mixture containing the oil and the air to the plurality of bearings 3 (more specifically, oil air). In the example illustrated in FIG. 17, the supply flow channel 66 supplies the fluid mixture containing the oil and the air to the first bearing 31a, the second bearing 36b, and the third bearing 31c.

In the example illustrated in FIG. 17, the air source AT, which supplies the air to the mixer 64, also serves as the air source AS, which supplies the air to the plurality of ejectors (75a, 75b, 75c). Since the air source AT, which supplies the air to the mixer 64, and the air source AS, which supplies the air to the plurality of ejectors (75a, 75b, 75c), are configured as one air source, space saving is achieved. In addition, reduction in the manufacturing cost is achieved, and reduction in energy consumption is achieved. Alternatively, the air source AT, which supplies the air to the mixer 64, may be an air source different from the air source AS, which supplies the air to the plurality of ejectors (75a, 75b, 75c).

The fluid mixture supplier 6 may include a fifth flow control valve 67, which adjusts the flow rate of the air supplied to the mixer 64 from the second air supply pipe 63. In the example illustrated in FIG. 17, the fifth flow control valve 67 is disposed on the second air supply pipe 63. The valve aperture of the fifth flow control valve 67 may be set manually, or may be set by the controller 8.

### (First Air Flow Channel 77a, Second Air Flow Channel 77b, and Third Air Flow Channel 77c)

Since the first air flow channel 77a and the second air flow channel 77b have been described in the first embodiment, repeated descriptions of these flow channels will be omitted. In the example illustrated in FIG. 17, the collector 7 includes a third air flow channel 77c, which supplies third air to the third ejector 75c. In the example illustrated in FIG. 17, a third flow control valve 76c is disposed on the third air flow channel 77c.

### (Main Air Flow Channel 12)

In the example illustrated in FIG. 17, the spindle lubricator 1 of the machine tool includes a main air flow channel 12, which connects the first air flow channel 77a, the second air flow channel 77b, and the third air flow channel 77c with the air source AS. In the example illustrated in FIG. 17, the main air flow channel 12 is branched into a plurality of air flow channels including the first air flow channel 77a, the second air flow channel 77b, and the third air flow channel 77c.

The main air flow channel 12 may be connected with an air supply pipe 91, which supplies the air to an air supply flow channel 93, which is provided in the housing 4. The main air flow channel 12 may be connected with a second air supply pipe 63, which supplies the fifth air to the mixer 64.

### (On-Off Valve 13)

In an example illustrated in FIG. 18, the spindle lubricator 1 of the machine tool includes a plurality of on-off valves 13, which are respectively disposed between the air source AS and the plurality of flow control valves (76a, 76b, 76c, 67, 96).

In the example illustrated in FIG. 18, the collector 7 includes a first on-off valve 13a and a second on-off valve 13b. Additionally, the collector 7 may include a third on-off valve 13c.

The first on-off valve 13a is disposed between the air source AS and the first flow control valve 76a. More specifically, the first on-off valve 13a is disposed on the first air flow channel 77a. The first on-off valve 13a opens and closes a first air flow channel 77a between the air source AS and the first flow control valve 76a.

The second on-off valve 13b is disposed between the air source AS and the second flow control valve 76b. More specifically, the second on-off valve 13b is disposed on the second air flow channel 77b. The second on-off valve 13b opens and closes the second air flow channel 77b between the air source AS and the second flow control valve 76b.

The third on-off valve 13c is disposed between the air source AS and the third flow control valve 76c. More specifically, the third on-off valve 13c is disposed on the third air flow channel 77c. The third on-off valve 13c opens and closes the third air flow channel 77c between the air source AS and the third flow control valve 76c.

In the example illustrated in FIG. 18, the air supplier 9 includes a fourth on-off valve 13d. The fourth on-off valve 13d is disposed between the air source AS and the fourth flow control valve 96. More specifically, the fourth on-off valve 13d is disposed on the air supply pipe 91. The fourth on-off valve 13d opens and closes the flow channel of the air supply pipe 91 between the air source AS and the fourth flow control valve 96.

In the example illustrated in FIG. 18, the fluid mixture supplier 6 includes a fifth on-off valve 13e. The fifth on-off valve 13e is disposed between the air source AS and the fifth flow control valve 67. More specifically, the fifth on-off valve 13e is disposed on the second air supply pipe 63. The fifth on-off valve 13e opens and closes the flow channel of the second air supply pipe 63 between the air source AS and the fifth flow control valve 67.

### (Controller 8)

The controller 8 controls the fluid mixture supplier 6 and the collector 7. Additionally, the controller 8 may control the air supplier 9.

In the example illustrated in FIG. 18, the controller 8 includes: a processor 80; a memory 82, which stores a program and data; and a communication circuit 84. In the example illustrated in FIG. 18, the processor 80, the memory 82, and the communication circuit 84 are connected with one another through a bus 88.

The controller 8 may include a microcontroller in which the processor 80, the memory 82, and the communication circuit 84 are integrated into one integrated circuit, or may include a computer in which a CPU as the processor 80, a storage unit as the memory 82, and a communication unit as the communication circuit 84 are separately provided.

The controller 8 controls the air source AS. By transmitting a drive command C to the air source AS, the controller 8 drives the air source AS (for example, an air compressor).

The controller 8 controls the fluid mixture supplier 6. More specifically, the controller 8 transmits a first group of control commands C1 to the fluid mixture supplier 6, and the fluid mixture supplier 6, which receives the first group of control commands C1, supplies the fluid mixture to the plurality of bearings 3 at the first flow rate. For example, by transmitting the first group of control commands C1 to the fifth on-off valve 13e and the pump 62, the controller 8, using the fluid mixture supplier 6, supplies the fluid mixture containing oil and air to the plurality of bearings 3.

The controller 8 controls the collector 7. The controller 8 transmits a second group of control commands C2 to the collector 7, and the collector 7, which receives the second group of control commands C2, collects the oil-containing fluid. For example, by transmitting the second group of control commands C2 to the first on-off valve 13a, the second on-off valve 13b, and the third on-off valve 13c, the controller 8, using the collector 7, collects the oil-containing fluid. In a case where the valve aperture of the first flow control valve 76a is set to a first valve aperture, the insufficient lubrication of the bearing due to the suction force of the first ejector 75a does not occur. In a case where the valve aperture of the second flow control valve 76b is set to a second valve aperture, the insufficient lubrication of the bearing due to the suction force of the second ejector 75a does not occur.

The controller 8 may control the air supplier 9 so that the air is injected from the air injection opening OP1. The controller 8 transmits a third group of control commands C3 to the air supplier 9, and the air supplier 9, which receives the third group of control commands C3, supplies the fourth air to the discharge opening 49, which is formed in the housing 4. For example, by transmitting the control command C3 to the fourth on-off valve 13d, the controller 8, using the air supplier 9, supplies the fourth air to the discharge opening 49. The fourth air that has been supplied to the discharge opening 49 is partially injected from the air injection opening OP1, and the fourth air that has been supplied to the discharge opening 49 is partially collected by the collector 7 through the third collection flow channel 73.

By appropriately setting the valve aperture of the third flow control valve 76c and the valve aperture of the fourth flow control valve 96, (1) the third oil-containing fluid containing the oil that has passed through the first bearing 31a without being collected by the first collection flow channel 71 is collected through the third collection flow channel 73, (2) the oil being mixed into the air to be injected from the air injection opening OP1 is prevented, or eliminated or minimized, and (3) an air curtain is suitably formed with the air injected from the air injection opening OP1.

### (First Rotational Driver 5)

In the example illustrated in FIG. 17, the spindle lubricator 1 of the machine tool includes a first rotational driver 5, which rotates the rotation body 2 (more specifically, the rotation shaft 20) about the first axis AX1. The first rotational driver 5 may be a first motor. In the example illustrated in FIG. 17, the first rotational driver 5 (more specifically, the first motor) includes a stator 51 and a rotor 53. In this case, when electric current is supplied to the stator 51, an electromagnetic action rotates the rotor 53 about the first axis AX1. In the example illustrated in FIG. 17, the stator 51 is fixed to the housing 4, and the rotor 53 is fixed to the rotation body 2 (more specifically, the rotation shaft 20).

In the example illustrated in FIG. 17, the rotor 53 is disposed in a middle portion 23 of the rotation shaft 20. The rotor 53 is disposed further in the second direction DR2 than the first bearing 31a, and is disposed further in the first direction DR1 than the second bearing 36b.

In the example illustrated in FIG. 17, the first rotational driver 5 is disposed inside the housing 4. Alternatively, the first rotational driver 5 may be disposed outside the housing 4. For example, the first rotational driver 5, which is disposed outside the housing 4, may be configured to rotate the rotation body 2 via any power transmission mechanism (for example, a gear, a transmission belt, or any mechanism).

### (Machining Head 10)

The spindle lubricator 1 of the machine tool includes the machining head 10. In an example illustrated in FIG. 19, the machining head 10 includes: (1) the rotation body 2, which holds a tool T; (2) the plurality of bearings 3 including the first bearing 31a and the second bearing 36b; (3) the housing 4, which supports the rotation body 2 to be rotatable about the first axis AX1 via the plurality of bearings 3; and (4) the first rotational driver 5, which rotates the rotation body 2 about the first axis AX1.

### (Rotation Body 2)

In the example illustrated in FIG. 19, the rotation body 2 includes: the rear end portion 22; and the tip end portion 24, which holds the tool T. More specifically, the rotation body 2 (more specifically, the rotation shaft 20) includes: a rotation shaft main body 21; an attachment portion 28 to which the tool T is attached; and a rod-shaped member 291, which is coupled to the attachment portion 28. The rod-shaped member 291 is disposed inside the rotation shaft main body 21. In the example illustrated in FIG. 19, when an attachment portion driver 14 of the machining head 10 presses the rod-shaped member 291 in the first direction DR1, the rod-shaped member 291 and the attachment portion 28 move in the first direction DR1 relative to the rotation shaft main body 21. In this state, it is possible to change the tool T attached to the attachment portion 28 to another tool. After the tool is changed, a bias member 293 (for example, a coned disc spring), which is disposed on the rotation shaft 20, presses the rod-shaped member 291 in the second direction DR2. In this manner, the rod-shaped member 291 and the attachment portion 28 move in the second direction DR2 relative to the rotation shaft main body 21.

In an example illustrated in FIG. 20, the rotation body 2 (more specifically, the rotation shaft main body 21) has an inner circumferential surface 21n in contact with the tool holder HD. The inner circumferential surface 21n is, for example, a tapered surface having a radius that increases further in the first direction DR1.

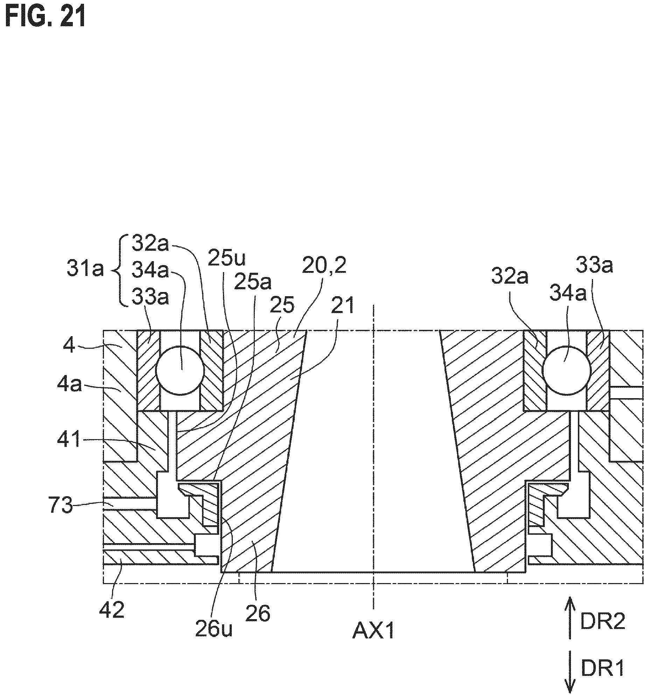

In an example illustrated in FIG. 21, the rotation body 2 (more specifically, the rotation shaft 20) includes a first part 25, a second part 26, and a stepped surface 25a.

The first part 25 supports the inner ring 32a of the first bearing 31a. The first part 25 has a first outer circumferential surface 25u.

The second part 26 has a second outer circumferential surface 26u, which is smaller in diameter than the first outer circumferential surface 25u. In other words, the second outer circumferential surface 26u of the second part 26 is smaller in diameter than the first outer circumferential surface 25u of the first part 25. The second part 26 is disposed further in the first direction DR1 than the first part 25.

The stepped surface 25a connects the first outer circumferential surface 25u of the first part 25 with the second outer circumferential surface 26u of the second part 26.

In the example illustrated in FIG. 21, the first part 25 of the rotation body 2 and the second part 26 of the rotation body 2 are each made up of a part of the rotation shaft main body 21. Alternatively, at least a part of the first part 25 of the rotation body 2 and the second part 26 of the rotation body 2 may be made up of a member other than the rotation shaft main body 21 (for example, an inner ring holding body that is a separate body from the rotation shaft main body 21).

### (Housing 4)

In the example illustrated in FIG. 19, the housing 4 includes: a tip end corresponding part 4a; a rear end corresponding part 4b; and a middle part 4c between the tip end corresponding part 4a and the rear end corresponding part 4b.

As illustrated in FIG. 20, the tip end corresponding part 4a of the housing 4 supports the outer ring of the front bearing 31. In the example illustrated in FIG. 20, the tip end corresponding part 4a of the housing 4 supports the outer ring 33a of the first bearing 31a and the outer ring 33c of the third bearing 31c.

The housing 4 may include a flange 47, which projects outward. In the example illustrated in FIG. 20, the flange 47 is disposed on the tip end corresponding part 4a of the housing 4. An outlet port 71p of the first collection flow channel 71 may be provided on the flange 47. In the example illustrated in FIG. 20, the above-described first pipe line 74a is connected with the outlet port 71p. An outlet port 73p of the third collection flow channel 73 may be provided on the flange 47. In the example illustrated in FIG. 20, the above-described third pipe line 74c is connected with the outlet port 73p. An inlet port 93p of the air supply flow channel 93 may be provided on the flange 47. In the example illustrated in FIG. 20, the above-described air supply pipe 91 is connected with the inlet port 93p. In the example illustrated in FIG. 20, the supply flow channel 66 is provided in the housing 4. In the example illustrated in FIG. 20, the supply flow channel 66 supplies the fluid mixture containing oil and air (more specifically, oil air) to the front bearing including the first bearing 31a and the third bearing 31c.

The rear end corresponding part 4b of the housing 4 supports the outer ring of the rear bearing 36. In the example illustrated in FIG. 19, the rear end corresponding part 4b of the housing 4 supports an outer ring 37b of the second bearing 36b. The rear end corresponding part 4b may include an end plate 40b, which is disposed at an end in the second direction DR2 of the housing 4.

In the example illustrated in FIG. 19, the middle part 4c of the housing 4 includes a side wall 40c having a cylindrical shape. The middle part 4c of the housing 4 (more specifically, the side wall 40c having a cylindrical shape) may support the above-described stator 51.

In the example illustrated in FIG. 21, the housing 4 (more specifically, the tip end corresponding part 4a of the housing 4) includes a third part 41 and a fourth part 42.

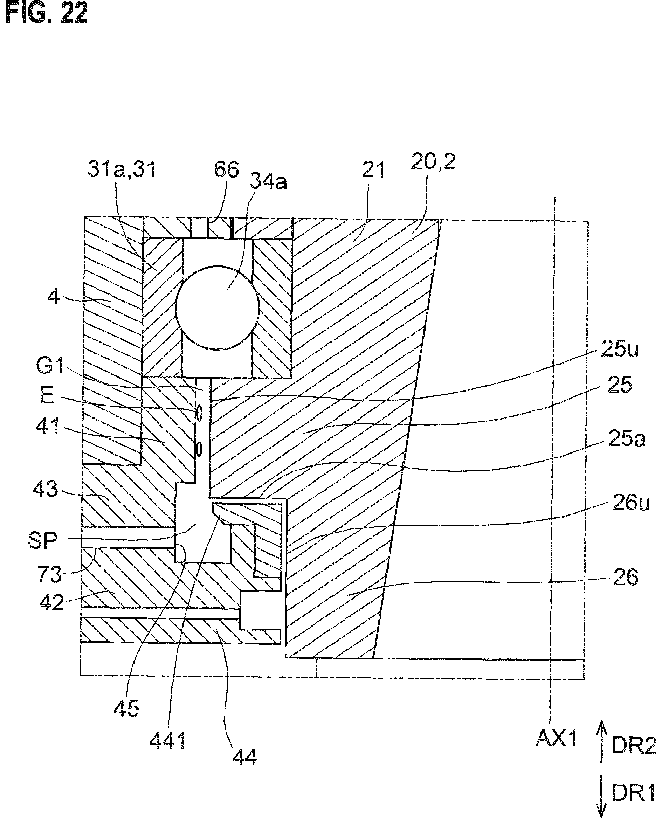

The third part 41 supports the outer ring 33a of the first bearing 31a. As illustrated in FIG. 22, a first gap G1 is formed between the first part 25 of the rotation body 2 and the third part 41 of the housing. In an example illustrated in FIG. 22, the oil E that has passed through the first bearing 31a is present in the first gap G1. In the first gap G1, the oil E may be present in a state of oil air, may be present in a state of oil mist, or may be present in a state of liquid-state oil. In the example illustrated in FIG. 22, the first gap G1 is linear in a vertical cross-section including the first axis AX1. Alternatively, the first gap G1 may have a labyrinth shape in the vertical cross-section including the first axis AX1. Alternatively or additionally, as illustrated in FIG. 23, a cutout CT may be formed on a part of the surface that defines the first gap G1. Such a cutout CT may be formed on the first outer circumferential surface 25u of the rotation body 2, or may be formed on the surface of the third part 41 of the housing 4.

The fourth part 42 defines an annular receiving space SP, which receives the oil E from the first gap G1. In the annular receiving space SP, the oil E may be present in the state of oil air, may be present in the state of oil mist, or may be present in the state of liquid-state oil. The shape of the annular receiving space SP is not limited, and the annular receiving space SP has any shape.

In an example illustrated in FIG. 23, the above-described first gap G1 and the annular receiving space SP are disposed on a straight line LN parallel to the first axis AX1. In this case, the oil E present in the first gap G1 is smoothly guided to the annular receiving space SP.

In the example illustrated in FIG. 23, the fourth part 42 includes an opening portion 45, which guides the oil E from the annular receiving space SP to the third collection flow channel 73.

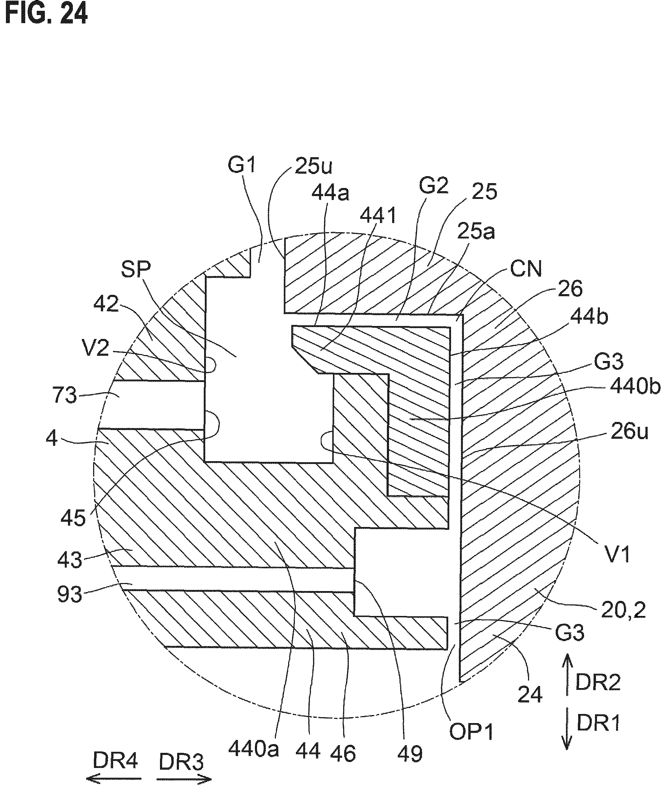

In an example illustrated in FIG. 24, a second gap G2, which is in fluid communication with the first gap G1, is formed between the housing 4 and the stepped surface 25a of the rotation body 2. In addition, a third gap G3, which is in fluid communication with the second gap G2, is formed between the housing 4 and the second outer circumferential surface 26u of the rotation body 2.

A path extending from the first gap G1 to the outside of the machining head 10 is assumed. Such a path can cause leakage of the oil. In an example illustrated in FIG. 24, the second gap G2, which is present between the housing 4 and the stepped surface 25a, is present in the path extending from the first gap G1 to the outside of the machining head 10. Thus, the presence of the second gap G2 eliminates or minimizes leakage of the oil to the outside of the machining head 10 through the above-described path.

In the example illustrated in FIG. 24, the extending direction of the first gap G1 is different from the extending direction of the second gap G2. Thus, the oil in the first gap G1 moving toward the second gap G2 is eliminated or minimized. For example, entering of the oil moving downward from the first gap G1 into the second gap G2 is eliminated or minimized. In the example illustrated in FIG. 24, the extending direction of the first gap G1 corresponds to the first direction DR1, and the extending direction of the second gap G2 corresponds to the radially inward direction DR3 (more specifically, a direction perpendicular to the first axis AX1 and toward the first axis AX1).

In the example illustrated in FIG. 24, the third gap G3 communicates with the second gap G2 through a corner portion CN. In addition, the extending direction of the third gap G3 is different from the extending direction of the second gap G2. In the example illustrated in FIG. 24, the extending direction of the third gap G3 corresponds to the first direction DR1, and the extending direction of the second gap G2 corresponds to the radially inward direction DR3 (more specifically, the direction perpendicular to the first axis AX1 and toward the first axis AX1).

### (Annular Projection Portion 44)

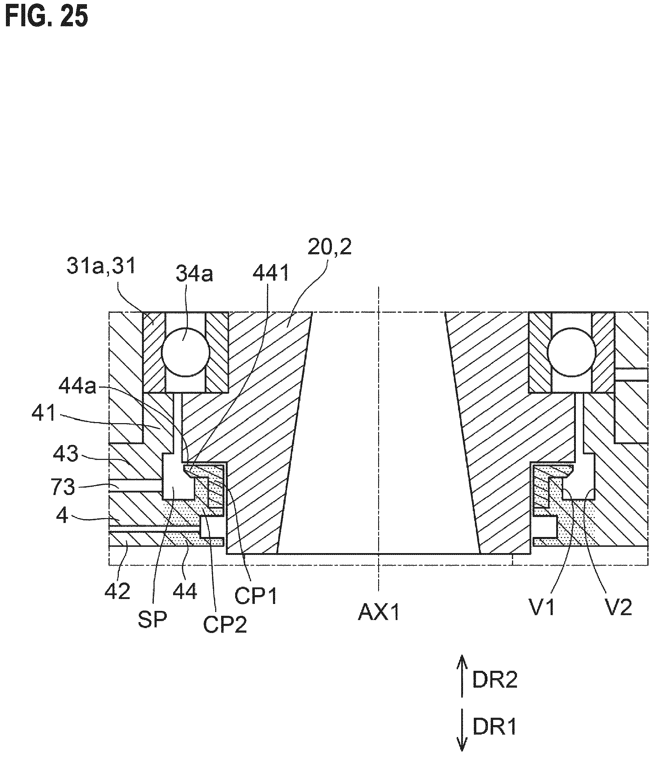

In an example illustrated in FIG. 25, the fourth part 42 includes: a foot portion 43, which is continuous with the third part 41; and an annular projection portion 44, which projects from the foot portion 43 in a direction toward the first axis AX1. It is to be noted that in FIG. 25, in order to facilitate understanding of the shape of the annular projection portion 44, the annular projection portion 44 is hatched with dots.

As illustrated in FIG. 24, the annular protrusion portion 44 has: a first surface 44a, which faces the stepped surface 25a; and a second surface 44b, which faces the outer circumferential surface (in other words, the second outer circumferential surface 26u) of the second part 26 of the rotation body 2.

Additionally, the annular projection portion 44 may include an annular projection 441, which projects in a direction away from the first axis AX1. The annular projection 441 faces both the stepped surface 25a and the annular receiving space SP. In a case where the fourth part 42 (more specifically, the annular projection portion 44 of the fourth part 42) includes the annular projection 441, which projects in the direction away from the first axis AX1, the oil E that has entered the annular receiving space SP hardly flows back toward the second gap G2. Therefore, leakage of the oil from the gap between the rotation body 2 and the tip end portion 46 of the housing 4 to the outside of the machining head 10 is effectively eliminated or minimized.

In the example illustrated in FIG. 25, the housing 4 includes: a first component CP1 (more specifically, a first component CP1 having an annular shape) including the above-described annular projection 441; and a second component CP2 (more specifically, a second component CP2 having an annular shape), which supports the first component CP1. In a case where the first component CP1 including the annular projection 441 is a different component from the second component CP2, design freedom of the internal shape (for example, flexibility in the shape of the annular receiving space SP) in the housing 4 increases.

In the example illustrated in FIG. 25, the first component CP1 and the second component CP2 each have a part that faces the annular receiving space SP. The first component CP1 may have a substantially letter L shape in the vertical cross-section that passes through the first axis AX1, or may have any other shape. The second component CP2 may be an end plate disposed at an end in the first direction DR1 of the housing 4.

In the example illustrated in FIG. 24, the annular projection portion 44 includes: a first wall 440a, which defines a bottom surface of the annular receiving space SP (in other words, an end face in the first direction DR1 of the annular receiving space SP); and a second wall 440b, which defines a second surface 44b facing the second outer circumferential surface 26u of the rotation body 2.

In the example illustrated in FIG. 24, the first wall 440a is an annular wall that is continuous with the foot portion 43 of the fourth part 42 and that extends from the foot portion 43 in the radially inward direction DR3. In addition, the second wall 440b is an annular wall that is continuous with an inner edge portion of the first wall 440a and that extends in the second direction DR2 from the inner edge portion. Further, the annular projection 441 is continuous with an end portion in the second direction DR2 of the second wall 440b, and projects in the radially outward direction DR4 from the end portion.

The annular protrusion portion 44 may include a first annular groove V1. In the example illustrated in FIG. 24, the first annular groove V1 is a groove that faces the annular receiving space SP and that is recessed in the radially inward direction DR3. The first annular groove V1 prevents, or eliminates or minimizes flowing back of the oil in the annular receiving space SP toward the second gap G2.

In the example illustrated in FIG. 24, the fourth part 42 of the housing 4 includes a second annular groove V2. The second annular groove V2 is a groove that faces the annular receiving space SP and that is recessed in the radially outward direction DR4 (in other words, a direction away from the first axis AX1). In the example illustrated in FIG. 24, the second annular groove V2 is disposed in the fourth part 42 of the housing 4 so as to face the first annular groove V1.

In FIG. 26, in order to facilitate understanding of the shapes of the first annular groove V1 and the second annular groove V2, portions other than the first annular groove V1 and the second annular groove V2 are indicated by broken lines, and the first annular groove V1 and the second annular groove V2 are indicated by solid lines. In an example illustrated in FIG. 26, the oil is receivable in both the first annular groove V1 and the second annular groove V2. In this case, the annular receiving space SP includes a space defined by the first annular groove V1 and a space defined by the second annular groove V2, and it becomes possible to increase the entire volume of the annular receiving space SP.

In the example illustrated in FIG. 26, the annular projection portion 44 has a third surface 44f, which constitutes a part of an end face 4f of the housing 4 in the first direction DR1. Such a third surface 44f is a surface at one end of the above-described first wall 440a in the first direction DR1.

### (Air Injection Opening OP1 and Discharge Opening 49)

In the example illustrated in FIG. 24, the air injection opening OP1, which communicates with the third gap G3, is formed between the tip end portion 46 of the housing 4 and the rotation body 2.

In addition, in the housing 4, the air supply flow channel 93 through which the fourth air supplied from the air supply pipe 91 flows, and the discharge opening 49, which discharges the fourth air, are formed. The discharge opening 49 discharges the fourth air received from the air supply flow channel 93 to the third gap G3 so as to form a first air flow toward the second gap G2 from the third gap G3 and a second air flow toward the air injection opening OP1 from the third gap G3.

The fourth air injected from the air injection opening OP1 prevents foreign matters such as cutting chips from entering the machining head 10 through the third gap G3 or any gap. More specifically, the fourth air injected from the air injection opening OP1 forms the air curtain AC around the tool T or the tool holder HD. Such an air curtain prevents foreign matters such as the cutting chips from entering the machining head 10 through the third gap G3 or any gap.

In the example illustrated in FIG. 24, the fourth air that flows toward the second gap G2 from the third gap G3 prevents the oil E from entering the second gap G2 from the first gap G1 or the annular receiving space SP. In addition, the fourth air that flows toward the second gap G2 from the third gap G3 pushes back the oil that has entered the second gap G2 toward the annular receiving space SP.

It is to be noted that at least part of the fourth air that flows toward the second gap G2 from the third gap G3 reaches the annular receiving space SP. The air that has reached the annular receiving space SP is collected through the third collection flow channel 73.

The air that has not been collected by the first collection flow channel 71, the second collection flow channel 72, the third collection flow channel 73, or any flow channel (or the air containing a small amount of oil) is discharged to the outside of the machining head 10 through a gap in the machining head 10 (see the broken line arrows in FIG. 19).

### (Third Embodiment)

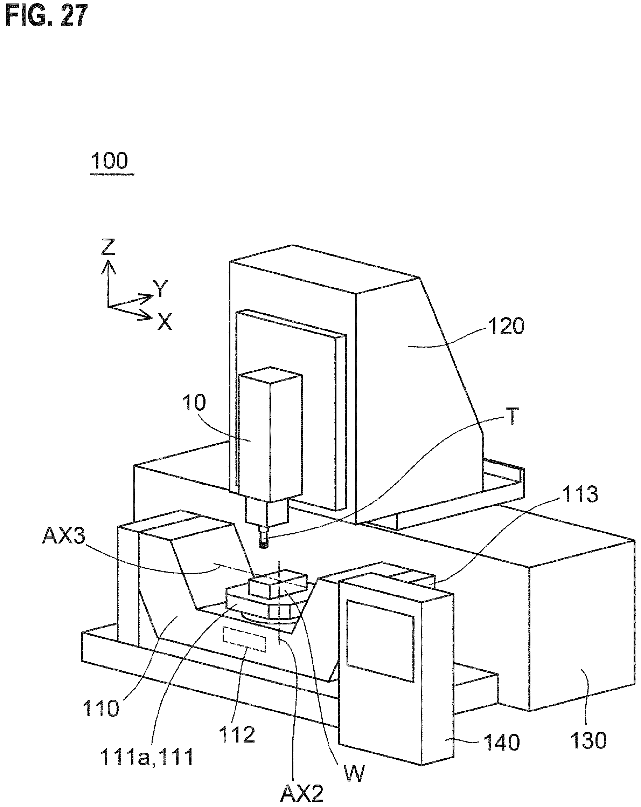

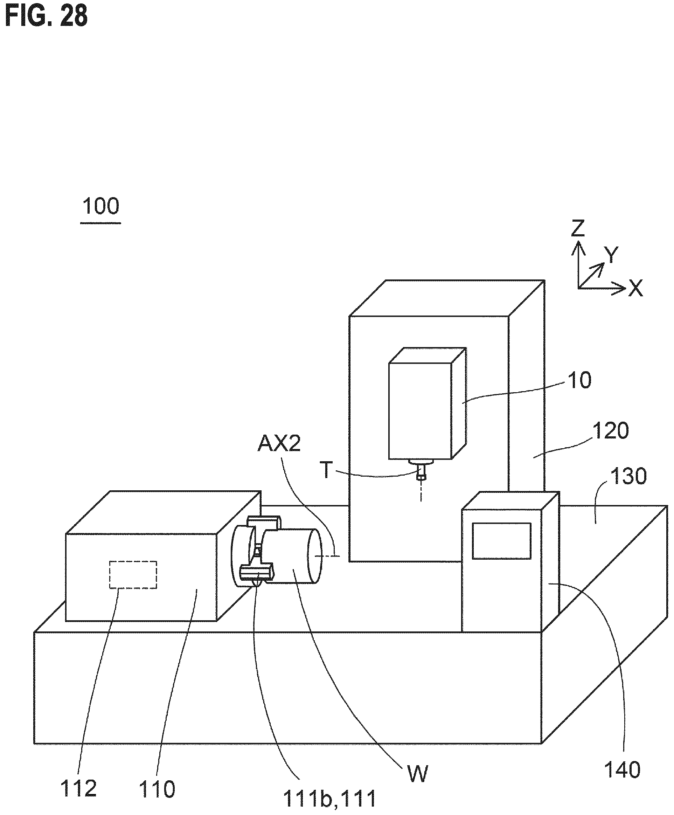

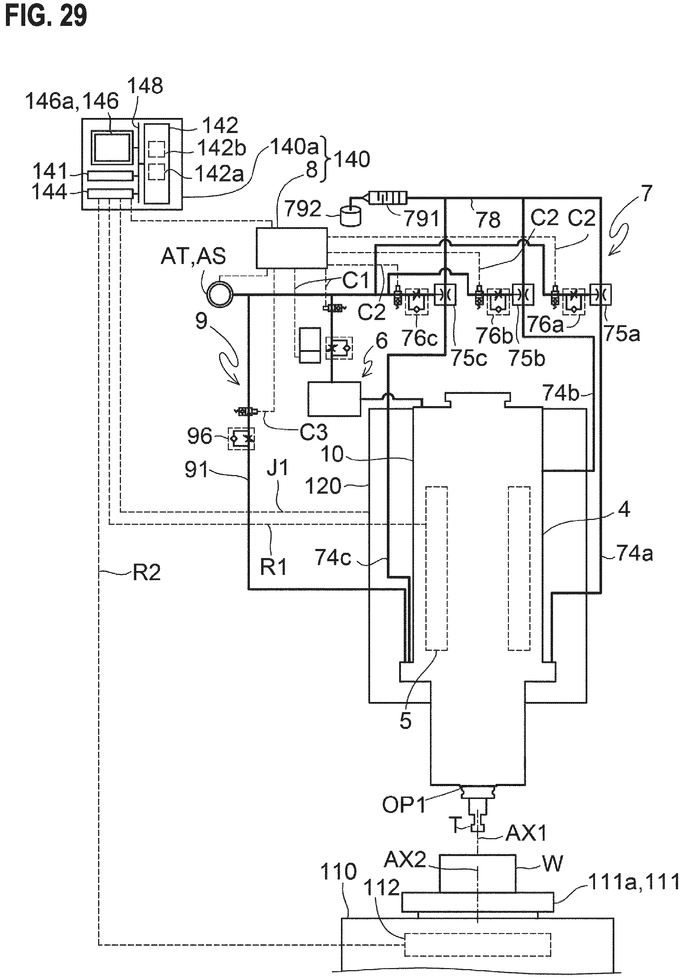

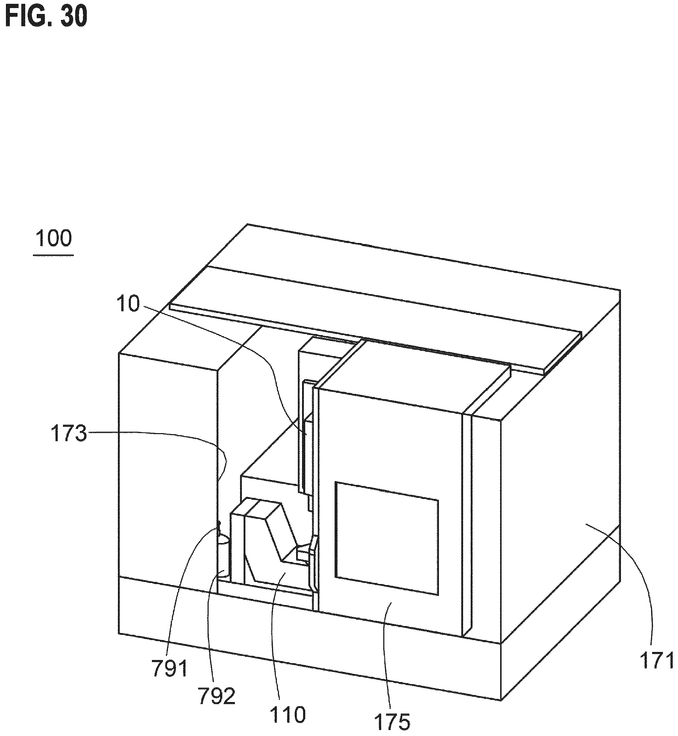

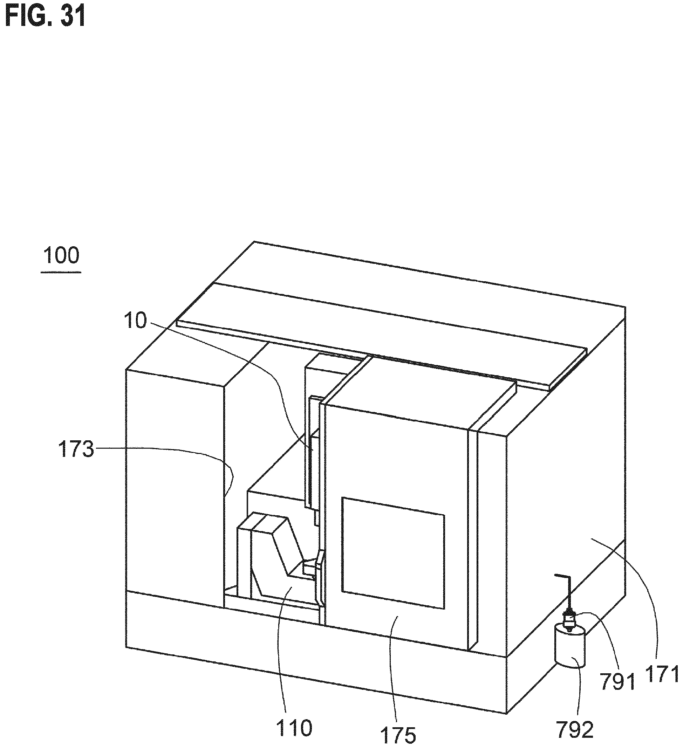

A machine tool 100 according to a third embodiment will be described with reference to FIGs. 1 to 31. FIG. 27 is a schematic perspective view of an example of the machine tool 100 according to a third embodiment, schematically illustrating the example of the machine tool. FIG. 28 is a schematic perspective view of another example of the machine tool 100 according to the third embodiment, schematically illustrating another example of the machine tool. FIG. 29 is a schematic illustration of a state in which a controller 140 is capable of controlling a plurality of pieces of equipment to be controlled. FIG. 30 is a view for describing an example of an arrangement of a collection container 792. FIG. 31 is a view for describing another example of the arrangement of the collection container 792.

In the third embodiment, differences from the first embodiment and the second embodiment will be mainly described. On the other hand, in the third embodiment, repeated descriptions of the matters that have been described in the first embodiment or the second embodiment will be omitted. Therefore, it is needless to say that the matters that have been described in the first embodiment or the second embodiment are applicable to the third embodiment, even though they are not explicitly described in the third embodiment.

As illustrated in FIGs. 27 and 29, the machine tool 100 according to the third embodiment includes: a machining head 10; a fluid mixture supplier 6; a collector 7; a workpiece holder 110, which supports a workpiece W; a mover 120, which moves the machining head 10 relative to the workpiece holder 110; and a controller 140.

Since the machining head 10, the fluid mixture supplier 6, and the collector 7 have been described in the first embodiment or the second embodiment, the repeated descriptions of these configurations will be omitted.

### (Workpiece Holder 110)

In an example illustrated in FIG. 27, the workpiece holder 110 includes: a support 111 (more specifically, a table 111a), which supports the workpiece W; and a second rotational driver 112, which rotates the support 111 (more specifically, the table 111a) about a second axis AX2. The workpiece holder 110 may include a tilter 113, which tilts the table 111a about an axis AX3, which is perpendicular to the second axis AX2.

Alternatively, as illustrated in FIG. 28, the workpiece holder 110 may include: a chuck 111b, which holds the workpiece W; and a second rotational driver 112, which rotates the chuck 111b about the second axis AX2.

### (Mover 120)

The mover 120 moves the machining head 10 relative to the workpiece holder 110. The mover 120 may be an apparatus capable of moving the machining head 10 three-dimensionally. The mover 120 may be capable of moving the machining head 10 along Z axis parallel to the vertical direction. The mover 120 may be capable of moving the machining head 10 along X axis parallel to the horizontal direction. The mover 120 may also be capable of moving the machining head 10 along Y axis perpendicular to both X axis and Z axis. In the examples illustrated in FIGs. 27 and 28, the machining head 10 is supported by a base 130 via the mover 120.

### (Controller 140)

The controller 140 controls at least the first rotational driver 5, the fluid mixture supplier 6, and the mover 120. Additionally, the controller 140 may control the collector 7.

As illustrated in FIG. 29, the controller 140 includes: a hardware processor 141 (hereinafter, simply referred to as the "processor 141"); a memory 142; a communication circuit 144; and an inputter 146 (for example, a display 146a equipped with a touch panel). The processor 141, the memory 142, the communication circuit 144, and the inputter 146 are connected with one another through a bus 148.

The memory 142 stores data 142a, which is necessary for machining a workpiece, and a program 142b for operating each component of the machine tool 100. The memory 142 is a storage medium to be readable by the processor 141 of the controller 140. The memory 142 may be, for example, a non-volatile or volatile semiconductor memory such as a RAM, a ROM, or a flash memory, may be a magnetic disk, or may be a memory in any other format.

The inputter 146 is not limited to the display 146a which is equipped with the touch panel. For example, the controller 140 may include the inputter 146 such as a button, a switch, a lever, a pointer, or a keyboard, and a display for displaying data that has been input into the inputter 146 or any other information. The memory 142 may also be distributed in a plurality of locations. For example, the memory 142 may be partially included in a cloud storage.

A plurality of computers may also cooperate with each other to function as the controller 140. In an example illustrated in FIG. 29, the controller 140 includes: a main controller 140a; and the above-described controller 8. In other words, the main controller 140a and the controller 8 cooperate with each other to function as the controller 140. The controller 8 operates, based on a command received from the main controller 140a. It is to be noted that in a case where the functions of the controller 8 that have been described in the first embodiment or the second embodiment are incorporated in the main controller 140a, the controller 8 is omitted. In other words, the main controller 140a itself functions as the controller 8.

In the example illustrated in FIG. 29, when the controller 140 transmits the first group of control commands C1 to the fluid mixture supplier 6, the fluid mixture supplier 6, which receives the first group of control commands C1, supplies the fluid mixture to the plurality of bearings 3 at the first flow rate. In this manner, the fluid mixture containing oil and air is supplied to the plurality of bearings 3.

In the example illustrated in FIG. 29, when the controller 140 transmits the second group of control commands C2 to the collector 7, the collector 7, which receives the second group of control commands C2, collects the oil-containing fluid.

For example, the collector 7, which receives the second group of control commands C2, supplies the first air to the first ejector 75a. The first air generates negative pressure in the first pipe line 74a, and such negative pressure sucks the first oil-containing fluid from the first collection flow channel 71 through the first pipe line 74a. In a case where the valve aperture of the first flow control valve 76a is set to a first valve aperture, the insufficient lubrication of the bearings due to the suction force of the first ejector 75a does not occur.

For example, the collector 7, which receives the second group of control commands C2, supplies the second air to the second ejector 75b. The second air generates negative pressure in the second pipe line 74b, and such negative pressure sucks the second oil-containing fluid from the second collection flow channel 72 through the second pipe line 74b. In a case where the valve aperture of the second flow control valve 76b is set to a second valve aperture, the insufficient lubrication of the bearings due to the suction force of the second ejector 75b does not occur.

For example, the collector 7, which receives the second group of control commands C2, supplies the third air to the third ejector 75c. The third air generates negative pressure in the third pipe line 74c, and such negative pressure sucks the third oil-containing fluid from the third collection flow channel 73 through the third pipe line74c.

In the example illustrated in FIG. 29, when the controller 140 transmits a control command C3 to the air supplier 9, the air supplier 9, which receives the control command C3, supplies the fourth air to the discharge opening 49, which is formed in the housing 4.

The fourth air discharged from the discharge opening 49 is partially injected from the air injection opening OP1. An air curtain is formed of the air injected from the air injection opening OP1. In addition, the fourth air discharged from the discharge opening 49 is partially collected by the collector 7 through the third collection flow channel 73.

In the example illustrated in FIG. 29, when the controller 140 transmits a first movement command J1 to the mover 120, the mover 120, which receives the first movement command J1, moves the machining head 10 relative to the workpiece holder 110. In this manner, it becomes possible to move the tool T held by the rotation body 2 toward the workpiece W.

In the example illustrated in FIG. 29, when the controller 140 transmits a first rotation command R1 to the first rotational driver 5, the first rotational driver 5, which receives the first rotation command R1, rotates the rotation body 2 about the first axis AX1. In this manner, it becomes possible to machine the workpiece W with the tool T held by the rotation body 2.

The controller 140 may be capable of controlling the second rotational driver 112. For example, when the controller 140 transmits a second rotation command R2 to the second rotational driver 112, the second rotational driver 112, which receives the second rotation command R2, rotates the support 111, which supports the workpiece W, about the second axis AX2.

When the processor 141 of the controller 140 executes the program 142b stored in the memory 142, the controller 140 generates a control command. In addition, the communication circuit 144 transmits such a control command to the equipment to be controlled (more specifically, the first rotational driver 5, the mover 120, the fluid mixture supplier 6, the collector 7, the air supplier 9, and the second rotational driver 112). In this manner, the processor 141 executes the program 142b, and thus the controller 140 is capable of controlling the first rotational driver 5, the mover 120, the fluid mixture supplier 6, the collector 7, the air supplier 9, and the second rotational driver 112.

### (Arrangement of Collection Container 792)

In an example illustrated in FIG. 30, in a plan view, the machine tool 100 includes: an outer wall 171, which surrounds the workpiece holder 110 and the machining head 10; an opening portion 173, which is formed on the outer wall 171, and through which a workpiece to be carried into the workpiece holder 110 passes; and a door 175, which opens and closes the opening portion 173.

In the example illustrated in FIG. 30, the collection container 792 is disposed at a position within reach of an operator from the outside of the machine tool through the opening portion 173. In other words, the collection container 792 is disposed in the vicinity of the opening portion 173. In this case, the operator is able to easily take out the drain oil that has been collected in collection container 792 from machine tool 100. Alternatively, as illustrated in FIG. 31, the collection container 792 may be disposed outside the outer wall 171.

In a case where the collection container 792 is disposed in the vicinity of the opening portion 173, or in a case where it is disposed outside the outer wall 171, the pipe line extending to the collection container 792 from the machining head 10 is long. As the pipe line becomes longer, the pressure loss of the fluid that flows through the pipe line increases, and it becomes more difficult to optimize the lubrication in each of the plurality of bearings. According to the third embodiment, it is possible to individually set the suction force to be exerted by each ejector. Therefore, even in a case where the pipe line to the collection container 792 is long, it becomes possible to optimize the lubrication in each of the plurality of bearings by appropriately setting each suction force. In particular, by setting the valve apertures of the flow control valves (75a, 75b, and the like) in consideration of the above-described first condition CD1 and second condition CD2 (or the above-described third condition CD3 and fourth condition CD4), it becomes possible to easily and appropriately set each suction force to be exerted by each ejector.

### (Use Method of Machine Tool)

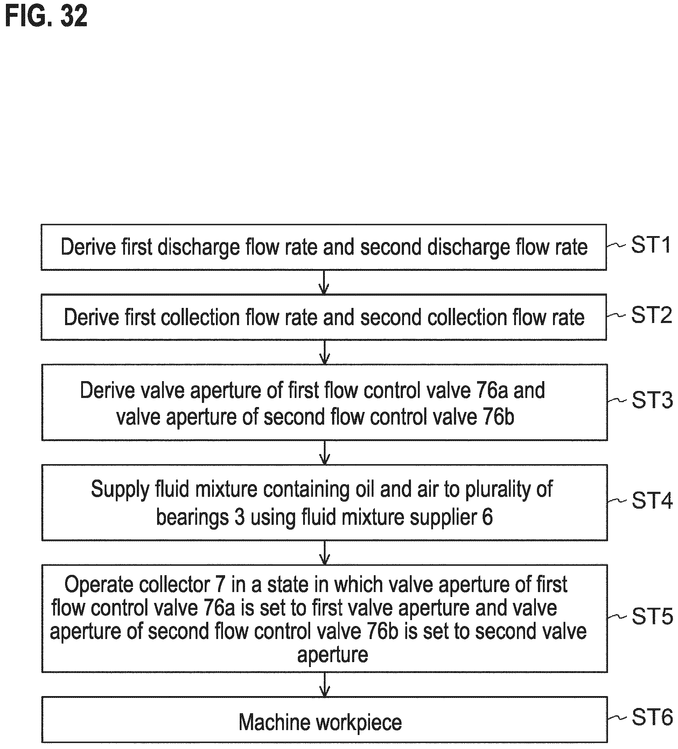

A use method of a machine tool according to one embodiment will be described with reference to FIGs. 1 to 32. FIG. 32 is a flowchart of an example of the use method of the machine tool according to one embodiment.

The machine tool used in the use method of the machine tool is, for example, the machine tool 100 according to the third embodiment. Since the machine tool 100 and the constituent elements of the machine tool 100 have been described in the first embodiment to the third embodiment, repeated descriptions of the machine tool 100 and the constituent elements of the machine tool 100 will be omitted.

In a first step ST1, the above-described first discharge flow rate and the above-described second discharge flow rate are derived. The first step ST1 is a discharge flow rate derivation step.

Under the above-described second condition CD2 (see FIG. 5 or FIG. 9), the discharge flow rate derivation step (first step ST1) includes deriving a first discharge flow rate through measurement or simulation, in a case where the first discharge flow rate is defined as a flow rate of the first oil-containing fluid discharged to the outside of the first collection flow channel 71 (for example, to the outside of the housing 4) from the first collection flow channel 71.

Under the above-described second condition CD2 (see FIG. 5 or FIG. 9), the discharge flow rate derivation step (first step ST1) includes deriving a second discharge flow rate through measurement or simulation, in a case where the second discharge flow rate is defined as a flow rate of the second oil-containing fluid discharged to the outside of the second collection flow channel 72 (for example, to the outside of the housing 4) from the second collection flow channel 72.

It is to be noted that in a case where the machine tool 100 includes the third collection flow channel 73, the air supply flow channel 93, and the air injection opening OP1, the discharge flow rate derivation step (first step ST1) may include deriving the first discharge flow rate through measurement or simulation, in the case where the first discharge flow rate is defined as a flow rate of the first oil-containing fluid discharged to the outside of the first collection flow channel 71 (for example, to the outside of the housing 4) from the first collection flow channel 71, under the above-described fourth condition CD4 (see FIG. 16, and it is to be noted that the fourth condition CD4 is an aspect of the second condition CD2). In addition, under the above-described fourth condition CD4 (see FIG. 16), the discharge flow rate derivation step (first step ST1) may include deriving the second discharge flow rate through measurement or simulation, in the case where the second discharge flow rate is defined as a flow rate of the second oil-containing fluid discharged to the outside of the second collection flow channel 72 (for example, to the outside of the housing 4) from the second collection flow channel 72.

In a second step ST2, the above-described first collection flow rate and the above-described second collection flow rate are derived. The second step ST2 is a collection flow rate derivation step.

Under the above-described first condition CD1 (see FIG. 4 or FIG. 8), the collection flow rate derivation step (second step ST2) includes deriving a first collection flow rate through measurement or simulation, in a case where the first collection flow rate is defined as a flow rate of the first oil-containing fluid flowing through the first pipe line 74a.

Under the above-described first condition CD1 (see FIG. 4 or FIG. 8), the collection flow rate derivation step (second step ST2) includes deriving a second collection flow rate through measurement or simulation, in a case where the second collection flow rate is defined as a flow rate of the second oil-containing fluid flowing through the second pipe line 74b.

It is to be noted that in a case where the machine tool 100 includes the third collection flow channel 73, the air supply flow channel 93, and the air injection opening OP1, the first collection flow rate derivation step (second step ST2) may include deriving the first collection flow rate through measurement or simulation, in a case where the first collection flow rate is defined as a flow rate of the first oil-containing fluid flowing through the first pipe line 74a, under the above-described third condition CD3 (see FIG. 15, and it is to be noted that the third condition CD3 is an aspect of the first condition CD1). Further, under the above-described third condition CD3 (see FIG. 15), the collection flow rate derivation step (second step ST2) may include deriving the second collection flow rate through measurement or simulation, in a case where the second collection flow rate is defined as a flow rate of the second oil-containing fluid flowing through the second pipe line 74b.

In a third step ST3, the valve aperture of the first flow control valve 76a and the valve aperture of the second flow control valve 76b are derived. The third step ST3 is a valve aperture derivation step.

The valve aperture derivation step (third step ST3) includes deriving the first valve aperture of the first flow control valve 76a so that the ratio of the first collection flow rate to the first discharge flow rate falls within a predetermined range. For example, the valve aperture derivation step includes deriving the first valve aperture of the first flow control valve 76a so that the above-described first collection flow rate falls within a range between equal to or higher than 1 time and equal to or lower than 1.5 times the above-described first discharge flow rate (more preferably, so that the above-described first collection flow rate falls within a range between equal to or higher than 1 time and equal to or lower than 1.2 times the above-described first discharge flow rate). Such a first valve aperture may be derived, based on a correlation between the valve aperture of the first flow control valve 76a and the first collection flow rate. Alternatively, the first valve aperture may be derived through trial and error.

The valve aperture derivation step (third step ST3) includes deriving the second valve aperture of the second flow control valve 76b so that the ratio of the second collection flow rate to the second discharge flow rate falls within a predetermined range. For example, the valve aperture derivation step includes deriving the second valve aperture of the second flow control valve 76b so that the above-described second collection flow rate falls within a range between equal to or higher than 1 time and equal to or lower than 1.5 times the above-described second discharge flow rate (more preferably, so that the above-described second collection flow rate falls within a range between equal to or higher than 1 time and equal to or lower than 1.2 times the above-described second discharge flow rate). Such a second valve aperture may be derived, based on a correlation between the valve aperture of the second flow second flow control valve 76b and the second collection flow rate. Alternatively, the second valve aperture may be derived through trial and error.

It is to be noted that in a case where the machine tool 100 includes the third collection flow channel 73, the air supply flow channel 93, and the air injection opening OP1, the valve aperture derivation step (third step ST3) may include deriving the valve aperture of the third flow control valve 76c (hereinafter, referred to as a "third valve aperture") and the valve aperture of the fourth flow control valve 96 (hereinafter, referred to as a "fourth valve aperture") so that the flow rate of the fourth air discharged from the discharge opening 49 (see FIG. 14) is set to be higher than the flow rate of air injected from the air injection opening OP1 (see FIG. 14).

More specifically, the valve aperture derivation step (third step ST3) may include deriving the third valve aperture of the third flow control valve 76c and the fourth valve aperture of the fourth flow control valve 96 so that (1) the flow rate of the fourth air discharged from the discharge opening 49 (see FIG. 14) is higher than the flow rate of the air injected from the air injection opening OP1 (see FIG. 14), and (2) the flow rate of the air injected from the air injection opening OP1 is equal to or higher than the above-described third flow rate (more specifically, equal to or higher than a flow rate of the design lower limit for forming the air curtain).

The above-described first step ST1 to third step ST3 are performed, for example, before the spindle lubricator 1 (or the machine tool 100) is shipped to a customer. More specifically, the above-described first step ST1 to third step ST3 are performed before the machine tool 100 is installed in a factory of a customer. In addition, for example, after the machine tool 100 is installed in a factory of a customer, a fourth step ST4 to a sixth step ST6, which will be described later, are performed. More specifically, the fourth step ST4 to sixth step ST6, which will be described later, are performed when the machine tool 100 machines a workpiece.

In the fourth step ST4, a fluid mixture containing oil and air is supplied to the plurality of bearings 3. The fourth step ST4 is a fluid mixture supply step. The fluid mixture supply step is performed using the fluid mixture supplier 6.

In the fifth step ST5, the collector 7 is operated. The fifth step ST5 is a collector operation step. The collector operation step includes operating the collector 7 in a state in which the valve aperture of the first flow control valve 76a is set to the above-described first valve aperture and the valve aperture of the second flow control valve 76b is set to the above-described second valve aperture. It is to be noted that in a case where the machine tool 100 includes the third collection flow channel 73, the collector operation step includes collecting, through the third collection flow channel 73, the third oil-containing fluid containing oil that has passed through the first bearing 31a without being collected by the first collection flow channel 71. More specifically, the collector operation step may include operating the collector 7 in a state in which the valve aperture of the third flow control valve 76c is set to the above-described third valve aperture.

In the sixth step ST6, the workpiece is machined. The sixth step ST6 is a workpiece machine step. In the workpiece machine step, the workpiece W is machined by the tool T, which is held by the rotation body 2 and which is rotated about the first axis AX1.

The fourth step ST4 to the sixth step ST6 are performed in parallel. More specifically, while the workpiece machine step is being performed, the collector 7 is operated in a state in which the fluid mixture containing oil and air is supplied to the plurality of bearings 3 using the fluid mixture supplier 6, the valve aperture of the first flow control valve 76a is set to the above-described first valve aperture, and the valve aperture of the second flow control valve 76b is set to the above-described second valve aperture.

In a case where the collector 7 is operated in a state in which the valve aperture of the first flow control valve 76a is set to the above-described first valve aperture, the first oil-containing fluid is suitably collected through the first collection flow channel 71 and the first pipe line 74a. In addition, the insufficient lubrication of the bearings due to the suction force of the first ejector 75a does not occur. It is to be noted that the first oil-containing fluid that has passed through the first ejector 75a is preferably fed to the exhaust cleaner 791 through the exhaust pipe line 78.

When the collector 7 is operated in a state in which the valve aperture of the second flow control valve 76b is set to the above-described second valve aperture, the second oil-containing fluid is suitably collected through the second collection flow channel 72 and the second pipe line 74b. In addition, the insufficient lubrication of the bearings due to the suction force of the second ejector 75b does not occur. It is to be noted that the second oil-containing fluid that has passed through the second ejector 75b is preferably fed to the exhaust cleaner 791 through the exhaust pipe line 78.

It is to be noted that in a case where the machine tool 100 includes the air supply flow channel 93 and the air injection opening OP1, the workpiece machine step (the sixth step ST6) is preferably performed in a state in which (1) the fourth air is supplied to the air supply flow channel 93, which is provided in the housing, (2) the fourth air is partially injected as an air curtain from the air injection opening OP1, which is formed between the rotation body 2 and the tip end portion 46 of the housing 4, and (3) the flow rate of the fourth air supplied to the air supply flow channel 93 is higher than the flow rate of the air injected from the air injection opening OP1.

More specifically, the collector 7 is preferably operated in a state in which the valve aperture of the third flow control valve 76c is set to the above-described third valve aperture, and the air supplier 9 is preferably operated in a state in which the valve aperture of the fourth flow control valve 96 is set to the above-described fourth valve aperture. When the collector 7 is operated in a state in which the valve aperture of the third flow control valve 76c is set to the above-described third valve aperture, the third oil-containing fluid containing the oil that has passed through the first bearing 31a without being collected by the first collection flow channel 71 is collected through the third collection flow channel 73 when the workpiece machine step (sixth step ST6) is performed. In addition, when the collector 7 is operated in a state in which the valve aperture of the third flow control valve 76c is set to the above-described third valve aperture and the air supplier 9 is operated in a state in which the valve aperture of the fourth flow control valve 96 is set to the above-described fourth valve aperture, (1) the oil being mixed into the air injected from the air injection opening OP1 is prevented, or eliminated or minimized, and (2) the air curtain is suitably formed with the air injected from the air injection opening OP1.

The present invention is not limited to the above-described embodiments or modifications, and it is apparent that the embodiments or modifications can be appropriately modified or changed within the scope of the appended claims.

For example, in the example illustrated in FIG. 27, the machine tool 100 is a vertical machining center. Alternatively, the machine tool 100 according to one embodiment may be a horizontal machining center. Further, the machine tool 100 may be a multitasking machine capable of performing machining other than cutting.

### Description of the Reference Numerical

1, 1A, 1A', 1B ... Spindle lubricator, 2 ... Rotation body, 3 ... Bearing, 4 ... Housing, 4a ... Tip end corresponding part of housing, 4b ... Rear end corresponding part of housing, 4c ... Middle part of housing, 4f ... End face of housing, 5 ... First rotational driver, 6 ... Fluid mixture supplier, 7 ... Collector, 8 ... Controller, 9 ... Air supplier, 10 ... Machining head, 11a ... First flow meter, 11b ... Second flow meter, 12 ... Main air flow channel, 13 ... On-off valve, 13a ... First on-off valve, 13b ... Second on-off valve, 13c ... Third on-off valve, 13d ... Fourth on-off valve, 13e ... Fifth on-off valve, 14 ... Attachment portion driver, 20 ... Rotation shaft, 21 ... Rotation shaft main body, 21n ... Inner circumferential surface of rotation body, 22 ... Rear end portion of rotation body, 23 ... Middle portion of rotation body, 24 ... Tip end portion of rotation body, 25 ... First part of rotation body, 25a ... Stepped surface of rotation body, 25u ... First outer circumferential surface, 26 ... Second part of rotation body, 26u ... Second outer circumferential surface, 28 ... Attachment portion, 31 ... Front bearing, 31a ... First bearing, 31c ... Third bearing, 32a, 32c ... Inner ring, 33a, 33c ... Outer ring, 34a, 34c ... Rolling element, 36 ... Rear bearing, 36b ... Second bearing, 37b ... Outer ring, 40b ... End plate of housing, 40c ... Side wall of housing, 41 ... Third part of housing, 42 ... Fourth part of housing, 43 ... Foot portion of fourth part, 44 ... Annular projection portion, 44a ... First surface, 44b ... Second surface, 44f ... Third surface, 45 ... Opening portion, 46 ... Tip end portion of housing, 47 ... Flange, 49 ... Discharge opening, 51 ... Stator, 53 ... Rotor, 61 ... Oil tank, 62 ... Pump, 63 ... Second air supply pipe, 64 ... Mixer, 66 ... Supply flow channel, 67 ... Fifth flow control valve, 68 ... Fluid mixture supply pipe, 71 ... First collection flow channel, 71p ... Outlet port, 72 ... Second collection flow channel, 73 ... Third collection flow channel, 73p ... Outlet port, 74 ... Pipe line, 74a ... First pipe line, 74b ... Second pipe line, 74c ... Third pipe line, 75 ... Ejector, 75' ... Negative pressure generator, 75a ... First ejector, 75b ... Second ejector, 75c ... Third ejector, 76a ... First flow control valve, 76b ... Second flow control valve, 76c ... Third flow control valve, 77a ... First air flow channel, 77b ... Second air flow channel, 77c ... Third air flow channel, 78 ... Exhaust pipe line, 80 ... Processor, 82 ... Memory, 84 ... Communication circuit, 88 ... Bus, 91 ... Air supply pipe, 93 ... Air supply flow channel, 93p ... Inlet port, 96 ... Fourth flow control valve, 100 ... Machine tool, 110 ... Workpiece support, 111 ... Support, 111a ... Table, 111b ... Chuck, 112 ... Second rotational driver, 113 ... Tilter, 120 ... Mover, 130 ... Base, 140 ... Controller, 140a ... Main controller, 141 ... Hardware processor, 142 ... Memory, 142a ... Data, 142b ... Program, 144 ... Communication circuit, 146 ... Inputter, 146a ... Display equipped with touch panel, 148 ... Bus, 171 ... Outer wall, 173 ... Opening portion, 175 ... Door, 291 ... Rod-shaped member, 293 ... Bias member, 440a ... First wall, 440b ... Second wall, 441 ... Annular projection, 751, 751a, 751b, 751c ... Inlet port, 752, 752a, 752b, 752c ... Outlet port, 753, 753a, 753b, 753c ... Vacuum port, 791 ... Exhaust cleaner, 792 ... Collection container, AC ... Air curtain, AS, AS1, AS2, AT ... Air source, C ... Drive command, C1, C2, C3 ... Control command, CN ... Corner portion, CP1 ... First component, CP2 ... Second component, CT ... Cutout, E, E1 ... Oil, G ... Gap, G1 ... First gap, G2 ... Second gap, G3 ... Third gap, HD ... Tool holder, J1 ... First movement command, OP1 ... Air injection opening, R1 ... First rotation command, R2 ... Second rotation command, SP ... Annular receiving space, T ... Tool, V1 ... First annular groove, V2 ... Second annular groove, W ... Workpiece

## Claims

1. A spindle lubricator (1, 1A, 1A', 1B) of a machine tool (110), the spindle lubricator (1, 1A, 1A', 1B) comprising:
a rotation body (2) that is configured to hold a tool (T);
a plurality of bearings (3, 31, 31a, 31c, 36, 36b) comprising a first bearing (31a) and a second bearing (36b);
a housing (4) that is configured to support the rotation body (2) to be rotatable about a first axis (AX1) via the plurality of bearings (3, 31, 31a, 31c, 36, 36b);
a fluid mixture supplier (6) that is configured to supply a fluid mixture containing oil and air to the plurality of bearings (3, 31, 31a, 31c, 36, 36b); and
a collector (7) that is configured to collect an oil-containing fluid containing the oil,
wherein the collector (7) comprises:
a plurality of collection flow channels (71, 72, 73) that are disposed in the housing (4) and that are configured to collect the oil-containing fluid from the plurality of bearings (3, 31, 31a, 31c, 36, 36b);
a plurality of ejectors (75, 75a, 75b, 75c) disposed outside the housing (4); and
a plurality of flow control valves (67, 76a, 76b, 76c, 96),
wherein the plurality of collection flow channels (71, 72, 73) comprise:
a first collection flow channel (71) that is configured to collect a first oil-containing fluid discharged from at least one bearing (3, 31, 31a, 31c, 36, 36b) mainly including the first bearing (31a); and
a second collection flow channel (72) that is configured to collect a second oil-containing fluid discharged from at least one bearing (3, 31, 31a, 31c, 36, 36b) mainly including the second bearing (36b),
wherein the plurality of ejectors (75, 75a, 75b, 75c) comprise:
a first ejector (75a) that is configured to generate negative pressure with first air supplied from a first air flow channel (77a) and that is configured to suck the first oil-containing fluid from the first collection flow channel (71); and
a second ejector (75b) that is configured to generate negative pressure with second air supplied from a second air flow channel (77b) and that is configured to suck the second oil-containing fluid from the second collection flow channel (72), and
wherein the plurality of flow control valves (67, 76a, 76b, 76c, 96) comprise:
a first flow control valve (76a) that is configured to adjust a flow rate of the first air supplied to the first ejector (75a) from the first air flow channel (77a); and
a second flow control valve (76b) that is configured to adjust a flow rate of the second air supplied to the second ejector (75b) from the second air flow channel (77b).

2. The spindle lubricator (1, 1A, 1A', 1B) of the machine tool (110) according to claim 1, further comprising a plurality of pipe lines (74, 74a, 74b, 74c), the plurality of pipe lines (74, 74a, 74b, 74c) comprising: a first pipe line (74a) that fluidly connects the first collection flow channel (71) with the first ejector (75a); and a second pipe line (74b) that fluidly connects the second collection flow channel (72) with the second ejector (75b),
wherein in a case where a first collection flow rate is defined as a flow rate of the first oil-containing fluid flowing through the first pipe line (74a) under a first condition in which the plurality of pipe lines (74, 74a, 74b, 74c) are respectively in fluid connection with the plurality of collection flow channels (71, 72, 73) and the fluid mixture at a first flow rate is supplied to the plurality of bearings (3, 31, 31a, 31c, 36, 36b) from the fluid mixture supplier (6), and in a case where a first discharge flow rate is defined as a flow rate of the first oil-containing fluid discharged to an outside of the first collection flow channel (71) from the first collection flow channel (71) under a second condition different from the first condition only in that the plurality of pipe lines (74, 74a, 74b, 74c) are in fluid separation from the plurality of collection flow channels (71, 72, 73), the first flow control valve (76a) sets a valve aperture of the first flow control valve (76a) such that the first collection flow rate falls within a range between equal to or higher than 1 time and equal to or lower than 1.5 times the first discharge flow rate, and
wherein in a case where a second collection flow rate is defined as a flow rate of the second oil-containing fluid flowing through the second pipe line (74b) under the first condition, and in a case where a second discharge flow rate is defined as a flow rate of the second oil-containing fluid discharged to an outside of the second collection flow channel (72) from the second collection flow channel (72) under the second condition, the second flow control valve (76b) sets a valve aperture of the second flow control valve (76b) such that the second collection flow rate falls within a range between equal to or higher than 1 time and equal to or lower than 1.5 times the second discharge flow rate.

3. The spindle lubricator (1, 1A, 1A', 1B) of the machine tool (110) according to claim 2,
wherein the plurality of collection flow channels (71, 72, 73) comprise a third collection flow channel (73) that is configured to collect a third oil-containing fluid containing the oil that has passed through the first bearing (31a) without being collected by the first collection flow channel (71),
wherein the plurality of pipe lines (74, 74a, 74b, 74c) comprise a third pipe line (74c) that fluidly connects the third collection flow channel (73) with a third ejector (75c),
wherein the plurality of ejectors (75, 75a, 75b, 75c) comprise the third ejector (75c) that is configured to generate negative pressure in the third pipe line (74c) with third air supplied from a third air flow channel (77c) and that is configured to suck the third oil-containing fluid from the third collection flow channel (73) through the third pipe line (74c), and
wherein the plurality of flow control valves (67, 76a, 76b, 76c, 96) comprise a third flow control valve (76c) that is configured to adjust a flow rate of the third air supplied to the third ejector (75c) from the third air flow channel (77c).

4. The spindle lubricator (1, 1A, 1A', 1B) of the machine tool (110) according to claim 1,
wherein the plurality of collection flow channels (71, 72, 73) comprise a third collection flow channel (73) that is configured to collect a third oil-containing fluid containing the oil that has passed through the first bearing (31a) without being collected by the first collection flow channel (71),
wherein the plurality of ejectors (75, 75a, 75b, 75c) comprise a third ejector (75c) that is configured to generate negative pressure with third air supplied from a third air flow channel (77c) and that is configured to suck the third oil-containing fluid from the third collection flow channel (73), and
wherein the plurality of flow control valves (67, 76a, 76b, 76c, 96) comprise a third flow control valve (76c) that is configured to adjust a flow rate of the third air supplied to the third ejector (75c) from the third air flow channel (77c).

5. The spindle lubricator (1, 1A, 1A', 1B) of the machine tool (110) according to claim 4,
wherein the rotation body (2) comprises:
a rear end portion (22);
a tip end portion (24) that is configured to hold the tool (T);
a first part (25) that is configured to support an inner ring (32a) of the first bearing (31a) and that has a first outer circumferential surface (25u);
a second part (26) that has a second outer circumferential surface (26u) smaller in diameter than the first outer circumferential surface (25u), the second part (26) being disposed further in a first direction (DR1) than the first part (25), in a case where the first direction (DR1) is defined as a direction from the rear end portion (22) toward the tip end portion (24); and
a stepped surface (25a) that connects the first outer circumferential surface (25u) with the second outer circumferential surface (26u),
wherein the housing (4) comprises:
a third part (41) that is configured to support an outer ring (33a) of the first bearing (31a); and
a fourth part (42) that defines an annular receiving space (SP) for receiving the oil from a first gap (G1) between the first part (25) and the third part (41),
wherein the fourth part (42) comprises an opening portion (45) that is configured to guide the oil to the third collection flow channel (73) from the annular receiving space (SP),
wherein a second gap (G2) being in fluid communication with the first gap (G1) is formed between the housing (4) and the stepped surface (25a), and
wherein a third gap (G3) being in fluid communication with the second gap (G2) is formed between the housing (4) and the second outer circumferential surface (26u).

6. The spindle lubricator (1, 1A, 1A', 1B) of the machine tool (110) according to claim 5,
wherein the fourth part (42) comprises an annular projection (44) that projects in a direction away from the first axis (AX1), and
wherein the annular projection (44) faces both the stepped surface (25a) and the annular receiving space (SP).

7. The spindle lubricator (1, 1A, 1A', 1B) of the machine tool (110) according to one of claims 4 to 6, further comprising an air supplier (9), the air supplier (9) comprising:
an air source (AS, AS1, AS2, AT) disposed outside the housing (4);
an air supply flow channel (93) disposed in the housing (4);
an air supply pipe (91) that connects the air source (AS, AS1, AS2, AT) with the air supply flow channel (93) and that is configured to supply fourth air to the air supply flow channel (93); and
a fourth flow control valve (96) that is configured to adjust a flow rate of the fourth air supplied to the air supply flow channel (93) from the air supply pipe (91),
wherein an air injection opening (OP1) is formed between the rotation body (2) and a tip end portion (4a) of the housing (4), and
wherein a discharge opening (49) that is configured to discharge the fourth air received from the air supply flow channel (93) to a gap (G) between the rotation body (2) and the housing (4) to form both a first flow toward the third collection flow channel (73) from the gap (G) and a second flow toward the air injection opening (OP1) from the gap (G).

8. The spindle lubricator (1, 1A, 1A', 1B) of the machine tool (110) according to claim 7, further comprising a plurality of pipe lines (74, 74a, 74b, 74c), the plurality of pipe lines (74, 74a, 74b, 74c) comprising: a first pipe line (74a) that fluidly connects the first collection flow channel (71) with the first ejector (75a); a second pipe line (74b) that fluidly connects the second collection flow channel (72) with the second ejector (75b); and a third pipe line (74c) that fluidly connects the third collection flow channel (73) with the third ejector (75c),
wherein in a case where a first collection flow rate is defined as a flow rate of the first oil-containing fluid flowing through the first pipe line (74a) under a third condition in which the plurality of pipe lines (74, 74a, 74b, 74c) are respectively in fluid connection with the plurality of collection flow channels (71, 72, 73), the fluid mixture at a first flow rate is supplied to the plurality of bearings (3, 31, 31a, 31c, 36, 36b) from the fluid mixture supplier (6), and the fourth air at a second flow rate is supplied to the air supply flow channel (93), and in a case where a first discharge flow rate is defined as a flow rate of the first oil-containing fluid discharged to an outside of the first collection flow channel (71) from the first collection flow channel (71) under a fourth condition different from the third condition only in that the plurality of pipe lines (74, 74a, 74b, 74c) are in fluid separation from the plurality of collection flow channels (71, 72, 73), the first flow control valve (76a) sets a valve aperture of the first flow control valve (76a) such that the first collection flow rate falls within a range between equal to or higher than 1 time and equal to or lower than 1.5 times the first discharge flow rate, and
wherein in a case where a second collection flow rate is defined as a flow rate of the second oil-containing fluid flowing through the second pipe line (74b) under the third condition, and in a case where a second discharge flow rate is defined as a flow rate of the second oil-containing fluid discharged to an outside of the second collection flow channel (72) from the second collection flow channel (72) under the fourth condition, the second flow control valve (76b) sets a valve aperture of the second flow control valve (76b) such that the second collection flow rate falls within a range between equal to or higher than 1 time and equal to or lower than 1.5 times the second discharge flow rate.

9. The spindle lubricator (1, 1A, 1A', 1B) of the machine tool (110) according to claim 8, wherein the third flow control valve (76c) sets a valve aperture of the third flow control valve (76c) and the fourth flow control valve (96) sets a valve aperture of the fourth flow control valve (96) such that a flow rate of the fourth air discharged from the discharge opening (49) is higher than a flow rate of air injected from the air injection opening (OP1).

10. A machine tool (110) comprising:
a machining head (10) comprising: the spindle lubricator (1, 1A, 1A', 1B) according to claim 1; and a first rotational driver (5) that is configured to rotate the rotation body (2) about the first axis (AX1);
a workpiece holder (110) that is configured to support a workpiece (W);
a mover (120) that is configured to move the machining head (10) relative to the workpiece holder (110); and
a controller (140) configured to control at least the first rotational driver (5), the fluid mixture supplier (6), and the mover (120).

11. The machine tool (110) according to claim 10, further comprising:
an outer wall (171) that surrounds the workpiece holder (110) and the machining head (10) in a plan view;
an opening portion (173) which is formed on the outer wall (171) and through which the workpiece (W) to be carried into the workpiece holder (110) is passable; and
a door (175) that is configured to open and close the opening portion (173),
wherein the collector (7) comprises:
an exhaust pipe line (78) that is configured to receive exhaust from the plurality of ejectors (75, 75a, 75b, 75c); and
a collection container (792) being in fluid connection with the exhaust pipe line (78), and
wherein the collection container (792) is either disposed at a position within reach of an operator from an outside of the machine tool (110) through the opening portion (173) or disposed outside the outer wall (171).

12. The machine tool (110) according to claim 10 or 11, further comprising a plurality of pipe lines (74, 74a, 74b, 74c), the plurality of pipe lines (74, 74a, 74b, 74c) comprising: a first pipe line (74a) that fluidly connects the first collection flow channel (71) with the first ejector (75a); and a second pipe line (74b) that fluidly connects the second collection flow channel (72) with the second ejector (75b).

13. The machine tool (110) according to claim 12,
wherein in a case where a first collection flow rate is defined as a flow rate of the first oil-containing fluid flowing through the first pipe line (74a) under a first condition in which the plurality of pipe lines (74, 74a, 74b, 74c) are respectively in fluid connection with the plurality of collection flow channels (71, 72, 73) and the fluid mixture at a first flow rate is supplied to the plurality of bearings (3, 31, 31a, 31c, 36, 36b) from the fluid mixture supplier (6), and in a case where a first discharge flow rate is defined as a flow rate of the first oil-containing fluid discharged to an outside of the first collection flow channel (71) from the first collection flow channel (71) under a second condition different from the first condition only in that the plurality of pipe lines (74, 74a, 74b, 74c) are in fluid separation from the plurality of collection flow channels (71, 72, 73), the first flow control valve (76a) sets a valve aperture of the first flow control valve (76a) such that the first collection flow rate falls within a range between equal to or higher than 1 time and equal to or lower than 1.5 times the first discharge flow rate, and
wherein in a case where a second collection flow rate is defined as a flow rate of the second oil-containing fluid flowing through the second pipe line (74b) under the first condition, and in a case where a second discharge flow rate is defined as a flow rate of the second oil-containing fluid discharged to an outside of the second collection flow channel (72) from the second collection flow channel (72) under the second condition, the second flow control valve (76b) sets a valve aperture of the second flow control valve (76b) such that the second collection flow rate falls within a range between equal to or higher than 1 time and equal to or lower than 1.5 times the second discharge flow rate.

14. A use method of the machine tool (110) according to claim 12, the use method comprising the steps of:
deriving a first discharge flow rate through either measurement or simulation, in a case where the first discharge flow rate is defined as a flow rate of the first oil-containing fluid discharged to an outside of the first collection flow channel (71) from the first collection flow channel (71), under a second condition in which the plurality of pipe lines (74, 74a, 74b, 74c) are in fluid separation from the plurality of collection flow channels (71, 72, 73), and the fluid mixture at a first flow rate is supplied to the plurality of bearings (3, 31, 31a, 31c, 36, 36b) from the fluid mixture supplier (6);
deriving a second discharge flow rate through either measurement or simulation, in a case where the second discharge flow rate is defined as a flow rate of the second oil-containing fluid discharged to an outside of the second collection flow channel (72) from the second collection flow channel (72) under the second condition;
deriving a first collection flow rate through either measurement or simulation, in a case where the first collection flow rate is defined as a flow rate of the first oil-containing fluid flowing through the first pipe line (74a), under a first condition in which the plurality of pipe lines (74, 74a, 74b, 74c) are respectively in fluid connection with the plurality of collection flow channels (71, 72, 73), and the fluid mixture at the first flow rate is supplied to the plurality of bearings (3, 31, 31a, 31c, 36, 36b) from the fluid mixture supplier (6);
deriving a second collection flow rate through either measurement or simulation, in a case where the second collection flow rate is defined as a flow rate of the second oil-containing fluid flowing through the second pipe line (74b) under the first condition;
deriving a first valve aperture of the first flow control valve (76a) for a ratio of the first collection flow rate to the first discharge flow rate to fall within a predetermined range;
deriving a second valve aperture of the second flow control valve (76b) for a ratio of the second collection flow rate to the second discharge flow rate to fall within a predetermined range;
supplying the fluid mixture to the plurality of bearings (3, 31, 31a, 31c, 36, 36b) using the fluid mixture supplier (6);
operating the collector (7) in a state in which a valve aperture of the first flow control valve (76a) is set to the first valve aperture and a valve aperture of the second flow control valve (76b) is set to the second valve aperture; and
machining the workpiece (W) with the tool (T) that is held by the rotation body (2) and that rotates about the first axis (AX1).

15. The use method of the machine tool (110) according to claim 14,
wherein the step of operating the collector (7) comprises collecting, via a third collection flow channel (73), a third oil-containing fluid containing the oil that has passed through the first bearing (31a) without being collected by the first collection flow channel (71), and
wherein the step of machining the workpiece (W) is performed in a state in which
fourth air is supplied to an air supply flow channel (93) disposed in the housing (4),
the fourth air is partially injected as an air curtain (AC) from an air injection opening (OP1) formed between the rotation body (2) and a tip end portion (4a) of the housing (4), and
a flow rate of the fourth air supplied to the air supply flow channel (93) is higher than a flow rate of the air injected from the air injection opening (OP1).

## Patentansprüche

1. Spindelschmiergerät (1, 1A, 1A', 1B) einer Werkzeugmaschine (110), wobei das Spindelschmiergerät (1, 1A, 1A', 1B) Folgendes aufweist:
einen Drehkörper (2), der gestaltet ist, um ein Werkzeug (T) zu halten;
eine Vielzahl von Lagern (3, 31, 31a, 31c, 36, 36b), die ein erstes Lager (31a) und ein zweites Lager (36b) aufweisen;
ein Gehäuse (4), das gestaltet ist, um den Drehkörper (2) über die Vielzahl von Lagern (3, 31, 31a, 31c, 36, 36b) um eine erste Achse (AX1) drehbar zu stützen;
eine Fluidgemischzufuhrvorrichtung (6), die gestaltet ist, um zu der Vielzahl von Lagern (3, 31, 31a, 31c, 36, 36b) ein Öl und Luft haltiges Fluidgemisch zu zuführen; und
eine Sammelvorrichtung (7), die gestaltet ist, um ein ölhaltiges Fluid, das das Öl umfasst, zu sammeln,
wobei die Sammelvorrichtung (7) Folgendes aufweist:
eine Vielzahl von Sammelströmungskanälen (71, 72, 73), die in dem Gehäuse (4) angeordnet sind und gestaltet sind, um das ölhaltige Fluid aus der Vielzahl von Lagern (3, 31, 31a, 31c, 36, 36b) zu sammeln;
eine Vielzahl von Ejektoren (75, 75a, 75b, 75c), die außerhalb des Gehäuses (4) angeordnet sind; und
eine Vielzahl von Strömungssteuerungsventilen (67, 76a, 76b, 76c, 96),
wobei die Vielzahl von Sammelströmungskanälen (71, 72, 73) Folgendes aufweist:
einen ersten Sammelströmungskanal (71), der gestaltet ist, um ein erstes ölhaltiges Fluid zu sammeln, das aus zumindest einem Lager (3, 31, 31a, 31c, 36, 36b), das vor allem das erste Lager (31a) aufweist, abgegeben wird; und
einen zweiten Sammelströmungskanal (72), der gestaltet ist, um ein zweites ölhaltiges Fluid zu sammeln, das aus zumindest einem Lager (3, 31, 31a, 31c, 36, 36b), das vor allem das zweite Lager (36b) aufweist, abgegeben wird,
wobei die Vielzahl von Ejektoren (75, 75a, 75b, 75c) Folgendes aufweist:
einen ersten Ejektor (75a), der gestaltet ist, um mit einer ersten Luft, die aus einem ersten Luftströmungskanal (77a) zugeführt wird, einen Unterdruck zu erzeugen, und der gestaltet ist, um das erste ölhaltige Fluid aus dem ersten Sammelströmungskanal (71) anzusaugen; und
einen zweiten Ejektor (75b), der gestaltet ist, um mit einer zweiten Luft, die aus einem zweiten Luftströmungskanal (77b) zugeführt wird, einen Unterdruck zu erzeugen, und der gestaltet ist, um das zweite ölhaltige Fluid aus dem zweiten Sammelströmungskanal (72) ansaugen, und
wobei die Vielzahl von Strömungssteuerungsventilen (67, 76a, 76b, 76c, 96) Folgendes aufweist:
ein erstes Strömungssteuerungsventil (76a), das gestaltet ist, um eine Strömungsrate der ersten Luft einzustellen, die zu dem ersten Ejektor (75a) aus dem ersten Luftströmungskanal (77a) zugeführt wird; und
ein zweites Strömungssteuerungsventil (76b), das gestaltet ist, um eine Strömungsrate der zweiten Luft einzustellen, die zu dem zweiten Ejektor (75b) aus dem zweiten Luftströmungskanal (77b) zugeführt wird.

2. Spindelschmiergerät (1, 1A, 1A', 1B) der Werkzeugmaschine (110) nach Anspruch 1, das des Weiteren eine Vielzahl von Rohrleitungen (74, 74a, 74b, 74c) aufweist, wobei die Vielzahl von Rohrleitungen (74, 74a, 74b, 74c) eine erste Rohrleitung (74a), die den ersten Sammelströmungskanal (71) mit dem ersten Ejektor (75a) fluidisch verbindet; und eine zweite Rohrleitung (74b) aufweist, die den zweiten Sammelströmungskanal (72) mit dem zweiten Ejektor (75b) fluidisch verbindet,
wobei in einem Fall, in dem eine erste Sammelströmungsrate als eine Strömungsrate des ersten ölhaltigen Fluids definiert ist, das durch die erste Rohrleitung (74a) strömt, unter einer ersten Bedingung, bei der die Vielzahl von Rohrleitungen (74, 74a, 74b, 74c) jeweils in Fluidverbindung mit der Vielzahl von Sammelströmungskanälen (71, 72, 73) stehen und das Fluidgemisch mit einer ersten Strömungsrate zu der Vielzahl von Lagern (3, 31, 31a, 31c, 36, 36b) von der Fluidgemischzufuhrvorrichtung (6) zugeführt wird, und in einem Fall, in dem eine erste Abgabeströmungsrate als eine Strömungsrate des ersten ölhaltigen Fluids definiert ist, das aus dem ersten Sammelströmungskanal (71) zu einer Außenseite des ersten Sammelströmungskanals (71) abgegeben wird, unter einer zweiten Bedingung, die sich von der ersten Bedingung nur darin unterscheidet, dass die Vielzahl von Rohrleitungen (74, 74a, 74b, 74c) in Fluidtrennung von der Vielzahl von Sammelströmungskanälen (71, 72, 73) stehen, das erste Strömungssteuerungsventil (76a) eine Ventilöffnung des ersten Strömungssteuerungsventils (76a) derart festlegt, dass die erste Sammelströmungsrate in einen Bereich zwischen dem 1-fachen und dem 1,5-fachen der ersten Abgabeströmungsrate fällt, und
wobei in einem Fall, in dem eine zweite Sammelströmungsrate als eine Strömungsrate des zweiten ölhaltigen Fluids definiert ist, das unter der ersten Bedingung durch die zweite Rohrleitung (74b) strömt, und in einem Fall, in dem eine zweite Abgabeströmungsrate als eine Strömungsrate des zweiten ölhaltigen Fluids definiert ist, das unter der zweiten Bedingung aus dem zweiten Sammelströmungskanal (72) zu einer Außenseite des zweiten Sammelströmungskanals (72) abgegeben wird, das zweite Strömungssteuerungsventil (76b) eine Ventilöffnung des zweiten Strömungssteuerungsventils (76b) derart festlegt, dass die zweite Sammelströmungsrate in einen Bereich zwischen dem 1-fachen und dem 1,5-fachen der zweiten Abgabeströmungsrate fällt.

3. Spindelschmiergerät (1, 1A, 1A', 1B) der Werkzeugmaschine (110) nach Anspruch 2,
wobei die Vielzahl von Sammelströmungskanälen (71, 72, 73) einen dritten Sammelströmungskanal (73) aufweist, der gestaltet ist, um ein drittes ölhaltiges Fluid zu sammeln, das das Öl umfasst, das durch das erste Lager (31a) hindurchgetreten ist, ohne durch den ersten Sammelströmungskanal (71) gesammelt zu werden,
wobei die Vielzahl von Rohrleitungen (74, 74a, 74b, 74c) eine dritte Rohrleitung (74c) aufweist, die den dritten Sammelströmungskanal (73) mit einem dritten Ejektor (75c) fluidisch verbindet,
wobei die Vielzahl von Ejektoren (75, 75a, 75b, 75c) den dritten Ejektor (75c) aufweist, der gestaltet ist, um in der dritten Rohrleitung (74c) mit einer dritten Luft, die aus einem dritten Luftströmungskanal (77c) zugeführt wird, einen Unterdruck zu erzeugen, und der gestaltet ist, um das dritte ölhaltige Fluid aus dem dritten Sammelströmungskanal (73) durch die dritte Rohrleitung (74c) anzusaugen, und
wobei die Vielzahl von Strömungssteuerungsventilen (67, 76a, 76b, 76c, 96) ein drittes Strömungssteuerungsventil (76c) aufweist, das gestaltet ist, um eine Strömungsrate der dritten Luft, die zu dem dritten Ejektor (75c) aus dem dritten Luftströmungskanal (77c) zugeführt wird, einzustellen.

4. Spindelschmiergerät (1, 1A, 1A', 1B) der Werkzeugmaschine (110) nach Anspruch 1,
wobei die Vielzahl von Sammelströmungskanälen (71, 72, 73) einen dritten Sammelströmungskanal (73) aufweist, der gestaltet ist, um ein drittes ölhaltiges Fluid zu sammeln, das das Öl umfasst, das durch das erste Lager (31a) hindurchgetreten ist, ohne durch den ersten Sammelströmungskanal (71) gesammelt zu werden,
wobei die Vielzahl von Ejektoren (75, 75a, 75b, 75c) einen dritten Ejektor (75c) aufweist, der gestaltet ist, um mit einer dritten Luft, die aus einem dritten Luftströmungskanal (77c) zugeführt wird, einen Unterdruck zu erzeugen, und der gestaltet ist, um das dritte ölhaltige Fluid aus dem dritten Sammelströmungskanal (73) anzusaugen, und
wobei die Vielzahl von Strömungssteuerungsventilen (67, 76a, 76b, 76c, 96) ein drittes Strömungssteuerungsventil (76c) aufweist, das gestaltet ist, um eine Strömungsrate der dritten Luft, die zu dem dritten Ejektor (75c) aus dem dritten Luftzufuhrströmungskanal (77c) zugeführt wird, einzustellen.

5. Spindelschmiergerät (1, 1A, 1A', 1B) der Werkzeugmaschine (110) nach Anspruch 4,
wobei der Drehkörper (2) Folgendes aufweist:
einen hinteren Endabschnitt (22);
einen vorderen Endabschnitt (24), der gestaltet ist, um das Werkzeug (T) zu halten;
einen ersten Teil (25), der gestaltet ist, um einen Innenring (32a) des ersten Lagers (31a) zu stützen, und der eine erste Außenumfangsfläche (25u) hat;
einen zweiten Teil (26), der eine zweite Außenumfangsfläche (26u) hat, deren Durchmesser kleiner ist als der der ersten Außenumfangsfläche (25u), wobei der zweite Teil (26) in einer ersten Richtung (DR1) weiter entfernt angeordnet ist als der erste Teil (25), in einem Fall, in dem die erste Richtung (DR1) als eine Richtung von dem hinteren Endabschnitt (22) zu dem vorderen Endabschnitt (24) hin definiert ist; und
eine gestufte Fläche (25a), die die erste Außenumfangsfläche (25u) mit der zweiten Außenumfangsfläche (26u) verbindet,
wobei das Gehäuse (4) Folgendes aufweist:
einen dritten Teil (41), der gestaltet ist, um einen Außenring (33a) des ersten Lagers (31a) zu stützen; und
einen vierten Teil (42), der einen ringförmigen Aufnahmeraum (SP) zum Aufnehmen des Öls aus einem ersten Zwischenraum (G1) zwischen dem ersten Teil (25) und dem dritten Teil (41) definiert,
wobei der vierte Teil (42) einen Öffnungsabschnitt (45) aufweist, der gestaltet ist, um das Öl aus dem ringförmigen Aufnahmeraum (SP) zu dem dritten Sammelströmungskanal (73) zu führen,
wobei ein zweiter Zwischenraum (G2), der in Fluidverbindung mit dem ersten Zwischenraum (G1) steht, zwischen dem Gehäuse (4) und der gestuften Fläche (25a) ausgebildet ist, und
wobei ein dritter Zwischenraum (G3), der in Fluidverbindung mit dem zweiten Zwischenraum (G2) steht, zwischen dem Gehäuse (4) und der zweiten Außenumfangsfläche (26u) ausgebildet ist.

6. Spindelschmiergerät (1, 1A, 1A', 1B) der Werkzeugmaschine (110) nach Anspruch 5,
wobei der vierte Teil (42) einen ringförmigen Vorsprung (44) aufweist, der in einer Richtung weg von der ersten Achse (AX1) vorsteht, und
wobei der ringförmige Vorsprung (44) sowohl zu der gestuften Fläche (25a) als auch zu dem ringförmigen Aufnahmeraum (SP) zugewandt ist.

7. Spindelschmiergerät (1, 1A, 1A', 1B) der Werkzeugmaschine (110) nach einem der Ansprüche 4 bis 6, das des Weiteren eine Luftzufuhrvorrichtung (9) aufweist, die Folgendes aufweist:
eine außerhalb des Gehäuses (4) angeordnete Luftquelle (AS, AS1, AS2, AT);
einen in dem Gehäuse (4) angeordneten Luftzufuhrströmungskanal (93);
ein Luftzufuhrrohr (91), das die Luftquelle (AS, AS1, AS2, AT) mit dem Luftzufuhrströmungskanal (93) verbindet, und das gestaltet ist, um eine vierte Luft zu dem Luftzufuhrströmungskanal (93) zuzuführen; und
ein viertes Strömungssteuerungsventil (96), das gestaltet ist, um eine Strömungsrate der vierten Luft einzustellen, die aus dem Luftzufuhrrohr (91) zu dem Luftzufuhrströmungskanal (93) zugeführt wird,
wobei zwischen dem Drehkörper (2) und einem vorderen Endabschnitt (4a) des Gehäuses (4) eine Lufteinspritzöffnung (OP1) ausgebildet ist, und
wobei eine Abgabeöffnung (49) gestaltet ist, um die aus dem Luftzufuhrströmungskanal (93) erhaltene vierte Luft zu einem Zwischenraum (G) zwischen dem Drehkörper (2) und dem Gehäuse (4) abzugeben, um sowohl eine erste Strömung aus dem Zwischenraum (G) in Richtung des dritten Sammelströmungskanals (73) als auch eine zweite Strömung aus dem Zwischenraum (G) in Richtung der Lufteinspritzöffnung (OP1) auszubilden.

8. Spindelschmiergerät (1, 1A, 1A', 1B) der Werkzeugmaschine (110) nach Anspruch 7, das des Weiteren eine Vielzahl von Rohrleitungen (74, 74a, 74b, 74c) aufweist, wobei die Vielzahl von Rohrleitungen (74, 74a, 74b, 74c) eine erste Rohrleitung (74a), die den ersten Sammelströmungskanal (71) mit dem ersten Ejektor (75a) fluidisch verbindet; eine zweite Rohrleitung (74b), die den zweiten Sammelströmungskanal (72) mit dem zweiten Ejektor (75b) fluidisch verbindet; und eine dritte Rohrleitung (74c) aufweist, die den dritten Sammelströmungskanal (73) mit dem dritten Ejektor (75c) fluidisch verbindet,
wobei in einem Fall, in dem eine erste Sammelströmungsrate als eine Strömungsrate des ersten ölhaltigen Fluids definiert ist, das durch die erste Rohrleitung (74a) strömt, unter einer dritten Bedingung, bei der die Vielzahl von Rohrleitungen (74, 74a, 74b, 74c) jeweils in Fluidverbindung mit der Vielzahl von Sammelströmungskanälen (71, 72, 73) stehen, das Fluidgemisch mit einer ersten Sammelströmungsrate von der Fluidgemischzufuhrvorrichtung (6) zu der Vielzahl von Lagern (3, 31, 31a, 31c, 36, 36b) zugeführt wird, und die vierte Luft mit einer zweiten Strömungsrate zu dem Luftzufuhrströmungskanal (93) zugeführt wird, und in einem Fall, in dem eine erste Abgabeströmungsrate als eine Strömungsrate des ersten ölhaltigen Fluids definiert ist, das aus dem ersten Sammelströmungskanal (71) zu einer Außenseite des ersten Sammelströmungskanals (71) abgegeben wird, unter einer vierten Bedingung, die sich von der dritten Bedingung nur darin unterscheidet, dass die Vielzahl von Rohrleitungen (74, 74a, 74b, 74c) in Fluidtrennung von der Vielzahl von Sammelströmungskanälen (71, 72, 73) stehen, das erste Strömungssteuerungsventil (76a) eine Ventilöffnung des ersten Strömungssteuerungsventils fest (76a) derart festlegt, dass die erste Sammelströmungsrate in einen Bereich zwischen dem 1-fachen und dem 1,5-fachen der ersten Abgabeströmungsrate fällt, und
wobei in einem Fall, in dem eine zweite Sammelströmungsrate als eine Strömungsrate des zweiten ölhaltigen Fluids definiert ist, die unter der dritten Bedingung durch die zweite Rohrleitung (74b) strömt, und in einem Fall, in dem eine zweite Abgabeströmungsrate als eine Strömungsrate des zweiten ölhaltigen Fluids definiert ist, das unter der vierten Bedingung aus dem zweiten Sammelströmungskanal (72) zu einer Außenseite des zweiten Sammelströmungskanals (72) abgegeben wird, das zweite Strömungssteuerungsventil (76b) eine Ventilöffnung des zweiten Strömungssteuerungsventils (76b) derart festlegt, dass die zweite Sammelströmungsrate in einen Bereich zwischen dem 1-fachen und dem 1,5-fachen der zweiten Abgabeströmungsrate fällt.

9. Spindelschmiergerät (1, 1A, 1A', 1B) der Werkzeugmaschine (110) nach Anspruch 8, wobei das dritte Strömungssteuerungsventil (76c) eine Ventilöffnung des dritten Strömungssteuerungsventils (76c) festlegt und das vierte Strömungssteuerungsventil (96) eine Ventilöffnung des vierten Strömungssteuerungsventils (96) festlegt, derart, dass eine Strömungsrate der vierten Luft, die aus der Abgabeöffnung (49) abgegeben wird, höher ist als eine Strömungsrate der Luft, die von der Lufteinspritzöffnung (OP1) eingespritzt wird.

10. Werkzeugmaschine (110), die Folgendes aufweist:
einen Bearbeitungskopf (10), der Folgendes aufweist: das Spindelschmiergerät (1, 1A, 1A', 1B) nach Anspruch 1; und eine erste Drehantriebsvorrichtung (5), die gestaltet ist, um den Drehkörper (2) um die erste Achse (AX1) zu drehen;
eine Werkstückhalterung (110), die gestaltet ist, um ein Werkstück (W) zu stützen;
eine Bewegungsvorrichtung (120), die gestaltet ist, um den Bearbeitungskopf (10) relativ zu der Werkstückhalterung (110) zu bewegen; und
ein Steuerungsgerät (140), das gestaltet ist, um zumindest die erste Drehantriebsvorrichtung (5), die Fluidgemischzufuhrvorrichtung (6) und die Bewegungsvorrichtung (120) zu steuern.

11. Werkzeugmaschine (110) nach Anspruch 10, die des Weiteren Folgendes aufweist:
eine Außenwand (171), die die Werkstückhalterung (110) und den Bearbeitungskopf (10) in einer Draufsicht umgibt;
einen Öffnungsabschnitt (173), der an der Außenwand (171) ausgebildet ist und durch den das in die Werkstückhalterung (110) einzuführende Werkstück (W) hindurchtreten kann; und
eine Tür (175), die gestaltet ist, um den Öffnungsabschnitt (173) zu öffnen und zu schließen,
wobei die Sammelvorrichtung (7) Folgendes aufweist:
eine Auslassrohrleitung (78), die gestaltet ist, um einen Auslass von der Vielzahl von Ejektoren (75, 75a, 75b, 75c) zu erhalten; und
einen Sammelbehälter (792), der in Fluidverbindung mit der Auslassrohrleitung (78) steht, und
wobei der Sammelbehälter (792) entweder an einer Position angeordnet ist, die für einen Bediener von einer Außenseite der Werkzeugmaschine (110) durch den Öffnungsabschnitt (173) erreichbar ist, oder außerhalb der Außenwand (171) angeordnet ist.

12. Werkzeugmaschine (110) nach Anspruch 10 oder 11, die des Weiteren eine Vielzahl von Rohrleitungen (74, 74a, 74b, 74c) aufweist, wobei die Vielzahl von Rohrleitungen (74, 74a, 74b, 74c) eine erste Rohrleitung (74a), die den ersten Sammelströmungskanal (71) mit dem ersten Ejektor (75a) fluidisch verbindet; und eine zweite Rohrleitung (74b) aufweist, die den zweiten Sammelströmungskanal (72) mit dem zweiten Ejektor (75b) fluidisch verbindet.

13. Werkzeugmaschine (110) nach Anspruch 12,
wobei in einem Fall, in dem eine erste Sammelströmungsrate als eine Strömungsrate des ersten ölhaltigen Fluids definiert ist, das durch die erste Rohrleitung (74a) strömt, unter einer ersten Bedingung, bei der die Vielzahl von Rohrleitungen (74, 74a, 74b, 74c) jeweils in Fluidverbindung mit der Vielzahl von Sammelströmungskanälen (71, 72, 73) stehen und das Fluidgemisch mit einer ersten Strömungsrate zu der Vielzahl von Lagern (3, 31, 31a, 31c, 36, 36b) von der Fluidgemischzufuhrvorrichtung (6) zugeführt wird, und in einem Fall, in dem eine erste Abgabeströmungsrate als eine Strömungsrate des ersten ölhaltigen Fluids definiert ist, das aus dem ersten Sammelströmungskanal (71) zu einer Außenseite des ersten Sammelströmungskanals (71) abgegeben wird, unter einer zweiten Bedingung, die sich von der ersten Bedingung nur darin unterscheidet, dass die Vielzahl von Rohrleitungen (74, 74a, 74b, 74c) in Fluidtrennung von der Vielzahl von Sammelströmungskanälen (71, 72, 73) stehen, das erste Strömungssteuerungsventil (76a) eine Ventilöffnung des ersten Strömungssteuerungsventils (76a) derart festlegt, dass die erste Sammelströmungsrate in einen Bereich zwischen dem 1-fachen und dem 1,5-fachen der ersten Abgabeströmungsrate fällt, und
wobei in einem Fall, in dem eine zweite Sammelströmungsrate als eine Strömungsrate des zweiten ölhaltigen Fluids definiert ist, das unter der ersten Bedingung durch die zweite Rohrleitung (74b) strömt, und in einem Fall, in dem eine zweite Abgabeströmungsrate als eine Strömungsrate des zweiten ölhaltigen Fluids definiert ist, das unter der zweiten Bedingung aus dem zweiten Sammelströmungskanal (72) zu einer Außenseite des zweiten Sammelströmungskanals (72) abgegeben wird, das zweite Strömungssteuerungsventil (76b) eine Ventilöffnung des zweiten Strömungssteuerungsventils (76b) derart festlegt, dass die zweite Sammelströmungsrate in einen Bereich zwischen dem 1-fachen und dem 1,5-fachen der zweiten Abgabeströmungsrate fällt.

14. Verwendungsverfahren der Werkzeugmaschine (110) nach Anspruch 12, wobei das Verwendungsverfahren die folgenden Schritte aufweist:
Herleiten einer ersten Abgabeströmungsrate entweder durch eine Messung oder Simulation, in einem Fall, in dem die erste Abgabeströmungsrate als eine Strömungsrate des ersten ölhaltigen Fluids definiert ist, das aus dem ersten Sammelströmungskanal (71) zu einer Außenseite des ersten Sammelströmungskanals (71) abgegeben wird, unter einer zweiten Bedingung, in der die Vielzahl von Rohrleitungen (74, 74a, 74b, 74c) in Fluidtrennung von der Vielzahl von Sammelströmungskanälen (71, 72, 73) stehen und das Fluidgemisch mit einer ersten Strömungsrate zu der Vielzahl von Lagern (3, 31, 31a, 31c, 36, 36b) von der Fluidgemischzufuhrvorrichtung (6) zugeführt wird;
Herleiten einer zweiten Abgabeströmungsrate entweder durch eine Messung oder Simulation, in einem Fall, in dem die zweite Abgabeströmungsrate als eine Strömungsrate des zweiten ölhaltigen Fluids definiert ist, das unter der zweiten Bedingung aus dem zweiten Sammelströmungskanal (72) zu einer Außenseite des zweiten Sammelströmungskanals (72) abgegeben wird;
Herleiten einer ersten Sammelströmungsrate entweder durch eine Messung oder Simulation, in einem Fall, in dem die erste Sammelströmungsrate als eine Strömungsrate des ersten ölhaltigen Fluids definiert ist, das durch die erste Rohrleitung (74a) strömt, unter einer ersten Bedingung, bei der die Vielzahl von Rohrleitungen (74, 74a, 74b, 74c) jeweils in Fluidverbindung mit der Vielzahl von Sammelströmungskanälen (71, 72, 73) stehen und das Fluidgemisch mit der ersten Strömungsrate von der Fluidgemischzufuhrvorrichtung (6) zu der Vielzahl von Lagern (3, 31, 31a, 31c, 36, 36b) zugeführt wird;
Herleiten einer zweiten Sammelströmungsrate entweder durch eine Messung oder Simulation, in einem Fall, in dem die zweite Sammelströmungsrate als eine Strömungsrate des zweiten ölhaltigen Fluids definiert ist, das unter der ersten Bedingung durch die zweite Rohrleitung (74b) strömt;
Herleiten einer ersten Ventilöffnung des ersten Strömungssteuerungsventils (76a), damit ein Verhältnis der ersten Sammelströmungsrate zu der ersten Abgabeströmungsrate in einen vorbestimmten Bereich fällt;
Herleiten einer zweiten Ventilöffnung des zweiten Strömungssteuerungsventils (76b), damit ein Verhältnis der zweiten Sammelströmungsrate zu der zweiten Abgabeströmungsrate in einen vorbestimmten Bereich fällt;
Zuführen des Fluidgemischs zu der Vielzahl von Lagern (3, 31, 31a, 31c, 36, 36b) durch Verwendung der Fluidgemischzufuhrvorrichtung (6);
Betreiben der Sammelvorrichtung (7) in einem Zustand, in dem eine Ventilöffnung des ersten Strömungssteuerungsventils (76a) auf die erste Ventilöffnung festgelegt ist und eine Ventilöffnung des zweiten Strömungssteuerungsventils (76b) auf die zweite Ventilöffnung festgelegt ist; und
Bearbeiten des Werkstücks (W) mit dem Werkzeug (T), das durch den Drehkörper (2) gehalten wird und sich um die erste Achse (AX1) dreht.

15. Verwendungsverfahren der Werkzeugmaschine (110) nach Anspruch 14,
wobei der Schritt zum Betreiben der Sammelvorrichtung (7) ein Sammeln eines dritten ölhaltigen Fluids über einen dritten Sammelströmungskanal (73) aufweist, wobei das dritte ölhaltige Fluid das Öl umfasst, das durch das erste Lager (31a) hindurchgetreten ist, ohne durch den ersten Sammelströmungskanal (71) gesammelt zu werden, und
wobei der Schritt zum Bearbeiten des Werkstücks (W) in einem Zustand ausgeführt wird, in dem
eine vierte Luft zu einem in dem Gehäuse (4) angeordneten Luftzufuhrströmungskanal (93) zugeführt wird,
die vierte Luft teilweise als ein Luftvorhang (AC) aus einer zwischen dem Drehkörper (2) und einem vorderen Endabschnitt (4a) des Gehäuses (4) ausgebildeten Lufteinspritzöffnung (OP1) eingespritzt wird, und
eine Strömungsrate der zu dem Luftzufuhrströmungskanal (93) zugeführten vierten Luft höher ist als eine Strömungsrate der aus der Lufteinspritzöffnung (OP1) eingespritzten Luft.

## Revendications

1. Lubrificateur de broche (1, 1A, 1A', 1B) d'une machine-outil (110), le lubrificateur de broche (1, 1A, 1A', 1B) comprenant :
un corps rotatif (2) configuré pour tenir un outil (T) ;
une pluralité de paliers (3, 31, 31a, 31c, 36, 36b) comprenant un premier palier (31a) et un deuxième palier (36b) ;
un boîtier (4) configuré pour supporter le corps rotatif (2) de manière à ce qu'il puisse tourner autour d'un premier axe (AX1) par l'intermédiaire de la pluralité de paliers (3, 31, 31a, 31c, 36, 36b) ;
un dispositif d'alimentation en mélange fluide (6) configuré pour fournir un mélange fluide contenant de l'huile et de l'air à la pluralité de paliers (3, 31, 31a, 31c, 36, 36b) ; et
un collecteur (7) configuré pour collecter un fluide contenant de l'huile,
dans lequel le collecteur (7) comprend :
une pluralité de canaux d'écoulement de collecte (71, 72, 73) disposés dans le boîtier (4) et configurés pour collecter le fluide contenant de l'huile provenant de la pluralité de paliers (3, 31, 31a, 31c, 36, 36b) ;
une pluralité d'éjecteurs (75, 75a, 75b, 75c) disposés à l'extérieur du boîtier (4) ; et
une pluralité de vannes de régulation de débit (67, 76a, 76b, 76c, 96),
dans lequel la pluralité de canaux d'écoulement de collecte (71, 72, 73) comprend :
un premier canal d'écoulement de collecte (71) qui est configuré pour collecter un premier fluide contenant de l'huile évacué d'au moins un palier (3, 31, 31a, 31c, 36, 36b), comprenant principalement le premier palier (31a) ; et
un deuxième canal d'écoulement de collecte (72) qui est configuré pour collecter un deuxième fluide contenant de l'huile évacué d'au moins un palier (3, 31, 31a, 31c, 36, 36b), comprenant principalement le deuxième palier (36b),
dans lequel la pluralité d'éjecteurs (75, 75a, 75b, 75c) comprend :
un premier éjecteur (75a) qui est configuré pour générer une pression négative avec un premier air fourni par un premier canal d'écoulement d'air (77a) et qui est configuré pour aspirer le premier fluide contenant de l'huile à partir du premier canal d'écoulement de collecte (71) ; et
un deuxième éjecteur (75b) qui est configuré pour générer une pression négative avec un deuxième air fourni par un deuxième canal d'écoulement d'air (77b) et qui est configuré pour aspirer le deuxième fluide contenant de l'huile à partir du deuxième canal d'écoulement de collecte (72), et
dans lequel la pluralité de vannes de régulation de débit (67, 76a, 76b, 76c, 96) comprend :
une première vanne de régulation de débit (76a) qui est configurée pour ajuster un débit du premier air fourni au premier éjecteur (75a) à partir du premier canal d'écoulement d'air (77a) ; et
une deuxième vanne de régulation de débit (76b) qui est configurée pour ajuster un débit du deuxième air fourni au deuxième éjecteur (75b) à partir du deuxième canal d'écoulement d'air (77b).

2. Lubrificateur de broche (1, 1A, 1A', 1B) de la machine-outil (110) selon la revendication 1, comprenant en outre une pluralité de conduites (74, 74a, 74b, 74c), la pluralité de conduites (74, 74a, 74b, 74c) comprenant : une première conduite (74a) qui relie fluidiquement le premier canal d'écoulement de collecte (71) au premier éjecteur (75a) ; et une deuxième conduite (74b) qui relie fluidiquement le deuxième canal d'écoulement de collecte (72) au deuxième éjecteur (75b),
dans lequel, dans le cas où un premier débit de collecte est défini comme un débit du premier fluide contenant de l'huile s'écoulant à travers la première conduite (74a) dans une première condition dans laquelle la pluralité de conduites (74, 74a, 74b, 74c) sont respectivement reliées fluidiquement à la pluralité de canaux d'écoulement de collecte (71, 72, 73) et le mélange fluide à un premier débit est fourni à la pluralité de paliers (3, 31, 31a, 31c, 36, 36b) à partir du dispositif d'alimentation en mélange fluide (6), et dans le cas où un premier débit d'évacuation est défini comme un débit du premier fluide contenant de l'huile évacué vers un extérieur du premier canal d'écoulement de collecte (71) à partir de la première canal d'écoulement de collecte (71) dans une deuxième condition qui ne diffère de la première condition que par le fait que la pluralité de conduites (74, 74a, 74b, 74c) sont séparées fluidiquement de la pluralité de canaux d'écoulement de collecte (71, 72, 73), la première vanne de régulation de débit (76a) règle une ouverture de vanne de la première vanne de régulation de débit (76a) de telle sorte que le premier débit de collecte se situe dans une plage comprise entre une valeur égale ou supérieure à 1 fois et une valeur égale ou inférieure à 1,5 fois le premier débit d'évacuation, et
dans lequel, dans le cas où un deuxième débit de collecte est défini comme un débit du deuxième fluide contenant de l'huile s'écoulant à travers la deuxième conduite (74b) dans la première condition, et dans le cas où un deuxième débit d'évacuation est défini comme un débit du deuxième fluide contenant de l'huile évacué vers l'extérieur du deuxième canal d'écoulement de collecte (72) à partir de la deuxième canal d'écoulement de collecte (72) dans la deuxième condition, la deuxième vanne de régulation de débit (76b) règle une ouverture de vanne de la deuxième vanne de régulation de débit (76b) de telle sorte que le deuxième débit de collecte se situe dans une plage comprise entre une valeur égale ou supérieure à 1 fois et une valeur égale ou inférieure à 1,5 fois le deuxième débit d'évacuation.

3. Lubrificateur de broche (1, 1A, 1A', 1B) de la machine-outil (110) selon la revendication 2,
dans lequel la pluralité de canaux d'écoulement de collecte (71, 72, 73) comprend un troisième canal d'écoulement de collecte (73) qui est configuré pour collecter un troisième fluide contenant de l'huile, contenant l'huile qui est passée à travers le premier palier (31a) sans être collectée par le premier canal d'écoulement de collecte (71),
dans lequel la pluralité de conduites (74, 74a, 74b, 74c) comprend une troisième conduite (74c) qui relie fluidiquement le troisième canal d'écoulement de collecte (73) à un troisième éjecteur (75c),
dans lequel la pluralité d'éjecteurs (75, 75a, 75b, 75c) comprend le troisième éjecteur (75c) qui est configuré pour générer une pression négative dans la troisième conduite (74c) à l'aide d'un troisième air fourni par un troisième canal d'écoulement d'air (77c) et qui est configuré pour aspirer le troisième fluide contenant de l'huile depuis le troisième canal d'écoulement de collecte (73) à travers la troisième conduite (74c), et
dans lequel la pluralité de vannes de régulation de débit (67, 76a, 76b, 76c, 96) comprend une troisième vanne de régulation de débit (76c) qui est configurée pour ajuster un débit du troisième air fourni au troisième éjecteur (75c) à partir du troisième canal d'écoulement d'air (77c).

4. Lubrificateur de broche (1, 1A, 1A', 1B) de la machine-outil (110) selon la revendication 1,
dans lequel la pluralité de canaux d'écoulement de collecte (71, 72, 73) comprend un troisième canal d'écoulement de collecte (73) qui est configuré pour collecter un troisième fluide contenant de l'huile, contenant l'huile qui est passée à travers le premier palier (31a) sans être collectée par le premier canal d'écoulement de collecte (71),
dans lequel la pluralité d'éjecteurs (75, 75a, 75b, 75c) comprend un troisième éjecteur (75c) qui est configuré pour générer une pression négative à l'aide d'un troisième air fourni par un troisième canal d'écoulement d'air (77c) et qui est configuré pour aspirer le troisième fluide contenant de l'huile depuis le troisième canal d'écoulement de collecte (73), et
dans lequel la pluralité de vannes de régulation de débit (67, 76a, 76b, 76c, 96) comprend une troisième vanne de régulation de débit (76c) qui est configurée pour ajuster un débit du troisième air fourni au troisième éjecteur (75c) à partir du troisième canal d'écoulement d'air (77c).

5. Lubrificateur de broche (1, 1A, 1A', 1B) de la machine-outil (110) selon la revendication 4,
dans lequel le corps rotatif (2) comprend :
une partie d'extrémité arrière (22) ;
une partie d'extrémité de pointe (24) configurée pour tenir l'outil (T) ;
une première partie (25) qui est configurée pour supporter une bague intérieure (32a) du premier palier (31a) et qui présente une première surface circonférentielle extérieure (25u) ;
une deuxième partie (26) qui présente une deuxième surface circonférentielle extérieure (26u) de diamètre inférieur à celui de la première surface circonférentielle extérieure (25u), la deuxième partie (26) étant disposée plus loin dans une première direction (DR1) que la première partie (25), dans le cas où la première direction (DR1) est définie comme une direction allant de la partie d'extrémité arrière (22) vers la partie d'extrémité de pointe (24) ; et
une surface étagée (25a) qui relie la première surface circonférentielle extérieure (25u) à la deuxième surface circonférentielle extérieure (26u),
dans lequel le boîtier (4) comprend :
une troisième partie (41) qui est configurée pour supporter une bague extérieure (33a) du premier palier (31a) ; et
une quatrième partie (42) qui définit un espace de réception annulaire (SP) destiné à recevoir l'huile provenant d'un premier interstice (G1) entre la première partie (25) et la troisième partie (41),
dans lequel la quatrième partie (42) comprend une partie d'ouverture (45) qui est configurée pour guider l'huile vers le troisième canal d'écoulement de collecte (73) à partir de l'espace de réception annulaire (SP),
dans lequel un deuxième interstice (G2) en communication fluidique avec le premier interstice (G1) est formé entre le boîtier (4) et la surface étagée (25a), et
dans lequel un troisième interstice (G3) en communication fluidique avec le deuxième interstice (G2) est formé entre le boîtier (4) et la deuxième surface circonférentielle extérieure (26u).

6. Lubrificateur de broche (1, 1A, 1A', 1B) de la machine-outil (110) selon la revendication 5,
dans lequel la quatrième partie (42) comprend une saillie annulaire (44) qui fait saillie dans une direction s'éloignant du premier axe (AX1), et
dans lequel la saillie annulaire (44) fait face à la fois à la surface étagée (25a) et à l'espace de réception annulaire (SP).

7. Lubrificateur de broche (1, 1A, 1A', 1B) de la machine-outil (110) selon l'une des revendications 4 à 6, comprenant en outre un dispositif d'alimentation en air (9), le dispositif d'alimentation en air (9) comprenant :
une source d'air (AS, AS1, AS2, AT) disposée à l'extérieur du boîtier (4) ;
un canal d'écoulement d'alimentation en air (93) disposé dans le boîtier (4) ;
un tuyau d'alimentation en air (91) qui relie la source d'air (AS, AS1, AS2, AT) au canal d'écoulement d'alimentation en air (93) et qui est configuré pour fournir un quatrième air au canal d'écoulement d'alimentation en air (93) ; et
une quatrième vanne de régulation de débit (96) qui est configurée pour ajuster le débit du quatrième air fourni au canal d'écoulement d'alimentation en air (93) à partir du tuyau d'alimentation en air (91),
dans lequel une ouverture d'injection d'air (OP1) est formée entre le corps rotatif (2) et une partie d'extrémité de pointe (4a) du boîtier (4), et
dans lequel une ouverture d'évacuation (49) qui est configurée pour évacuer le quatrième air reçu du canal d'écoulement d'alimentation en air (93) vers un interstice (G) entre le corps rotatif (2) et le boîtier (4) afin de former à la fois un premier écoulement vers le troisième canal d'écoulement de collecte (73) à partir de l'interstice (G) et un deuxième écoulement vers l'ouverture d'injection d'air (OP1) à partir de l'interstice (G).

8. Lubrificateur de broche (1, 1A, 1A', 1B) de la machine-outil (110) selon la revendication 7, comprenant en outre une pluralité de conduites (74, 74a, 74b, 74c), la pluralité de conduites (74, 74a, 74b, 74c) comprenant : une première conduite (74a) qui relie fluidiquement le premier canal d'écoulement de collecte (71) au premier éjecteur (75a) ; une deuxième conduite (74b) qui relie fluidiquement le deuxième canal d'écoulement de collecte (72) au deuxième éjecteur (75b) ; et un troisième conduite (74c) qui relie fluidiquement le troisième canal d'écoulement de collecte (73) au troisième éjecteur (75c),
dans lequel, dans le cas où un premier débit de collecte est défini comme un débit du premier fluide contenant de l'huile s'écoulant à travers la première conduite (74a) dans une troisième condition dans laquelle la pluralité de conduites (74, 74a, 74b, 74c) sont respectivement reliées fluidiquement à la pluralité de canaux d'écoulement de collecte (71, 72, 73), le mélange fluide à un premier débit est fourni à la pluralité de paliers (3, 31, 31a, 31c, 36, 36b) à partir du dispositif d'alimentation en mélange fluide (6), et le quatrième air à un deuxième débit est fourni au canal d'écoulement d'alimentation en air (93), et dans le cas où un premier débit de décharge est défini comme un débit du premier fluide contenant de l'huile évacué vers l'extérieur du premier canal d'écoulement de collecte (71) à partir de la première canal d'écoulement de collecte (71) dans une quatrième condition qui ne diffère de la troisième condition que par le fait que la pluralité de conduites (74, 74a, 74b, 74c) sont séparées fluidiquement de la pluralité de canaux d'écoulement de collecte (71, 72, 73), la première vanne de régulation de débit (76a) règle une ouverture de vanne de la première vanne de régulation de débit (76a) de telle sorte que le premier débit de collecte se situe dans une plage comprise entre une valeur égale ou supérieure à 1 fois et une valeur égale ou inférieure à 1,5 fois le premier débit d'évacuation, et
dans lequel, dans le cas où un deuxième débit de collecte est défini comme un débit du deuxième fluide contenant de l'huile s'écoulant à travers la deuxième conduite (74b) dans la troisième condition, et dans le cas où un deuxième débit d'évacuation est défini comme un débit du deuxième fluide contenant de l'huile évacué vers l'extérieur du deuxième canal d'écoulement de collecte (72) à partir de la deuxième canal d'écoulement de collecte (72) dans la quatrième condition, la deuxième vanne de régulation de débit (76b) règle une ouverture de vanne de la deuxième vanne de régulation de débit (76b) de telle sorte que le deuxième débit de collecte se situe dans une plage comprise entre une valeur égale ou supérieure à 1 fois et une valeur égale ou inférieure à 1,5 fois le deuxième débit d'évacuation.

9. Lubrificateur de broche (1, 1A, 1A', 1B) de la machine-outil (110) selon la revendication 8, dans lequel la troisième vanne de régulation de débit (76c) règle une ouverture de vanne de la troisième vanne de régulation de débit (76c) et la quatrième vanne de régulation de débit (96) règle une ouverture de vanne de la quatrième vanne de régulation de débit (96) de telle sorte qu'un débit du quatrième air évacué par l'ouverture d'évacuation (49) soit supérieur à un débit d'air injecté par l'ouverture d'injection d'air (OP1).

10. Machine-outil (110) comprenant :
une tête d'usinage (10) comprenant : le lubrificateur de broche (1, 1A, 1A', 1B) selon la revendication 1 ; et un premier entraînement rotatif (5) configuré pour faire tourner le corps rotatif (2) autour du premier axe (AX1) ;
un porte-pièce (110) configuré pour supporter une pièce à usiner (W) ;
un dispositif de déplacement (120) configuré pour déplacer la tête d'usinage (10) par rapport au porte-pièce (110) ; et
un dispositif de commande (140) configuré pour commander au moins le premier entraînement rotatif (5), le dispositif d'alimentation en mélange fluide (6) et le dispositif de déplacement (120).

11. Machine-outil (110) selon la revendication 10, comprenant en outre :
une paroi extérieure (171) qui entoure le porte-pièce (110) et la tête d'usinage (10) dans une vue en plan ;
une partie d'ouverture (173) formée sur la paroi extérieure (171) et à travers laquelle la pièce à usiner (W) destinée à être transportée dans le porte-pièce (110) peut passer ; et
une porte (175) configurée pour ouvrir et fermer la partie d'ouverture (173),
le collecteur (7) comprenant :
une conduite d'échappement (78) configurée pour recevoir l'échappement provenant de la pluralité d'éjecteurs (75, 75a, 75b, 75c) ; et
un réservoir de collecte (792) relié fluidiquement à la conduite d'échappement (78), et
dans lequel le réservoir de collecte (792) est soit disposé à une position accessible à un opérateur depuis l'extérieur de la machine-outil (110) à travers la partie d'ouverture (173), soit disposé à l'extérieur de la paroi extérieure (171).

12. Machine-outil (110) selon la revendication 10 ou 11, comprenant en outre une pluralité de conduites (74, 74a, 74b, 74c), la pluralité de conduites (74, 74a, 74b, 74c) comprenant : une première conduite (74a) qui relie fluidiquement le premier canal d'écoulement de collecte (71) au premier éjecteur (75a) ; et une deuxième conduite (74b) qui relie fluidiquement le deuxième canal d'écoulement de collecte (72) au deuxième éjecteur (75b).

13. Machine-outil (110) selon la revendication 12,
dans laquelle, dans le cas où un premier débit de collecte est défini comme un débit du premier fluide contenant de l'huile s'écoulant à travers la première conduite (74a) dans une première condition dans laquelle la pluralité de conduites (74, 74a, 74b, 74c) sont respectivement reliées fluidiquement à la pluralité de canaux d'écoulement de collecte (71, 72, 73) et le mélange fluide à un premier débit est fourni à la pluralité de paliers (3, 31, 31a, 31c, 36, 36b) à partir du dispositif d'alimentation en mélange fluide (6), et dans le cas où un premier débit d'évacuation est défini comme un débit du premier fluide contenant de l'huile évacué vers un extérieur du premier canal d'écoulement de collecte (71) à partir de la première canal d'écoulement de collecte (71) dans une deuxième condition qui ne diffère de la première condition que par le fait que la pluralité de conduites (74, 74a, 74b, 74c) sont séparées fluidiquement de la pluralité de canaux d'écoulement de collecte (71, 72, 73), la première vanne de régulation de débit (76a) règle une ouverture de vanne de la première vanne de régulation de débit (76a) de telle sorte que le premier débit de collecte se situe dans une plage comprise entre une valeur égale ou supérieure à 1 fois et une valeur égale ou inférieure à 1,5 fois le premier débit d'évacuation, et
dans laquelle, dans le cas où un deuxième débit de collecte est défini comme un débit du deuxième fluide contenant de l'huile s'écoulant à travers la deuxième conduite (74b) dans la première condition, et dans le cas où un deuxième débit d'évacuation est défini comme un débit du deuxième fluide contenant de l'huile évacué vers l'extérieur du deuxième canal d'écoulement de collecte (72) à partir de la deuxième canal d'écoulement de collecte (72) dans la deuxième condition, la deuxième vanne de régulation de débit (76b) règle une ouverture de vanne de la deuxième vanne de régulation de débit (76b) de telle sorte que le deuxième débit de collecte se situe dans une plage comprise entre une valeur égale ou supérieure à 1 fois et une valeur égale ou inférieure à 1,5 fois le deuxième débit d'évacuation.

14. Procédé d'utilisation de la machine-outil (110) selon la revendication 12, le procédé d'utilisation comprenant les étapes consistant à :
déterminer un premier débit d'évacuation par mesure ou par simulation, dans le cas où le premier débit d'évacuation est défini comme le débit du premier fluide contenant de l'huile évacué vers un extérieur du premier canal d'écoulement de collecte (71) à partir du premier canal d'écoulement de collecte (71), dans une deuxième condition dans laquelle la pluralité de conduites (74, 74a, 74b, 74c) sont en séparation fluidique par rapport à la pluralité de canaux d'écoulement de collecte (71, 72, 73), et le mélange fluide à un premier débit est fourni à la pluralité de paliers (3, 31, 31a, 31c, 36, 36b) à partir du dispositif d'alimentation en mélange fluide (6) ;
déterminer un deuxième débit d'évacuation par mesure ou par simulation, dans le cas où le deuxième débit d'évacuation est défini comme un débit du deuxième fluide contenant de l'huile évacué vers l'extérieur du deuxième canal d'écoulement de collecte (72) à partir du deuxième canal d'écoulement de collecte (72) dans la deuxième condition ;
déterminer un premier débit de collecte par mesure ou par simulation, dans le cas où le premier débit de collecte est défini comme un débit du premier fluide contenant de l'huile s'écoulant à travers la première conduite (74a), dans une première condition dans laquelle la pluralité de conduites (74, 74a, 74b, 74c) sont respectivement en communication fluidique avec la pluralité de canaux d'écoulement de collecte (71, 72, 73), et le mélange fluide au premier débit est fourni à la pluralité de paliers (3, 31, 31a, 31c, 36, 36b) à partir du dispositif d'alimentation en mélange fluide (6) ;
déterminer un deuxième débit de collecte par mesure ou par simulation, dans le cas où le deuxième débit de collecte est défini comme un débit du deuxième fluide contenant de l'huile s'écoulant dans la deuxième conduite (74b) dans la première condition ;
déterminer une première ouverture de vanne de la première vanne de régulation de débit (76a) de manière à ce qu'un rapport entre le premier débit de collecte et le premier débit d'évacuation se situe dans une plage prédéterminée ;
déterminer une deuxième ouverture de vanne de la deuxième vanne de régulation de débit (76b) de manière à ce qu'un rapport entre le deuxième débit de collecte et le deuxième débit d'évacuation se situe dans une plage prédéterminée ;
fournir le mélange fluide à la pluralité de paliers (3, 31, 31a, 31c, 36, 36b) à l'aide du dispositif d'alimentation en mélange fluide (6) ;
faire fonctionner le collecteur (7) dans un état dans lequel une ouverture de vanne de la première vanne de régulation de débit (76a) est réglée sur la première ouverture de vanne et une ouverture de vanne de la deuxième vanne de régulation de débit (76b) est réglée sur la deuxième ouverture de vanne ; et
usiner la pièce à usiner (W) avec l'outil (T) qui est tenu par le corps rotatif (2) et qui tourne autour du premier axe (AX1).

15. Procédé d'utilisation de la machine-outil (110) selon la revendication 14,
dans lequel l'étape consistant à faire fonctionner le collecteur (7) comprend la collecte, via un troisième canal d'écoulement de collecte (73), d'un troisième fluide contenant de l'huile, qui est passée à travers le premier palier (31a) sans être collectée par le premier canal d'écoulement de collecte (71), et
dans laquelle l'étape consistant à usiner la pièce à usiner (W) est réalisée dans un état dans lequel
un quatrième air est fourni à un canal d'écoulement d'alimentation en air (93) disposé dans le boîtier (4) ;
le quatrième air est partiellement injecté sous forme de rideau d'air (AC) à partir d'une ouverture d'injection d'air (OP1) formée entre le corps rotatif (2) et une partie d'extrémité de pointe (4a) du boîtier (4), et
un débit du quatrième air fourni au canal d'écoulement d'alimentation en air (93) est supérieur à un débit de l'air injecté à partir de l'ouverture d'injection d'air (OP1).
